(19) Europäisches Patentamt / European Patent Office / Office européen des brevets

(11) **EP 4 395 075 A1**

(12) **EUROPEAN PATENT APPLICATION**
published in accordance with Art. 153(4) EPC

(43) Date of publication:
**03.07.2024 Bulletin 2024/27**

(21) Application number: **22861483.0**

(22) Date of filing: **29.08.2022**

(51) International Patent Classification (IPC):
***H01Q 15/14*** *(2006.01)*

(52) Cooperative Patent Classification (CPC):
**H01Q 15/14**

(86) International application number:
**PCT/JP2022/032456**

(87) International publication number:
**WO 2023/027195 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2021 JP 2021138502**
**09.05.2022 JP 2022076925**
**27.06.2022 JP 2022102703**

(71) Applicant: **DAI NIPPON PRINTING CO., LTD.**
**Tokyo 162-8001 (JP)**

(72) Inventors:
• **MIYAZAKI, Yuichi**
**Tokyo 162-8001 (JP)**
• **NAKAMURA, Atsuo**
**Tokyo 162-8001 (JP)**
• **ISAWA, Yusuke**
**Tokyo 162-8001 (JP)**
• **ASAKURA, Hiroyuki**
**Tokyo 162-8001 (JP)**

(74) Representative: **Müller-Boré & Partner**
**Patentanwälte PartG mbB**
**Friedenheimer Brücke 21**
**80639 München (DE)**

(54) **FREQUENCY-SELECTIVE REFLECTING PLATE AND COMMUNICATION RELAY SYSTEM**

(57) The present disclosure provides a frequency selective reflector reflecting electromagnetic waves in a particular frequency band to a direction different from a regular reflection direction, the frequency selective reflector including a plurality of regions and a function of adjusting a reflected beam profile.

FIG. 2

**Description**

Technical Field

The present disclosure relates to a frequency selective reflector reflecting electromagnetic waves in a particular frequency band in a direction different from a regular reflection direction, and a communication relay system using the frequency selective reflector.

Background Art

As described in Patent Documents 1 and 2 and Non-Patent Document 1, to improve the propagation environment and propagation area in a mobile communication system, the technique of the reflect array has been considered. Since radio waves tend to travel straight in high frequency used in fifth generation communication systems (5G), a resolution of coverage holes which the radio waves do not reach is an important issue.

It is desired that the reflect array reflect electromagnetic waves of a particular frequency in a desired direction. The electromagnetic waves are incident from a base station positioned in a given direction. In such a reflect array, for example, a plurality of reflection elements is arranged. Techniques of controlling the reflection phase of the electromagnetic wave by varying the size and the shape of the reflection element to vary the resonant frequency of each reflection element, and thereby controlling an incident direction and the reflection direction of the electromagnetic waves have been developed.

Citation List

Patent Documents

    Patent Document 1: Japanese Patent No. 5371633
    Patent Document 2: Japanese Patent No. 5162677

Non-Patent Document

Non-Patent Document 1: Mayumi YOSHINO et. al. "Received Power Improvement in NLoS Region of L-Shaped Corridor by Utilizing Meta-Surface Reflector", THE INSTITUTE OF ELECTRONICS, INFORMATION AND COMMUNICATION ENGINEERS, IEICE Technical Report, AP2020-5(2020-04)

Summary

Technical Problem

The size of the reflect array is appropriately set in consideration of the positional relationship between the base station, the reflect array, and the coverage hole, the frequency of electromagnetic waves, the required signal strength, etc. For the electromagnetic waves in high frequency used for 5G, in general, the reflect array with larger than tens of centimeters in size is used. In such a reflect array, as the size increases, the gain increases in principle and the reflected beam reflected by the reflect array becomes sharp. However, since the beam width of the reflected wave by the reflect array is narrowed, the area irradiated with the reflected beam by the reflect array is narrowed. It is desirable to widen the area irradiated with the reflected beam reflected by the reflect array, even if the gain is reduced to some extent in the range in which the required signal strength can be ensured.

On the other hand, it is desirable to narrow the beam width of the reflected wave by the reflect array when it is desired to concentrate and send the electromagnetic waves to a particular location. In other words, it is desirable to narrow the area irradiated with the reflected beam by the reflect array.

If the reflect array is sufficiently far away from the base station, the incident wave from the base station can be considered a plane wave. On the other hand, if the reflect array is near the base station, the incident wave from the base station needs to be treated as a spherical wave. However, the design of reflect arrays according to the related art assumes that the incident wave is the plane wave. Therefore, when the base station and the reflect array are close to each other, there is a problem that the designed reflection properties cannot be obtained.

The present disclosure has been made in view of the above circumstances. A main object of the present disclosure is to provide a frequency selective reflector capable of controlling the area irradiated with the reflected beam, such as widening or narrowing the area irradiated with the reflected beam, and also capable of converting the spherical wave into the plane wave.

Solution to Problem

One embodiment of the present disclosure provides a frequency selective reflector reflecting electromagnetic waves in a particular frequency band in a direction different from a regular reflection direction. The frequency selective reflector includes a plurality of regions, and a function of adjusting a reflected beam profile.

Another embodiment of the present disclosure provides a communication relay system relaying communication between a base station and a user terminal, the communication relay system comprising: a plurality of direction controlling devices changing a traveling direction of electromagnetic waves in a particular frequency band, wherein the plurality of direction controlling devices is disposed on a propagation path of the electromagnetic waves from the base station, and one or more of the above described frequency selective reflectors are included as the direction controlling device.

Advantageous Effects

The frequency selective reflector of the present disclosure exhibits effects that it is possible to control the area irradiated with the reflected beam and to convert the spherical wave into the plane wave.

Brief Description of Drawings

FIG. 1 is a schematic plan view exemplifying the frequency selective reflector of the present disclosure.
FIG. 2 is a schematic plan view exemplifying reflection properties of the main region and each sub region in the frequency selective reflector of the present disclosure.
FIG. 3 is a schematic plan view exemplifying reflection properties of the main region and each sub region in the frequency selective reflector of the present disclosure.
FIG. 4 is a schematic plan view exemplifying reflection properties of the main region and each sub region in the frequency selective reflector of the present disclosure.
FIG. 5 is a schematic plan view exemplifying reflection properties of the main region and each sub region in the frequency selective reflector of the present disclosure.
FIG. 6 is a schematic diagram explaining of the coordinate system of the frequency selective reflector of the present disclosure.
FIG. 7 is a schematic plan view exemplifying reflection properties of the main region and each sub region in the frequency selective reflector of the present disclosure.
FIGS. 8A to 8C are a schematic plan view and perspective views exemplifying reflection properties of the main region and each sub region in the frequency selective reflector of the present disclosure.
FIGS. 9A to 9F are schematic plan views exemplifying the frequency selective reflector of the present disclosure.
FIG. 10 is a schematic plan view exemplifying reflection properties of the main region and each sub region in the frequency selective reflector of the present disclosure.
FIG. 11 is a schematic plan view exemplifying reflection properties of the main region and each sub region in the frequency selective reflector of the present disclosure.
FIGS. 12A and 12B are schematic diagrams explaining an angle formed by reflection direction vectors of electromagnetic waves between adjacent divided regions in the frequency selective reflector of the present disclosure.
FIGS. 13A and 13B are graphs exemplifying reflected beam profiles by the frequency selective reflector of the present disclosure.
FIGS. 14A and 14B are a schematic cross-sectional view and a plan view exemplifying the frequency selective reflector of the present disclosure.
FIGS. 15A and 15B are schematic diagrams for explaining a method for determining a reflection direction vector of electromagnetic waves in a divided region in the frequency selective reflector of the present disclosure.
FIG. 16A is a schematic plan view and FIG. 16B is a cross-sectional view exemplifying the frequency selective reflector of the present disclosure, and FIG. 16C is a schematic diagram for explaining a relative reflection phase of electromagnetic waves in each cell region of a unit structure of a dielectric layer in the frequency selective reflector of the present disclosure.
FIGS. 17A and 17B are schematic diagrams for explaining a method for determining a reflection direction vector of electromagnetic waves in a divided region in the frequency selective reflector of the present disclosure.
FIGS. 18A to 18F are schematic perspective views and plan views exemplifying the unit structure of the dielectric layer in the frequency selective reflector of the present disclosure.

FIGS. 19A to 19C are schematic plan views exemplifying the unit structure of the dielectric layer in the frequency selective reflector of the present disclosure.

FIG. 20 is a schematic cross-sectional view exemplifying the frequency selective reflector of the present disclosure.

FIGS. 21A is a schematic cross-sectional view exemplifying the frequency selective reflector of the present disclosure, and FIG. 21B is a schematic diagram for explaining the relative reflection phase of electromagnetic waves in each cell region of the unit structure of the dielectric layer in the frequency selective reflector of the present disclosure.

FIGS. 22A is a schematic cross-sectional view exemplifying the frequency selective reflector of the present disclosure, and FIGS. 21B and 21C are schematic diagrams for explaining the relative reflection phase of electromagnetic waves in each cell region of the unit structure of the dielectric layer in the frequency selective reflector of the present disclosure.

FIG. 23 is a schematic diagram exemplifying the structure of the unit structure of the dielectric layer in the frequency selective reflector of the present disclosure.

FIG. 24 is a schematic cross-sectional view exemplifying the frequency selective reflector of the present disclosure.

FIGS. 25A is a schematic plan view exemplifying a reflecting member in the frequency selective reflector of the present disclosure, and FIG. 25B is a schematic cross-sectional view exemplifying the frequency selective reflector of the present disclosure.

FIGS. 26A is a schematic plan view exemplifying a reflecting member in the frequency selective reflector of the present disclosure, and FIG. 26B is a schematic cross-sectional view exemplifying the frequency selective reflector of the present disclosure.

FIG. 27 is a schematic cross-sectional view exemplifying the frequency selective reflector of the present disclosure.

FIGS. 28A and 28B are schematic diagrams explaining a solid angle of a reflected beam by the frequency selective reflector of the present disclosure.

FIGS. 29A to 29D are schematic plan views exemplifying reflection properties of each divided region in the frequency selective reflector of the present disclosure.

FIGS. 30A to 30C are schematic plan views exemplifying the frequency selective reflector of the present disclosure.

FIG. 31 is a schematic plan view exemplifying the cell regions in the frequency selective reflector of the present disclosure, and is a schematic diagram exemplifying the cell regions in the frequency selective reflector of Example 4.

FIGS. 32A to 32C are schematic plan views exemplifying the cell regions in the frequency selective reflector of the present disclosure.

FIGS. 33A to 33C are schematic diagrams exemplifying a placement of a conventional reflect array.

FIGS. 34A and 34B are schematic diagrams exemplifying a placement of the frequency selective reflector of Example 10.

FIGS. 35A and 35B are schematic diagrams exemplifying a placement of the direction controlling device in the communication relay system of the present disclosure.

FIGS. 36A and 36B are schematic diagrams exemplifying a placement of the direction controlling device in the communication relay system of the present disclosure.

FIG. 37 is a graph showing a simulation result of Example 1.

FIG. 38 is a graph showing a simulation result of Example 2.

FIG. 39 is a graph showing a simulation result of Comparative Example 1.

FIG. 40 is a graph showing a simulation result of Example 3.

FIG. 41 is a graph showing a simulation result of Reference Example 1.

FIG. 42A is a schematic perspective view showing a simulation model of Reference Example 2 and FIG. 42B is a graph showing the simulation result.

FIG. 43A is a schematic perspective view showing a simulation model of Reference Example 3 and FIG. 43B is a graph showing the simulation result.

FIG. 44 is a schematic diagram exemplifying a transmission line equivalent circuit.

FIG. 45 is a schematic diagram exemplifying cell regions in the frequency selective reflector of Example 5.

FIG. 46 is a schematic diagram exemplifying cell regions in the frequency selective reflector of Example 6.

FIG. 47 is a schematic diagram exemplifying cell regions in the frequency selective reflector of Example 7.

FIG. 48 is a schematic diagram exemplifying cell regions in the frequency selective reflector of Example 8.

FIG. 49 is a schematic diagram exemplifying cell regions in the frequency selective reflector of Example 9.

FIGS. 50A to 50C are schematic diagrams showing reflection properties of the frequency selective reflector of Example 10.

FIGS. 51A to 51C are schematic diagrams showing reflection properties of the frequency selective reflector of Example 10.

FIG. 52 is a graph showing the download speed ratio in each measurement position for Example 10 and Reference Example 6.

Description of Embodiments

An embodiment of the present disclosure will be explained with reference to, for example, drawings. However, the present disclosure is implement in a variety of different forms, and thus should not be taken as is limited to the contents described in the embodiment. Also, the drawings may show the features of the invention such as width, thickness, and shape of each part schematically in order to explain more clearly in some cases comparing to the actual form; however, the drawings are merely an example, and thus does not limit the interpretation of the present disclosure. Also, in the present description and each drawing, for the element same as that described in the figure already explained, the same reference sign is appended and the explanation thereof may be omitted.

In the present description, upon expressing an aspect of arranging one member on the other member, when it is expressed simply "above" or "below", both of when the other member is directly arranged above or below the one member so as to contact with each other, and when the other member is arranged on or below the one member with an additional member interposed therebetween, can be included unless otherwise described. Upon expressing an aspect of arranging one member above the other member, when it is expressed simply "upper side" or "down side", any of when the other member is directly arranged above or below the one member so as to contact with each other, when the other member is arranged above or below the one member with an additional member interposed therebetween, and when the other member is arranged above or below of the one member with an additional space interposed therebetween, can be included unless otherwise described. Furthermore, in the present description, upon expressing an aspect of arranging the other member on a surface of one member, when expressed simply "on a surface", both of when the other member is directly arranged above or below the one member so as to contact with each other, and when the other member is arranged above or below the one member with an additional member interposed therebetween, can be included unless otherwise described.

The frequency selective reflector and the communication relay system using the same in the present disclosure will be explained.

A. Frequency selective reflector

The frequency selective reflector in the present disclosure is a frequency selective reflector reflecting electromagnetic waves in a particular frequency band to a direction different from a regular reflection direction, and it includes a plurality of regions; and a function of adjusting a reflected beam profile.

The frequency selective reflector of the present disclosure is also capable of widening and narrowing the beam of reflected waves by the entire frequency selective reflector since the frequency selective reflector includes the function of adjusting the reflected beam profile. Furthermore, the frequency selective reflector is also capable of converting the spherical wave into the plane wave and reflect it using the entire frequency selective reflector.

The frequency selective reflector of the present disclosure includes a plurality of regions and reflects electromagnetic waves in a particular frequency band to a direction different from a regular reflection direction. Thus, the reflected beam profile by the entire frequency selective reflector is formed by the synthesizing the reflected beams from the respective regions. For example, depending on the position on the frequency selective reflector, the incident angle and the reflection angle in each region are controlled. That is, depending on the position on the frequency selective reflector, the reflection properties such as the incident direction vector and the reflection direction vector in each region are controlled. This allows the reflected beam profile to be adjusted. Also, when the number of regions is increased and the size of each region is reduced to the size of a region in which the reflection phase of the electromagnetic wave can be set, that is, the size of the cell region, for example, the reflection phase in each region is controlled according to the position on the frequency selective reflector. This may also adjust the reflected beam profile.

Also, when the incident wave is the plane wave, the incident direction vector of the electromagnetic waves is the same across the frequency selective reflector. On the other hand, when the incident wave is the spherical wave, the incident direction vector of the electromagnetic waves is different depending on the position on the frequency selective reflector. Thus, a different incident angle and a different reflection angle can be set for each region both of when the incident angle of the electromagnetic wave, that is, the incident direction vector is the same across the frequency selective reflector, and when the incident angle of the electromagnetic wave, that is, the incident direction vector is different depending on the position on the frequency selective reflector. In other words, for each region, reflection properties such as different incident direction vectors and reflection direction vectors can be set. Also, when the size of each region is reduced to the size of the cell region, a different reflection phase can be set for each region. Therefore, the reflected beam profile can be adjusted both of when the incident wave is the plane wave and when the incident wave is a spherical wave.

Here, the "reflected beam profile" in the "function of adjusting the reflected beam profile" refers to the shape of the main lobe (main beam) in the reflected beam profile, specifically the angular distribution and intensity distribution of the main lobe.

Also, the function of adjusting the reflected beam profile includes, for example, a function of widening the reflected beam by using the entire frequency selective reflector, a function of narrowing the reflected beam by using the entire frequency selective reflector, and a function of converting the spherical wave into the plane wave by using the entire frequency selective reflector. When the reflected beam is widened and the reflected beam is narrowed, the incident wave may be the plane wave or the spherical wave. Also, when the reflected beam is widened, the reflected beam may be widened in the horizontal direction, the reflected beam may be widened in the vertical direction, and the reflected beam may be widened in the horizontal and the vertical directions. Similarly, when the reflected beam is narrowed, the reflected beam may be narrowed in the horizontal direction, the reflected beam may be narrowed in the vertical direction, and the reflected beam may be narrowed in the horizontal and the vertical directions. Also, the reflected beam may be widened in the horizontal direction and narrowed in the vertical direction, or the reflected beam may be narrowed in the horizontal direction and widened in the vertical direction.

Examples of the frequency selective reflector of the present disclosure may include a frequency selective reflector in which the entire surface of the frequency selective reflector is divided into a plurality of divided regions, and the reflection properties of the electromagnetic waves in the respective divided regions are different from each other. In the frequency selective reflector, the reflected beam profile can be adjusted by making the reflection properties of the electromagnetic waves in the respective divided regions different from each other. The reflection properties are at least one of an incident direction vector and a reflection direction vector. The different reflection properties include cases where the incident direction vector is different, where the reflection direction vector is different, and where the incident direction vector and the reflection direction vector are different. Further, in these cases, the plurality of divided regions corresponds to a plurality of regions included in the frequency selective reflector of the present disclosure.

When the incident wave is the plane wave, the incident direction vector of the electromagnetic waves is the same across the frequency selective reflector. For example, when the incident plane wave is reflected as the plane wave and the reflected beam is widened by the entire frequency selective reflector, the reflection direction vectors of the electromagnetic waves in the respective divided regions may be set so as to spread outward around the reflection direction vector of a certain electromagnetic wave. Also, for example, when the incident plane wave is reflected as the plane wave and the reflected beam is narrowed by the entire frequency selective reflector, the reflection direction vectors of the electromagnetic waves in the respective divided regions may be set so as to converge inward around the reflection direction vector of a certain electromagnetic wave.

On the other hand, when the incident wave is the spherical wave, the incident direction vector of the electromagnetic waves is different depending on the position on the frequency selective reflector. For example, when the incident spherical wave is reflected as the spherical wave and the reflected beam is widened by the entire frequency selective reflector, the reflection direction vectors of the electromagnetic waves in the respective divided regions may be set so as to spread outward around the reflection direction vector of a certain electromagnetic wave while correcting the difference of the incident direction vector in each divided region. Also, for example, when the incident spherical wave is reflected as the spherical wave and the reflected beam is narrowed by the entire frequency selective reflector, the reflection direction vectors of the electromagnetic waves in the respective divided regions may be set so as to converge inward around the reflection direction vector of an certain electromagnetic wave while correcting the difference of the incident direction vector in each divided region.

Further, for example, when the incident spherical wave is reflected as the plane wave, the reflection direction vector of the electromagnetic waves in each divided region may be set to be the same while correcting the difference of the incident direction vector in each divided region.

In the frequency selective reflector in which the entire surface of the frequency selective reflector is divided into a plurality of divided regions, and the reflection properties of the electromagnetic waves in the respective divided regions are different from each other, the configurations of the divided regions and the frequency selective reflector are the same as the configurations of the divided regions in the frequency selective reflector from the first embodiment to the fourth embodiment described below.

Also, examples of the frequency selective reflector of the present disclosure may include a frequency selective reflector in which the size of the region is reduced to the size of the cell region and a plurality of cell regions, of which reflection phases of the electromagnetic waves differ from one another, is repeatedly arranged. In this case, the plurality of cell regions corresponds to the plurality of regions included in the frequency selective reflector of the present disclosure.

In the frequency selective reflector, for example, when the incident plane wave is reflected as the plane wave and the reflected beam is widened by the entire frequency selective reflector, the reflection phase of the electromagnetic waves in each cell region may be set so that the reflected beam is widened by the entire frequency selective reflector. Also, for example, when the incident plane wave is reflected as the plane wave and the reflected beam is narrowed by the entire frequency selective reflector, the reflection phase of the electromagnetic waves in each cell region may be set so that the reflected beam is narrowed by the entire frequency selective reflector.

Also, for example, when the incident spherical wave is reflected as the spherical wave and the reflected beam is widened by the entire frequency selective reflector, the reflection phase of the electromagnetic waves in each cell region may be set so that the reflected beam is widened by the entire frequency selective reflector while correcting the difference of the incident direction vector in each cell region. Further, for example, when the incident spherical wave is reflected as the spherical wave and the reflected beam is narrowed by the entire frequency selective reflector, the reflection phase of the electromagnetic waves in each cell region may be set so that the reflected beam is narrowed by the entire frequency selective reflector while correcting the difference of the incident direction vector in each cell region.

Furthermore, for example, when the incident spherical wave is reflected as the plane wave, the reflection phase of the electromagnetic waves in each cell region may be set so that the reflection direction vector of the electromagnetic waves is the same across the frequency selective reflector while correcting the difference of the incident direction vector in each cell region.

In the frequency selective reflector in which a plurality of cell regions, of which reflection phases of electromagnetic waves differ from one another, are repeatedly arranged, the configurations of the cell regions and the frequency selective reflector are the same as the configurations of the cell regions in the frequency selective reflector of the fifth embodiment described below.

The frequency selective reflector in the present disclosure has five preferable embodiments. In the present disclosure, when the reflected beam is widened by the entire frequency selective reflector, the frequency selective reflectors of the first embodiment, the second embodiment and the fifth embodiment below are preferable. Also, in the present disclosure, when the reflected beam is narrowed by the entire frequency selective reflector, the frequency selective reflectors of the third embodiment, the fourth embodiment and the fifth embodiment below are preferable. Also, in the present disclosure, when the incident wave is neither the plane wave nor an approximate plane wave, the frequency selective reflector of the fifth embodiment is preferable.

In the following description, an in-plane reflection phase distribution design and a reflection direction vector in a divided region or a unit structure, which is determined by the in-plane reflection phase distribution design, are explained, assuming that an incident wave incident on the frequency selective reflector from the front direction to the frequency selective reflector is reflected to a direction other than the regular reflection direction. Here, for the reflection phase distribution design in the case of the incident wave from a direction other than the front direction, the sum of the reflection phase distribution for reflecting from the assumed incident direction to the front direction, and the reflection phase distribution for reflecting from the front direction to the assumed reflection direction may be obtained. At this time, the reflection phase distribution for reflecting from the assumed incident direction to the front direction is in principle the same as the reflection phase distribution for reflecting from the front direction to the assumed incident direction. Therefore, in practice, the sum of the reflection phase distribution from the front direction to the assumed incident direction, and the reflection phase distribution from the front direction to the assumed reflection direction may be considered. Any of the reflection phase distribution designs described above can apply a design approach when incident from the front direction.

In the following, each embodiment will be explained separately.

I. First embodiment

The frequency selective reflector of the present embodiment is a frequency selective reflector reflecting electromagnetic waves in a particular frequency band to a direction different from a regular reflection direction, wherein an entire surface of the frequency selective reflector is divided into a plurality of divided regions, the plurality of divided regions includes a main region that is a divided region positioned in a center of the frequency selective reflector, and a plurality of sub regions being divided regions other than the main region, the plurality of sub regions is disposed around the main region; reflection direction vectors of the electromagnetic waves in each of the divided regions are different from each other, and reflection direction vectors of the electromagnetic waves in the respective sub regions are set so as to spread outward around the reflection direction vector of the electromagnetic waves in the main region.

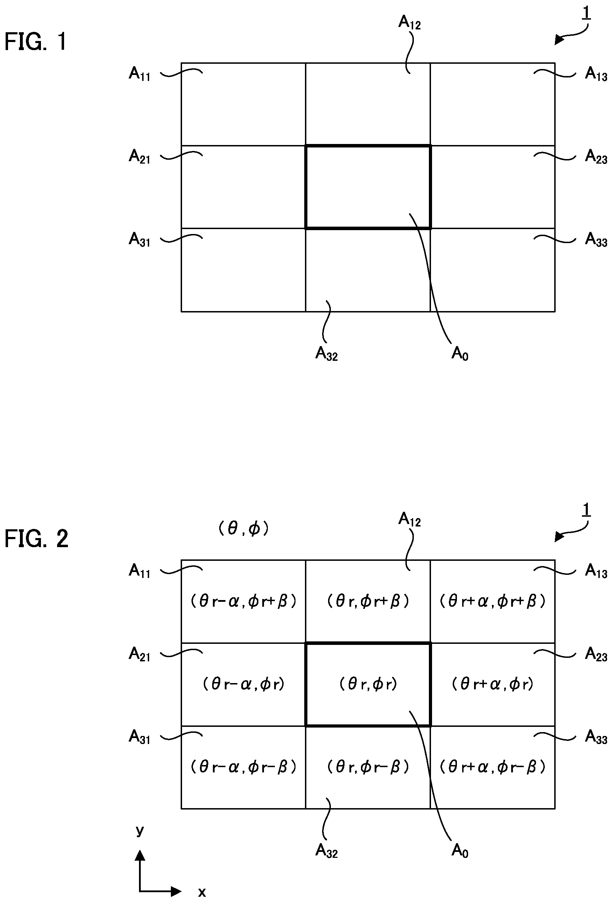

FIG. 1 is a schematic plan view showing an example of the frequency selective reflector of the present embodiment. As shown in FIG. 1, the entire surface of a frequency selective reflector 1 is divided into a plurality of divided regions, and the plurality of divided regions includes a main region $A_0$ that is a divided region positioned in a center of the frequency selective reflector 1, and a plurality of sub regions $A_{11}$ to $A_{33}$ being divided regions other than the main region $A_0$, and the plurality of sub regions $A_{11}$ to $A_{33}$ is disposed around the main region $A_0$. In the example shown in FIG. 1, the frequency selective reflector 1 is divided into nine divided regions, and includes one main region $A_0$ and eight sub regions $A_{11}$ to $A_{33}$, and the eight sub regions $A_{11}$ to $A_{33}$ are disposed around the main region $A_0$ to surround the main region $A_0$.

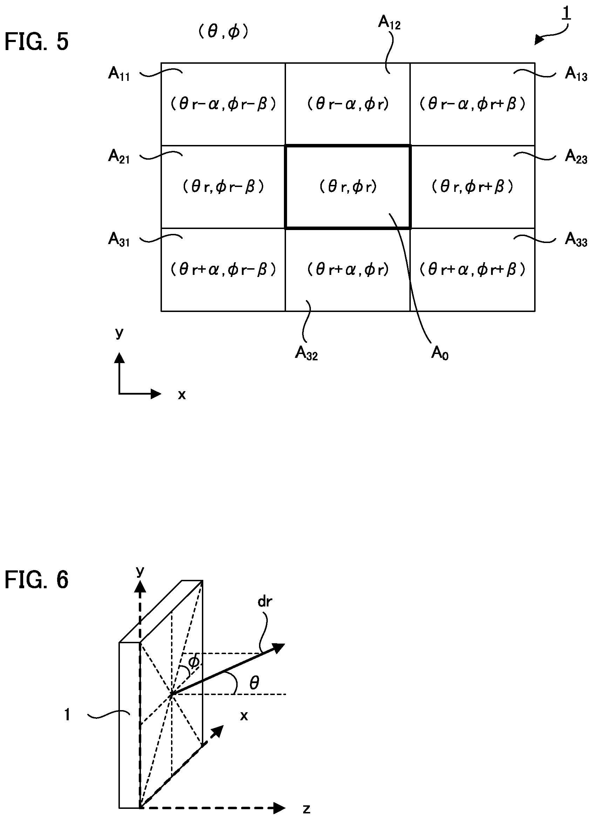

FIGS. 2 to 5 show an example of reflection properties of the main region and each sub region in the frequency selective reflector shown in FIG. 1. Here, for example, as shown in FIG. 6, when the frequency selective reflector 1 is erected vertically to the ground (XZ plane) and viewed from the electromagnetic wave reflection side, the left corner is defined as the origin, the horizontal direction is defined as x axis, the vertical direction is defined as y axis, the reflection side normal direction is defined as z axis, the polar angle of the reflection direction vector $d_r$ of the electromagnetic

waves is defined as $\theta$ and the azimuth angle of the electromagnetic is defined as $\varphi$.

When the reflection direction vector of the electromagnetic waves in the main region $A_0$ is inclined from the main region $A_0$ to the sub region $A_{23}$ side ($\varphi = 0°$ direction), as shown in FIG. 2, when the polar angle of the reflection direction vector of the electromagnetic waves in the main region $A_0$ is denoted as $\theta_r$, and the azimuth angle thereof is denoted as $\varphi_r$, the polar angles and the azimuth angles of the reflection direction vectors of the electromagnetic waves in each of the sub regions $A_{11}$ to $A_{33}$ are respectively, ($\theta_r-\alpha$, $\varphi_r+\beta$) in the sub region An, ($\theta_r-\alpha$, $\varphi_r$) in the sub region $A_{21}$, ($\theta_r-\alpha$, ($\varphi_r-\beta$) in the sub region $A_{31}$, ($\theta_r$, $\varphi_r+\beta$) in the sub region $A_{12}$, ($\theta_r$, $\varphi_r-\beta$) in the sub region $A_{32}$, ($\theta_r+\alpha$, $\varphi_r+\beta$) in the sub region $A_{13}$, ($\theta_r+\alpha$, $\varphi_r$) in the sub region $A_{23}$, and ($\theta_r+\alpha$, $\varphi_r-\beta$) in the sub region $A_{33}$. Note that $\alpha$ and $\beta$ are positive numbers.

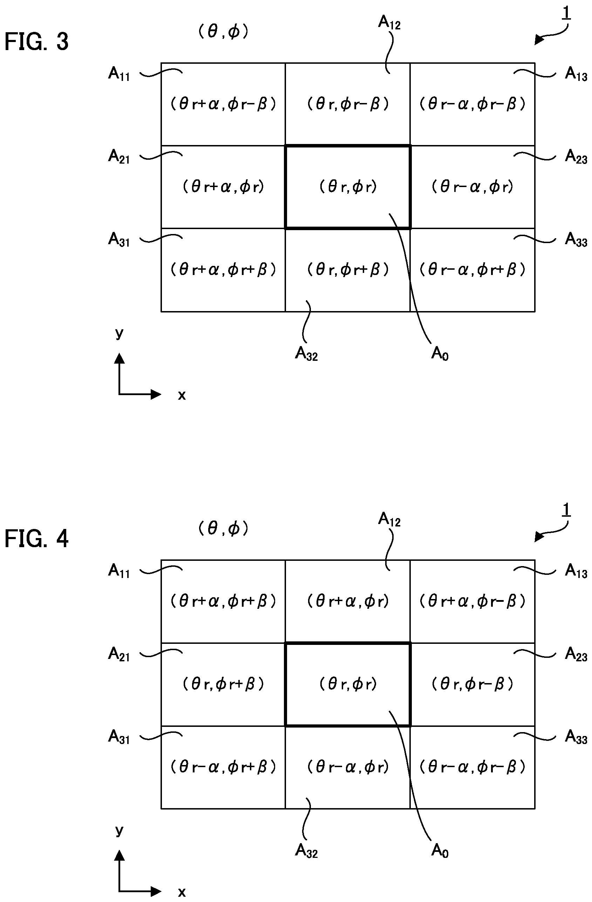

The displacement amount of the polar angle and the azimuth angle of the reflection direction vector of the electromagnetic waves in each of these sub regions vary depending on which direction the reflection direction vector of the electromagnetic waves in the main region is inclined with respect to the plane of the frequency selective reflector. FIG. 3 is an example when the reflection direction vector of the electromagnetic waves in the main region $A_0$ is inclined from the main region $A_0$ to the sub region $A_{21}$ side ($\varphi = 180°$). Also, FIG. 4 is an example when the reflection direction vector of the electromagnetic waves in the main region $A_0$ is inclined from the main region $A_0$ to the sub region $A_{12}$ side ($\varphi = 90°$). Further, FIG. 5 is an example when the reflection direction vector of the electromagnetic waves in the main region $A_0$ is inclined from the main region $A_0$ to the sub region $A_{32}$ side ($\varphi = 270°$).

The values and codes of these $\alpha$ and $\beta$ are intended for the case where the reflection direction vector of the electromagnetic waves is represented by polar coordinates. The values and codes of the $\alpha$ and $\beta$ vary depending on the reflection direction vector of the electromagnetic waves in the main region, and the spread of the reflection direction vector of the electromagnetic waves in the entire frequency selective reflector.

The reflection direction vectors of the electromagnetic waves in the respective sub regions are set so as to spread outward around the reflection direction vector of the electromagnetic waves in the main region. As described later, it is preferable that the angle $\theta$ds formed by the reflection direction vector of the electromagnetic waves between adjacent divided regions is set to be within a predetermined range.

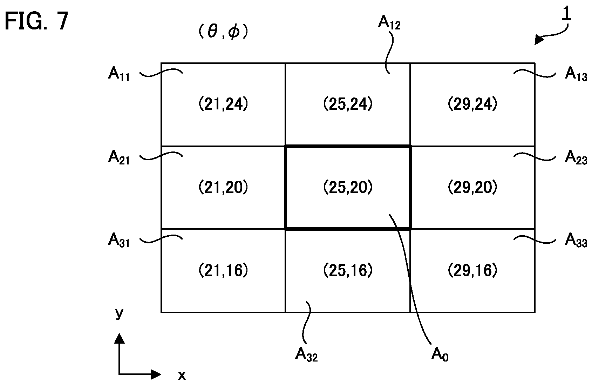

FIG. 7 shows a specific example of reflection properties of the main region and each sub region in the frequency selective reflector shown in FIG. 1 and FIG. 2. FIG. 7 is a specific example when the polar angle $\theta_r$ of the reflection direction vector of the electromagnetic waves in the main region $A_0$ is 25°, the azimuth angle $\varphi_r$ is 20°, $\alpha$ is 4°, and $\beta$ is 4° in FIG. 2.

Thus, the reflection direction vectors of the electromagnetic waves in each sub region $A_{11}$ to $A_{33}$ are delicately different from the reflection direction vector of the electromagnetic waves in the main region $A_0$, and are different from each other.

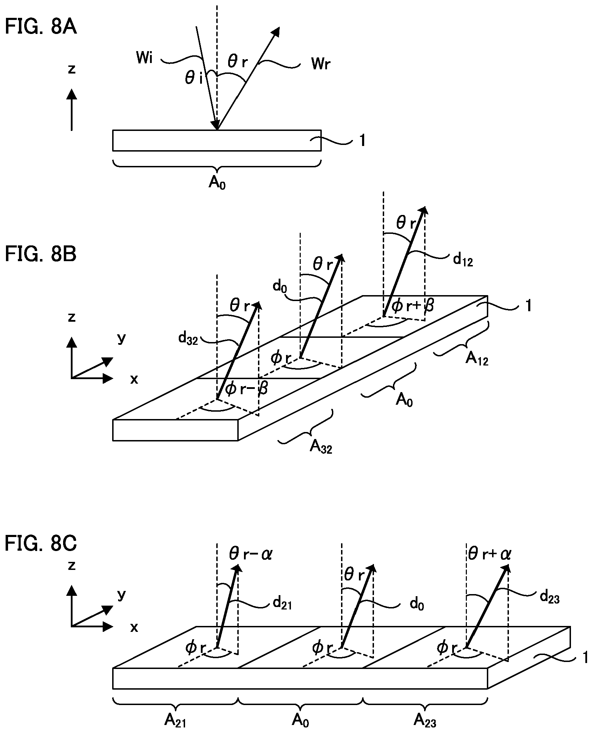

FIGS. 8A to 8C show examples of the reflection properties of the main region and each sub region in the frequency selective reflector shown in FIG. 1 and FIG. 2. As shown in FIG. 8A, the frequency selective reflector 1 reflects electromagnetic waves (incident wave $W_i$) in a particular frequency band to a direction different from a regular reflection (specular reflection) direction, for example, in the main region $A_0$, an incident angle $\theta_i$ of the incident wave $W_i$ and a reflection angle $\theta_r$ of the reflected wave $W_r$ are different. Also, as shown in FIG. 2, FIG. 7 and FIG. 8B, for the azimuth angle $\varphi$ of the reflection direction vector of the electromagnetic waves, the azimuth angle $\varphi$ is small with respect to the main region $A_0$ in the sub region $A_{32}$, the azimuth angle $\varphi$ is large with respect to the main region $A_0$ in the sub region $A_{12}$, and the azimuth angle $\varphi$ of the reflection direction vector of the electromagnetic waves gradually increases in the order of the sub region $A_{32}$, the main region $A_0$, and the sub region $A_{12}$. Similarly, the azimuth angle $\varphi$ of the reflection direction vector of the electromagnetic waves gradually increases in the order of the sub regions $A_{31}$, $A_{21}$, and $A_{11}$, and the azimuth angle $\varphi$ of the reflection direction vector of the electromagnetic waves gradually increases in the order of the sub regions $A_{33}$, $A_{23}$, and $A_{13}$. On the other hand, as shown in FIG. 2, FIG. 7, and FIG. 8C, for the polar angle $\theta$ of the reflection direction vector of the electromagnetic waves, the polar angle $\theta$ is small with respect to the main region $A_0$ in the sub region $A_{21}$, the polar angle $\theta$ is large with respect to the main region $A_0$ in the sub region $A_{23}$, and the polar angle $\theta$ of the reflection direction vector of the electromagnetic waves gradually increases in the order of the sub region $A_{21}$, the main region $A_0$, and the sub region $A_{23}$. Similarly, the polar angle $\theta$ of the reflection direction vector of the electromagnetic waves gradually increases in the order of the sub regions An, $A_{12}$, and $A_{13}$, and the polar angle $\theta$ of the reflection direction vector of the electromagnetic waves gradually increases in the order of the sub regions $A_{31}$, $A_{32}$, an $A_{33}$. In these manners, the reflection direction vector of the electromagnetic waves in the main region $A_0$ and the sub regions $A_{11}$ to $A_{33}$ are set so that the polar angle $\theta$ of the reflection direction vector of the electromagnetic waves gradually increases along the x-axis direction, and the azimuth angle $\varphi$ of the reflection direction vector of the electromagnetic waves gradually increases along the y-axis direction. Thereby, the reflection direction vectors of the electromagnetic waves in the respective sub regions $A_{11}$ to $A_{33}$ can be set so as to spread outward around the reflection direction vector of the electromagnetic waves in the main region $A_0$.

In such a case, when the electromagnetic wave (incident wave $W_i$) incident at a predetermined incident angle $\theta_i$ is reflected in accordance with the reflection properties (polar angle $\theta$, azimuth angle $\varphi$ of the main region $A_0$ and the sub regions $A_{11}$ to $A_{33}$, it can be reflected with spread around the reflection direction vector of the electromagnetic waves in the main area $A_0$. In other words, by overlapping the reflected beams by the sub regions $A_{11}$ to $A_{33}$ with the reflected beam by the main region $A_0$, one main lobe (main beam) is formed in the reflected beam profile by the entire frequency selective reflector 1, and the beam width of the reflected wave by the entire frequency selective reflector 1 can be widened. This allows the area irradiated with the reflected beam by the frequency selective reflector to be widened.

It should be noted that, as is related technology, when the frequency selective reflector includes only a main region, for example, increasing the size of the frequency selective reflector in principle increases the gain, and sharpens the reflected beam by the frequency selective reflector. In this case, since the beam width of the reflected wave by the frequency selective reflector becomes narrow, the area irradiated with the reflected beam by the frequency selective reflector becomes narrow.

Here, as is related technology, when the frequency selective reflector does not include a divided region, that is, for example, when it includes only the main region, and when the planar view shape of the frequency selective reflector is a circle, in the reflected beam profile by the frequency selective reflector, the full width at half maximum FWHM is generally represented by the following formula (2):

$$FWHM[rad] = \lambda / (0.8 * D) \text{ to } \lambda / (0.6 * D) \qquad (2).$$

In the formula (2), $\lambda$ represents a wavelength of the electromagnetic waves, and D represents a diameter of the frequency selective reflector. That is, when trying to produce a frequency selective reflector of sufficient size to obtain receiving power, the full width at half maximum FWHM of the reflected beam profile narrows, and the area irradiated with the reflected beam by the frequency selective reflector narrows.

On the other hand, in the present embodiment, since the frequency selective reflector is divided into a main region and a plurality of sub regions, and the size of the main region and each of the sub regions decreases, the gain may be decreased to some extent but the beam width of the reflected wave by the main region and each sub region is widened. Furthermore, since the reflection direction vectors of the electromagnetic waves in the main region and each sub region are different from each other, and the reflection direction vectors of the electromagnetic waves in the respective sub regions are set so as to spread outward around the reflection direction vector of the electromagnetic waves in the main region, the overlapping of the reflected beams by the main region and each sub region allows the beam width of the reflected waves by the entire frequency selective reflector to be widened. Thus, it is possible to widen the area irradiated with the reflected beam by the frequency selective reflector. This allows a reflected beam profile, such as a reflected beam profile by using a convex mirror, to be achieved.

Each configuration of the frequency selective reflector of the present embodiment will be described.

1. Divided region (main region and sub region)

An entire surface of the frequency selective reflector of the present embodiment is divided into a plurality of divided regions; the plurality of divided regions includes a main region that is a divided region positioned in a center of the frequency selective reflector, and a plurality of sub regions being divided regions other than the main region; and the plurality of sub regions is disposed around the main region.

The plurality of sub regions is disposed around the main region. "The plurality of sub regions is disposed around the main region" includes not only a case where the plurality of sub regions is disposed all around the main region, but also when the plurality of sub regions is disposed in a part of the periphery of the main region.

The plurality of sub regions only need be disposed around the main region. The placement of the sub regions is appropriately selected according to factors such as the target reflection properties of the entire frequency selective reflector, the reflection properties of the main region and each sub region, and the shape of the main region and the shape of each sub region in plan view.

The plurality of sub regions is preferably disposed around the main region symmetrically with respect to the main region, and more preferably disposed all around the main region symmetrically with respect to the main region. By placing the plurality of sub regions all around the main region symmetrically with respect to the main region, a large number of sub regions, of which the reflection direction vector of the electromagnetic waves is slightly different from that of the main region, can be disposed. This increases the degree of freedom of design and allows for a variety of reflected beam profiles.

For example, as shown in FIG. 8B, when two sub regions $A_{12}$ and $A_{32}$ are disposed in a part of the periphery of the main region $A_0$ symmetrically with respect to the main region $A_0$, and when the azimuth angle $\varphi$ of the reflection direction vector of the electromagnetic waves gradually increases in the order of the sub region $A_{32}$, the main region $A_0$, and the sub region $A_{12}$, the reflected beam by the entire frequency selective reflector can be widened in the horizontal direction.

Also, for example, as shown in FIG. 8C, when two sub regions $A_{21}$ and $A_{23}$ are disposed in a part of the periphery of the main region $A_0$ symmetrically with respect to the main region $A_0$, and when the polar angle $\theta$ of the reflection direction vector of the electromagnetic waves gradually increases in the order of the sub region $A_{21}$, the main region $A_0$, and the sub region $A_{23}$, the reflected beam by the entire frequency selective reflector can be widened in the vertical direction.

Also, for example, in FIGS. 1, 2, 7, and 9A to 9F, the plurality of sub regions is disposed all around the main region $A_0$ symmetrically with respect to the main region $A_0$.

Examples of the planar view shape of each divided region may include a rectangular shape, a parallelogram shape, a diamond shape, a trapezoidal shape, a triangular shape, a hexagonal shape, and a concentric circle shape. In the case of these planar view shapes, it is possible to dispose divided regions without a gap in between.

For example, as shown in FIGS. 1, 2, and 7, when the planar view shapes of each divided region, that is, the main region $A_0$ and the sub regions $A_{11}$ to $A_{33}$ are rectangular, the plurality of sub regions $A_{11}$ to $A_{33}$ can be disposed around the main region $A_0$ symmetrically with respect to the main region $A_0$.

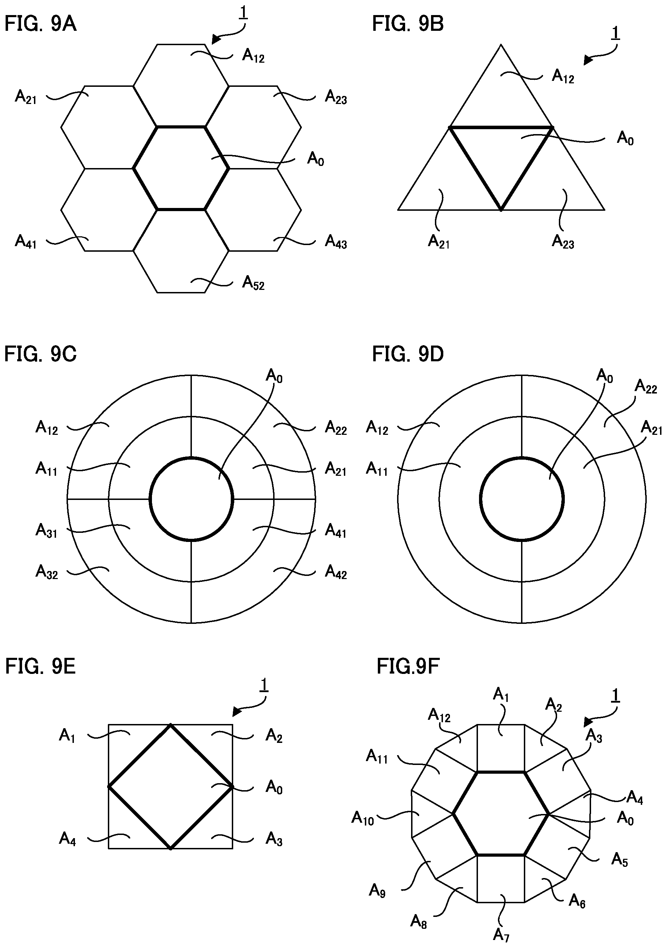

Also, for example, as shown in FIG. 9A, when the planar view shapes of each divided region, that is, the main region $A_0$ and the sub regions $A_{11}$ to $A_{52}$ are hexagonal, the plurality of sub regions $A_{12}$ to $A_{52}$, can be disposed around the main region $A_0$ symmetrically with respect to the main region $A_0$.

Also, for example, as shown in FIG. 9B, when the planar view shapes of each divided region, that is, the main region $A_0$ and the sub regions $A_{12}$ to $A_{23}$, are triangular, the plurality of sub regions $A_{12}$ to $A_{23}$ can be disposed around the main region $A_0$ symmetrically with respect to the main region $A_0$.

Also, for example, as shown in FIG. 9C, when the planar view shapes of each divided region, that is, the main region $A_0$ and the sub regions $A_{11}$ to $A_{42}$, are concentric circle, the plurality of sub regions $A_{11}$ to $A_{42}$ can be disposed around the main region $A_0$ symmetrically with respect to the main region $A_0$. Also, for example, as shown in FIG. 9D, when the planar view shapes of each divided region, that is, the main region $A_0$ and the sub regions $A_{11}$ to $A_{22}$, are concentric circle, the plurality of the sub regions $A_{11}$ to $A_{22}$ can be disposed around the main region $A_0$ symmetrically with respect to the main region $A_0$.

The planar view shape of the main region and the planar view shape of each sub region may be the same or different. For example, in FIGS. 1, 2, 7, and 9A and 9B, the planar view shape of the main region $A_0$ and the planar view shape of each sub region are the same. On the other hand, for example, in FIGS. 9C to 9F, the planar view shape of the main region $A_0$ is different from the planar view shape of each sub region.

Also, the planar view shapes of each sub region may be the same or different. For example, in FIGS. 1, 2, 7, and 9A and 9B, the planar view shapes of each sub region are the same. On the other hand, in FIGS. 9C, 9D and 9F, the planar view shapes of each sub region are different.

The number of the main region is one. The main region is a divided region positioned in the center of the frequency selective reflector, and usually disposed in the center of the frequency selective reflector.

The number of the sub regions is plural, and is appropriately selected according to factors such as the reflection properties of the entire target frequency selective reflector, the reflection properties of the main region and each sub region, the placement of the main region and each sub region, the planar view shape of the main region and each sub region, and the size of the main region and each sub region. When the overall size of the frequency selective reflector is constant, the larger the number of the sub regions is, that is, the greater the number of the divided regions is, the smaller the size of the sub regions becomes. When the sub region is reduced in size, disturbance of the reflected beam profile by the entire frequency selective reflector is suppressed and the side lobe tends to be low in the reflected beam profile. In this case, a broad reflected beam can be stably obtained.

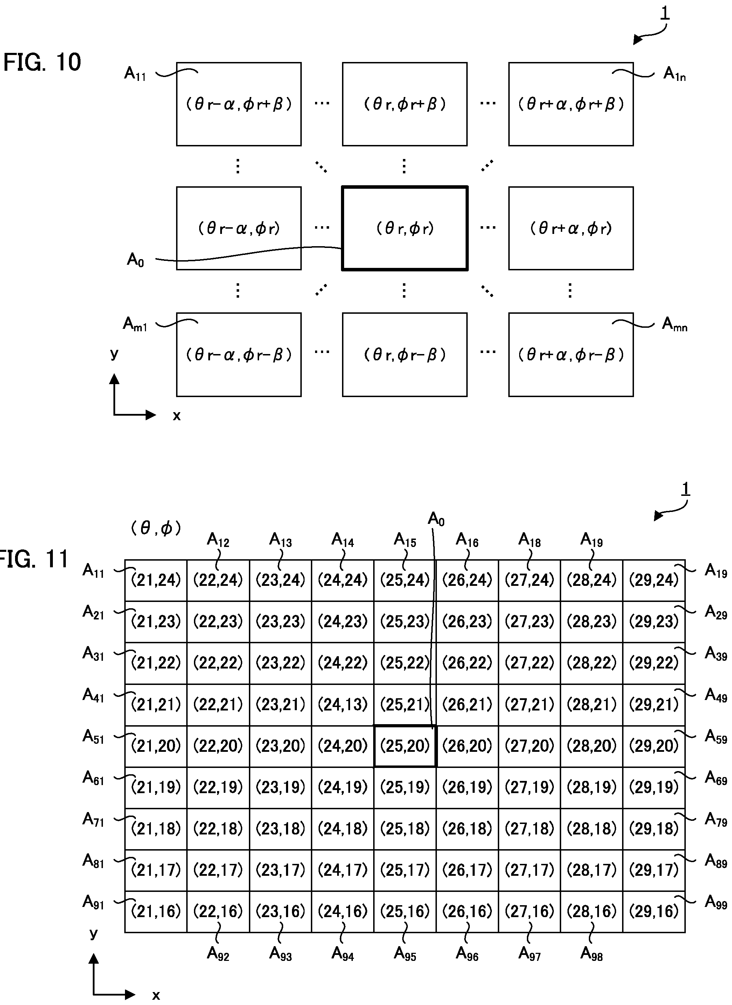

For example, as shown in FIG. 10, in the case where the planar view shapes of the main region $A_0$ and the sub regions $A_{11}$ to $A_{mn}$ are rectangular, and the sub regions $A_{11}$ to $A_{mn}$ are disposed in m rows and n columns around the main region $A_0$, when the size of the overall frequency selective reflector 1 is constant, the larger the m and the n are, that is, the larger the number of the sub regions $A_{11}$ to $A_{mn}$ is, the smaller the size of the sub region becomes, and as described above, the broad reflected beam can be easily obtained stably. Specifically, in FIG. 7, the planar view shape of the main region $A_0$ and each sub regions $A_{11}$ to $A_{33}$ are rectangular, and the sub regions $A_{11}$ to $A_{33}$ are disposed in three rows and three columns around the main region $A_0$. In FIG. 11, the planar view shape of the main region $A_0$ and each sub regions $A_{11}$ to $A_{99}$ are rectangular, and the sub regions $A_{11}$ to $A_{99}$ are disposed in nine rows and nine columns around the main region $A_0$. When the sizes of the frequency selective reflector 1 shown in FIG. 7 and FIG. 11 are the same, the frequency selective reflector 1 shown in FIG. 11 has a larger number of the sub region and a smaller size of the sub regions, and thus a broad reflected beam can be easily obtained stably as described above.

Also, in the present embodiment, the reflection direction vectors of the electromagnetic waves in each of the divided regions are different from each other. Specifically, in each divided region, at least one of the polar angle and the azimuth angle of the reflection direction vector of the electromagnetic waves may be different.

In addition, in the adjacent divided regions, the angle formed by the reflection direction vector of the electromagnetic waves is preferably relatively small. In each divided region, the reflection direction vector of the electromagnetic waves gradually changes, so that the disturbance of the reflected beam profile by the entire frequency selective reflector is suppressed, and the side lobe tends to be low in the reflected beam profile. In this case, a broad reflected beam can be stably obtained.

In the adjacent divided regions, at least one of the polar angle and the azimuth angle of the reflection direction vector of the electromagnetic waves may be different.

Preferably, the angle $\theta$ds formed by the reflection direction vector of the electromagnetic waves between adjacent divided regions is, for example, within 15°, more preferably within 5°, further preferably within 2°, and particularly preferably within 0.5°. Meanwhile, the lower limit of the angle $\theta$ds formed by the reflection direction vector of the electromagnetic waves between adjacent divided regions is not particularly limited, and is appropriately determined according to the processing accuracy of the frequency selective reflector.

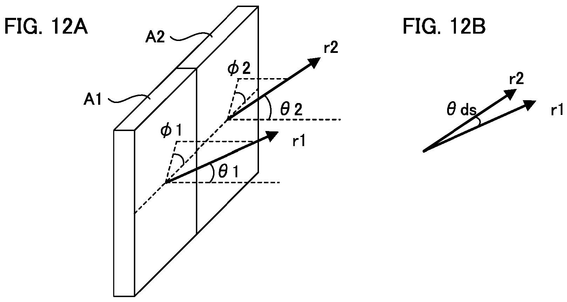

In the present disclosure, the design of the reflection direction vector of the frequency selective reflector is performed in a polar coordinate system with reference to the horizontal direction (x axis), the vertical direction (y axis), and the normal direction (z axis), assuming a case where the frequency selective reflector 1 is erected vertically to the ground (XZ plane), as exemplified in FIG. 6, but as exemplified in FIGS. 12A and 12B, the angle $\theta$ds formed by the reflection direction vectors r1 and r2 of the electromagnetic waves between adjacent divided regions A1 and A2 can be derived from the reflection direction by polar coordinates with a simple geometric calculation. General geometric definitions are given below.

In $v_1 = (\theta_1, \varphi_1, r_1)$ and $v_2 = (\theta_2, \varphi_2, r_2)$, the angle $(v_1, v_2)$ formed by two vectors will be represented by the following formula:

$$(v_1, v_2) = \arccos \{(x_1 * x_2 + y_1 * y_2 + z_1 * z_2) \ / \ (r_1 * r_2)\}$$

provided that,

$$x_1 = r_1 * \sin(\theta_1) * \cos(\varphi_1)$$

$$y_1 = r_1 * \sin(\theta_1) * \sin(\varphi_1)$$

$$z_1 = r_1 * \cos(\theta_1)$$

$$x_2 = r_2 * \sin(\theta_2) * \cos(\varphi_2)$$

$$y_2 = r_2 * \sin(\theta_2) * \sin(\varphi_2)$$

and

$$z_2 = r_2 * \cos(\theta_2).$$

Also, in the plurality of sub regions, the angles formed by the reflection direction vectors of the electromagnetic waves in adjacent sub regions may be the same or different, but are usually the same.

Also, in the present embodiment, the reflection direction vectors of the electromagnetic waves in the respective sub regions are set so as to spread outward around the reflection direction vector of the electromagnetic waves in the main region. The reflection direction vectors of the electromagnetic waves in the sub regions are set in this manner so that the beam width of the reflected wave by using the entire frequency selective reflector can be widened.

On the other hand, when the reflection direction vectors of the electromagnetic waves in the respective sub regions are not set so as to spread outward around the reflection direction vector of the electromagnetic waves in the main region, and for example, when is set randomly, the main lobe (main beam) width is not widened in the reflected beam profile by the entire frequency selective reflector, and the side lobe tends to be high.

Specifically, the reflection direction vectors of the respective sub regions in the periphery may be set so that the reflection direction vectors of the electromagnetic waves in the respective sub regions in the plane of the frequency selective reflector spread outward around the reflection direction vector of the electromagnetic waves in the main region positioned in the center of the frequency selective reflector. The reflection direction vectors of the electromagnetic waves in the respective sub region can be set by the polar angle and the azimuth angle of the reflection direction vector of the electromagnetic waves. That is, for the reflection direction vectors of the electromagnetic waves in the respective sub region, the polar angles and the azimuth angles of the reflection direction vectors of the electromagnetic waves in the respective sub regions are set so as to spread outward around the reflection direction vector of the electromagnetic waves in the main region. At this time, the angle formed by the reflection direction vector of the electromagnetic waves between adjacent sub regions is preferably gradually changed within the range of the angle formed by the reflection direction vector of the electromagnetic waves between the adjacent divided regions described above.

For example, in the frequency selective reflector 1 shown in FIGS. 2, 7 and 11, the reflection direction vector of the electromagnetic waves in the main region and each sub region is set so that the polar angle θ of the reflection direction vector of the electromagnetic waves gradually increases along the x-axis direction, and the azimuth angle φ of the reflection direction vector of the electromagnetic waves gradually increases along the y-axis direction. Thereby, the reflection direction vectors of the electromagnetic waves in the respective ubiquitous regions can be set so as to spread outward around the reflection direction vector of the electromagnetic waves in the main region.

Incidentally, although FIGS. 2, 7 and 11 show an example in which the polar angle and the azimuth angle of the reflection direction vector of the electromagnetic waves monotonously increase along a predetermined direction, the polar angle and the azimuth angle of the reflection direction vector of the electromagnetic waves do not necessarily increase monotonically along a predetermined direction. When setting the polar angle and the azimuth angle of the reflection direction vector of the electromagnetic waves in each sub region so that the reflection direction vector of the electromagnetic waves in each sub region spreads outward around the reflection direction vector of the electromagnetic waves in the main region, for example, when the range of the polar angle and azimuth angle of the reflection direction vector of the electromagnetic waves in the main region and each sub region includes the polar angle θ = 0° or the azimuth angle φ = 0°, the polar angle and the azimuth angle of the reflection direction vector of the electromagnetic waves do not increase monotonically along a predetermined direction.

Further, in the frequency selective reflector, by designing the reflection direction vector of the electromagnetic waves in each sub region with respect to the reflection direction vector of the electromagnetic waves in the main region to be like a reflection by the convex mirror regardless of the planar view shape of each divided region, the reflection direction vectors of the electromagnetic waves in the respective sub regions can be set so as to spread outward around the reflection direction vector of the electromagnetic waves in the main region.

As described above, as is related technology, in the case where the frequency selective reflector does not include a divided region, that is, for example, when it includes only a main region, and when the planar view shape of the frequency selective reflector is circular, the full width at half maximum FWHM in the reflected beam profile by the frequency selective reflector is generally represented by the following formula (2):

$$\mathrm{FWHM[rad]} = \lambda\ /\ (0.8*D)\ \mathrm{to}\ \lambda\ /\ (0.6*D)\qquad (2).$$

In the formula (2), λ represents a wavelength of the electromagnetic waves, and D represents a diameter of the frequency selective reflector.

In the present embodiment, the full width at half maximum FWHM of the reflected beam profile by the frequency selective reflector is preferably wider in view of the actual usability. However, when the full width at half maximum FWHM of the reflected beam profile is too wide, the irradiation power per unit area of the frequency selective reflector is reduced, so that the size of the frequency selective reflector needs to be increased to compensate for the reduced irradiation power. For this reason, in the present embodiment, it is preferable that the full width at half maximum FWHM of the reflected beam profile is typically within 40° in a graph in which a deviation angle from the reflection direction vector of the electromagnetic waves in the main region is a horizontal axis and a reflection intensity of the electromagnetic waves of the frequency selective reflector is a vertical axis. Of course, if there is little constraint on the installation location of the frequency selective reflector, the full width at half maximum FWHM of the reflected beam profile may be greater than 40°. On the other hand, the lower limit of the full width at half maximum FWHM of the reflected beam profile may be, for example, 0.2° or more, and may be 2° or more.

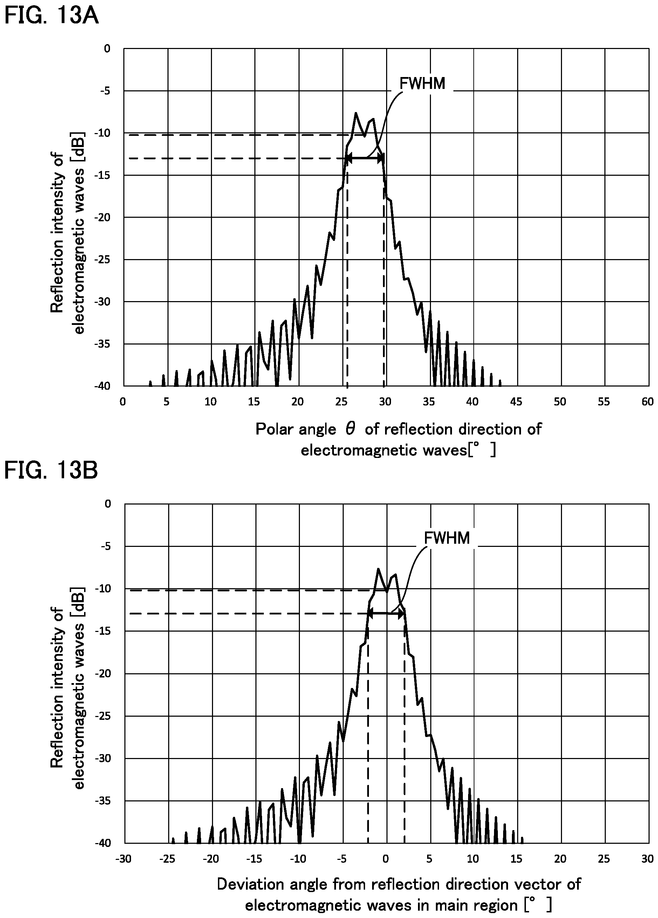

Note that the full width at half maximum FWHM of the reflected beam profile refers to, for example, the angle formed by the reflection direction vector of two points of electromagnetic waves that are $1/\sqrt{2}$ in electric field intensity, 1/2 in electric power and -3 dB in decibels with respect to the reflection intensity of the reflection direction vector of the electromagnetic waves in the main region, in the reflected beam profile which is cut at a plane including the reflection direction vector of the electromagnetic waves in the main region, as shown in FIGS. 13A and 13B. The reflected beam profile shown in FIG. 13A is an example in which the horizontal axis is the polar angle when the reflected beam profile is cut at an azimuthal angle plane including the reflection direction vector of the electromagnetic waves in the main region, and the vertical axis is the reflection intensity of the electromagnetic waves. The polar angle θ of the reflection direction vector of electromagnetic waves in the main region is 27.5°. The full width at half maximum FWHM of the reflected beam profile is an angle of width between two points that are $1/\sqrt{2}$ in the electric field intensity, 1/2 in electric power, and -3 dB in decibels with respect to the reflection intensity of the reflection direction vector (polar angle $\theta$ = 27.5°) of the electromagnetic waves in the main region, and is 4.5°. Note that the reflected beam profile shown in FIG. 13B is a graph in which, in the reflected beam profile shown in FIG. 13A, the deviation angle from the polar angle ($\Theta$ = 27.5°) of the reflection direction vector of the electromagnetic waves in the main region is the horizontal axis. It should be noted that although the reflected beam profile usually contains some strong and weak waves in terms of design, the direction of the peak position when the whole is approximated by a curve is the direction of the reflection direction vector of the electromagnetic waves in the main region.

Also, the size of each divided region is appropriately selected according to factors such as the reflection properties of the target reflection properties of the entire frequency selective reflector, the reflection properties of each divided region, the placement of each divided region, the planar view shape of each divided region, and the number of the divided regions. The size of each divided region may be, for example, 1/3 or less of the size of the frequency selective reflector.

In the frequency selective reflector, a plurality of cell regions, of which reflection phases of electromagnetic waves differ from one another, is usually periodically arranged, that is, a plurality of unit structures including a plurality of cell regions, of which reflection phases of electromagnetic waves differ from one another, is arranged. The "cell region" refers to a region in which the reflection phase of electromagnetic waves is the same in the unit structure. Also, the unit structure is one-period structure, and is a region indicating one reflection direction vector of electromagnetic wave.

In the frequency selective reflector, when the number of the divided regions is increased, in design, the size of each divided region is not the size of the unit structure, but can be reduced to the size of the cell region constituting the unit structure. When the size of each divided region is the size of the cell region, the identification that the frequency selective reflector is divided into a plurality of divided regions is practically difficult, and the reflection direction vector of electromagnetic waves is gently adjusted over the entire surface of the frequency selective reflector. Even in such a case, it is possible to consider the cell region positioned in the center of the frequency selective reflector as the main region, and the reflection direction vector of the electromagnetic waves in the main region is usually designed to be the center of the reflection direction vector of the electromagnetic waves in the entire frequency selective reflector. Also, in this case, although the sub region adjacent to the main region cannot be defined clearly, one obtained by dividing the entire frequency selective reflector into fine regions can be regarded as a virtual sub region, and the angle formed by the reflection direction vector of the electromagnetic waves between the adjacent divided regions is preferably set to be within a predetermined range.

Thus, the size of each divided region may be equal to or larger than the size of the cell region, for example, and may be equal to or larger than the size of the unit structure.

If the size of each divided region is the size described above, the adjustment effect of the reflected beam profile is expressed. As the number of the divided regions is increased, the disturbance of the reflected beam profile by the entire frequency selective reflector is suppressed and the side lobe tends to be low in the reflected beam profile. In this case, a broad reflected beam can be stably obtained.

The size of each divided region may be the same or different. In the present embodiment, as described above, when the reflected beams by each divided region overlap, one main lobe (main beam) is formed in the reflected beam profile by the entire frequency selective reflector. When the sizes of each divided region are different, for example, the electromagnetic waves are more strongly reflected in a narrower solid angle range from the divided regions of larger size. Therefore, it is preferable to design the size of each divided region so as not to generate a gap at a solid angle corresponding to the full width at half maximum FWHM of the reflected beam profile formed by overlapping of the reflected beams by each divided region.

2. Configuration of frequency selective reflector

The frequency selective reflector of the present disclosure is a member reflecting electromagnetic waves in a particular frequency band to a direction different from a regular reflection direction.

The frequency selective reflector is not particularly limited as long as it is a member that reflects electromagnetic waves in a particular frequency band to a direction different from the regular reflection direction. For example, the frequency selective reflector may include: a reflecting member reflecting electromagnetic waves; and the reflecting member may include a reflection phase control function controlling a reflection phase of the electromagnetic waves, or the frequency selective reflector may include: a reflecting member reflecting the electromagnetic waves; and a dielectric layer that is disposed at an incident side of the electromagnetic waves with respect to the reflecting member; includes an uneven structure in which a plurality of unit structures including a thickness distribution of increasing a thickness in a predetermined direction is arranged, and transmits the electromagnetic waves. Also, the frequency selective reflector may be a variable frequency selective reflector that varies the reflection direction of the electromagnetic waves by, for example, controlling the reflection phase of the electromagnetic waves by electrical control or mechanical control.

The first aspect wherein the frequency selective reflector includes a reflecting member reflecting the electromagnetic waves, and the reflecting member includes a reflection phase control function controlling a reflection phase of the electromagnetic waves; and the second aspect wherein the frequency selective reflector includes a reflecting member reflecting the electromagnetic waves, and a dielectric layer that is disposed at an incident side of the electromagnetic waves with respect to the reflecting member, includes an uneven structure in which a plurality of unit structures including a thickness distribution of increasing a thickness in a predetermined direction is arranged, and transmits the electromagnetic waves, will be separately explained.

(1) First aspect of frequency selective reflector

The first aspect of the frequency selective reflector in the present embodiment includes a reflecting member reflecting the electromagnetic waves, and the reflecting member includes a reflection phase control function controlling a reflection phase of the electromagnetic waves.

(a) Reflecting member

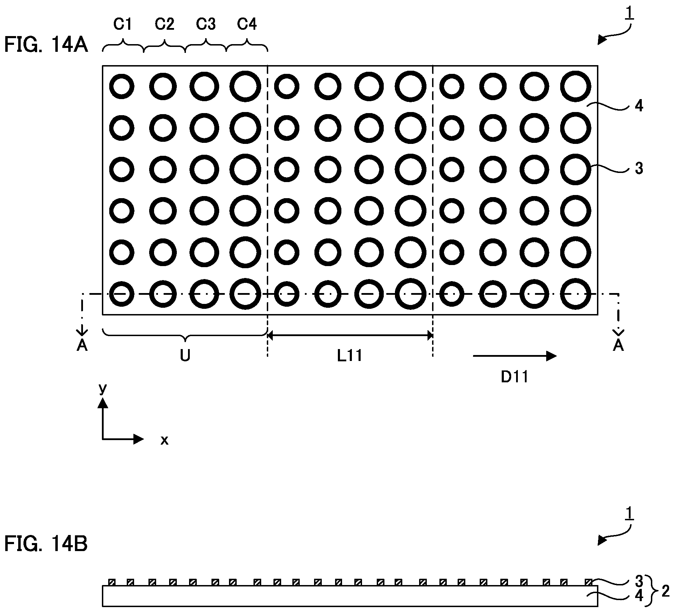

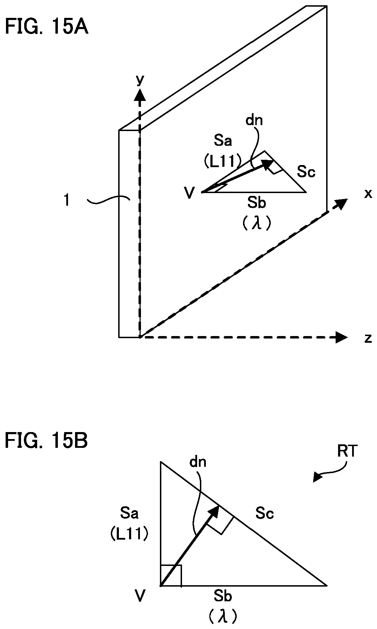

The reflecting member in the present aspect reflects the electromagnetic waves in a particular frequency band, and is a member including a reflection phase control function controlling the reflection phase of the electromagnetic waves.
In the present aspect, the reflecting member usually includes a wavelength selecting function reflecting only the electromagnetic waves in a particular frequency band. Examples of such a reflecting member may include a frequency selective plate.
The frequency selective plate includes a frequency selective surface (FSS) that controls reflection and transmission of electromagnetic waves in a particular frequency band, and when functioning as a reflector for electromagnetic waves in a particular frequency band, the frequency selective plate includes a plurality of reflection elements (scattering elements) is arranged in a plane. Examples of the frequency selective plate may include one including a dielectric substrate and a plurality of reflection elements arranged on a surface of the dielectric substrate that is an incident side of the electromagnetic waves. FIGS. 14A and 14B are a schematic plan view and cross-sectional view showing an example of the frequency selective reflector of the present embodiment, and FIG. 14B is a cross-sectional view of A-A line in FIG. 14A. In the frequency selective reflector 1 shown in FIGS. 14A and 14B, a reflecting member 2 is a frequency selective plate, and the reflecting member 2 includes a dielectric substrate 4 and a plurality of reflection elements 3 arranged on an electromagnetic wave incident side surface of the dielectric substrate 4. The frequency selective plate may be appropriately selected from known frequency selective plates, and used.
In the present embodiment, for example, as shown in FIG. 14A, a plurality of reflection elements 3 is periodically arranged. When cell regions C1 to C4 respectively designate the region where the reflection element 3, of which reflection phase of the electromagnetic waves is the same, is arranged, and unit structure U designates the structure for one cycle, in the present embodiment, since the reflection direction vectors of the electromagnetic waves are different from each other in each of the divided regions, the reflecting member may include a plurality of kinds of unit structures of which reflection direction vectors of the electromagnetic waves differ from one another, depending on the reflection properties of each of the divided regions. In the present aspect, each of the divided regions may include at least one unit structure, and may include a plurality of unit structures of which reflection direction vectors of the electromagnetic waves are the same. Further, when the number of the divided regions is increased and the reflection direction vectors of the divided regions are designed to change gradually over the entire surface of the frequency selective reflector, each of the divided regions may include at least one cell region.
Here, in the present aspect, the reflection direction vector of the electromagnetic waves can be determined as follows. For example, in the reflecting member, when a plurality of reflection elements having different dimensions from each other is periodically arranged, and a plurality of unit structures each including a plurality of reflection elements having different dimensions from each other is arranged, the dimension of the reflection element repeatedly increases or decreases in a certain direction. In this case, the reflection direction vector can be determined by the length of the unit structure in the direction in which the dimension of the reflection element increases, and the wavelength of the electromagnetic waves. Specifically, first, the three-dimensional orthogonal coordinate system is assumed with reference to the horizontal direction (x-axis), the vertical direction (y-axis), and the normal direction (z-axis) assuming that the frequency selective reflector 1 is erected vertically to the ground (xz-plane), as shown in FIG. 6. The three-dimensional orthogonal coordinate system is a three-dimensional orthogonal coordinate system in which the surface of the frequency selective reflector 1 is the xy plane and the normal direction of the surface of the frequency selective reflector 1 is the z axis. Next, in the xy plane, the direction in which the dimension of the reflection element increases is determined. For example, in FIG. 14, in the xy plane, the direction in which the dimension of the reflection element 3 increases is shown as direction D11. Next, in the xy plane, the length of the unit structure in the direction in which the dimension of the reflection element increases is determined. For example, in the case of FIG. 14, in the xy plane, the length of the unit structure U in the direction D11 in which the dimension of the reflection element 3 increases is shown as length L11. Next, in the three-dimensional orthogonal coordinate system, the wavelength of the electromagnetic waves is taken parallel to the z-axis. Then, a right angled triangle is formed setting a start point of the unit structure in the direction in which the dimension of the reflection element increases on the xy plane as a right angle apex, and the length of the unit structure in the direction in which the dimension of the reflection element increases on the xy plane and the wavelength of the electromagnetic waves parallel to the z-axis as adjacent sides. The normal direction of the hypotenuse of the right angled triangle is the reflection direction vector of the electromagnetic waves when the incident direction of the electromagnetic waves is parallel to the z-axis. For example, as shown in FIGS. 15A and 15B, in the three-dimensional orthogonal coordinate system, a right angled triangle RT is formed setting the start point of the unit structure in the direction in which the dimension of the reflection element increases on the xy plane as a right angle apex V, and the length L11 of the unit structure in the direction in which the dimension of the reflection element increases on the xy plane and the wavelength $\lambda$ of the electromagnetic waves parallel to the z-axis as adjacent sides Sa and Sb. The normal direction dn of the hypotenuse Sc of the right angled triangle RT becomes the reflection direction vector of the electromagnetic waves when the incident direction of the electromagnetic waves is parallel to the z-axis.

Note that in FIG. 14 and FIG. 15A, the direction D11 in which the dimension of the reflection element increases is horizontal with the x-axis, but the direction in which the dimension of the reflection element increases may be any direction in the xy plane without being limited thereto.

Thus, in the present aspect, in other words:

an entire surface of the frequency selective reflector is divided into a plurality of divided regions, the plurality of divided regions includes a main region that is a divided region positioned in a center of the frequency selective reflector, and a plurality of sub regions being divided regions other than the main region, the plurality of sub regions is disposed around the main region,

the frequency selective reflector includes a reflecting member that: reflects the electromagnetic waves, includes a reflection phase control function that controls the reflection phase of the electromagnetic waves, in the reflecting member, a plurality of unit structures including a plurality of reflection elements of which dimensions differ from one another is arranged, and each of the divided regions includes at least one unit structure,

assuming a three-dimensional orthogonal coordinate system in which a surface of the frequency selective reflector is defined as xy plane and the normal direction of the surface of the frequency selective reflector is defined as z-axis, and assuming a right angled triangle setting a start point of the unit structure in a direction in which a dimension of the reflection element increases on the xy plane as a right angle apex in the three-dimensional orthogonal coordinate system, and a length of the unit structure in a direction in which a dimension of the reflection element increases on the xy plane and the wavelength of the electromagnetic waves parallel to the z-axis as adjacent sides, normal directions of a hypotenuse of the right angled triangle in the respective divided regions are different from each other, and

the normal directions of the hypotenuse of the right angled triangle in the respective sub regions are set so as to spread outward around the normal direction of the hypotenuse of the right angled triangle in the main region.

Also, when the relative reflection phase of the electromagnetic waves in each cell region of n unit structures is set so that the n-wavelength components (phase difference: n * 360°) are shifted by the n unit structures as described below, n unit structures in which the direction in which the dimension of the reflection elements of each unit structure increases is the same and lengths in the direction in which the dimension of the reflection elements increases are different will be repeatedly arranged. In such a case, a right angled triangle is assumed in which the start point of the unit structure in the direction in which the dimension of the reflection element increases on the xy plane is defined as a right angle apex, and the sum of the lengths of n unit structures in the direction in which the dimensions of the reflection elements increase on the xy plane and the n times the wavelength of the electromagnetic waves parallel to the z-axis are defined as adjacent sides.

The shape of the reflection element forming the frequency selective surface is not particularly limited, and examples thereof may include any shapes such as a ring, a cross, a square, a rectangle, a circle, an ellipse, a bar, a planar pattern such as a pattern divided into a plurality of adjacent regions, and a three-dimensional structure such as a through-hole via.

Also, the reflection element may be a single layer or multiple layers. When the reflection element is a single layer, examples of the frequency selective plate may include one in which a plurality of reflection elements is arranged on one side of the dielectric substrate. Also, when the reflection element is multiple layers, examples of the frequency selective plate may include the one in which a plurality of reflection elements is arranged on both surfaces of the dielectric substrate, the one in which a dielectric substrate, a plurality of reflection elements, a dielectric substrate, and a plurality of reflection elements, are arranged sequentially, and the one in which a conductor is disposed on entire surface of the surface farthest from the surface of the incident side of the electromagnetic wave.

In the present aspect, the reflecting member includes a reflection phase control function controlling a reflection phase of the electromagnetic waves. In such a reflecting member, the reflection phase of the electromagnetic waves can be controlled by varying the resonant frequency of each reflection element by varying the dimension and shape of the reflection element. Thereby, the reflection direction of the electromagnetic waves incident from the predetermined direction can be controlled.

As the reflecting member including the reflection phase control function, a general frequency selective surface can be applied. It is possible to vary the reflection phase of the electromagnetic waves by varying the dimension and shape of the reflection element.

The different dimension of the reflection element is appropriately selected depending on the shape of the reflection element.

(b) Other configurations

The frequency selective reflector of the present aspect may include configurations other than the reflecting member as required.

(i) Cover member

The frequency selective reflector of the present aspect may include a cover member on a surface of the reflecting member that is the incident side of the electromagnetic waves. The cover member can protect the reflecting member. Design properties can also be imparted by the cover member.

(ii) Ground layer

The frequency selective reflector of the present aspect may include a ground layer on a surface of the reflecting member that is opposite to the incident side of the electromagnetic waves. The ground layer can block interference with objects present on the backside of the frequency selective reflector and suppress the occurrence of noise. As the ground layer, for example, a conductive layer such as a metal plate, a metal mesh, and an ITO film is used.

(iii) Planarizing layer

The frequency selective reflector of the present aspect may include a planarizing layer on a surface of the reflecting member that is the incident side of the electromagnetic waves. When the reflecting member is a member in which a plurality of reflection elements is arranged, the planarizing layer can flatten the unevenness of the reflection element, and can suppress the influence of the unevenness due to the reflection element. Examples of the planarizing layer may include an ionizing radiation cured resin layer disposed in the state of embedding the reflection element. Further, the planarizing layer may be provided with a function of protecting the reflection element.

(iv) Fixing layer

When the frequency selective reflector of the present aspect is used by being attached to, for example, a wall or the like, a fixing layer having a mechanism for attaching the frequency selective reflector may be disposed on the reflecting member that is an opposite side surface to the incident side of the electromagnetic waves. In order to inhibit interference among the fixing layer and the reflecting member, a metal layer may also be disposed between the fixing layer and the reflecting member, and the fixing layer may also serve as a metal layer. In addition, when the frequency selective reflector of the present aspect is attached to a wall or the like, the fixing layer may have a mechanism for making the angle in the normal direction of the frequency selective reflector variable so that the deviation between the designed incident direction and the designed reflection direction of the designed electromagnetic wave, and the incident direction and the reflection direction of the actual electromagnetic wave can be corrected.

(2) Second aspect of frequency selective reflector

The second aspect of the frequency selective reflector in the present embodiment includes: a reflecting member reflecting the electromagnetic waves; and a dielectric layer that: is disposed at an incident side of the electromagnetic waves with respect to the reflecting member; includes a concave and convex structure in which a plurality of unit structures including a thickness distribution of increasing thickness in a predetermined direction is arranged; and transmits the electromagnetic waves. In the frequency selective reflector of the present aspect, the unit structure of the dielectric layer includes a plurality of cell regions of which thickness differs from one another. In each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic wave by being transmitted through the dielectric layer again, in the graph, a value of the relative reflection phase of the electromagnetic waves is over -360° and 0° or less, when a point corresponding to a central position of the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line; and the dielectric layer includes, as the unit structure, at least a unit structure including three or more of the cell regions of which thickness differs from one another. A reflection direction of the electromagnetic waves is controlled by controlling a relative reflection phase distribution of the electromagnetic waves based on the thickness distribution of the dielectric layer.

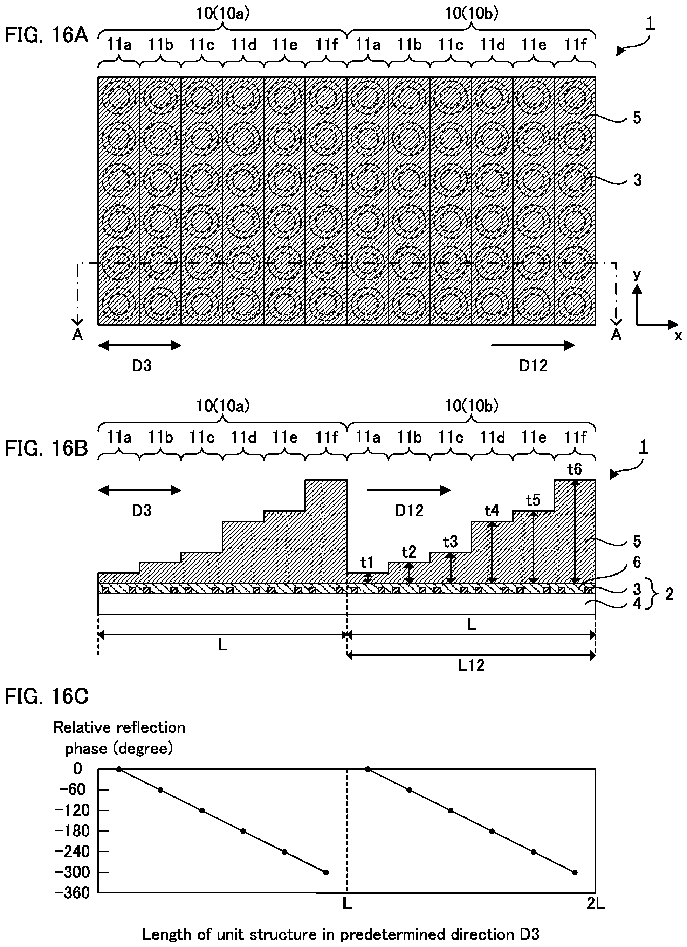

FIGS. 16A and 16B are a schematic plan view and cross-sectional view showing an example of the frequency selective reflector of the present aspect, and FIG. 16B is a cross-sectional view of A-A line in FIG. 16A. As shown in FIGS. 16A and 16B, frequency selective reflector 1 includes: reflecting member 2 reflecting particular electromagnetic waves; and dielectric layer 5 that: is disposed at an incident side of the electromagnetic waves with respect to the reflecting member 2; includes a concave and convex structure in which a plurality of unit structures 10 including a thickness distribution of which thickness t1 to t6 increase in predetermined direction D3 is arranged; and transmits particular electromagnetic waves. Also, the frequency selective reflector 1 includes adhesive layer 6 between the reflecting member 2 and the dielectric layer 5. The unit structure 10 of the dielectric layer 5 includes a plurality of cell regions 11a to 11f of which thickness t1 to t6 differs from one another. For example, in FIG. 16B, the unit structure 10 of the dielectric layer 5 has a stepped shape in which the thickness t1 to t6 stepwise increase in the predetermined direction D3, the number of steps in the stepped shape is six stages, and the unit structure 10 of the dielectric layer 5 includes six cell regions 11a to 11f. Since the thicknesses t1 to t6 are different in each cell region 11a to 11f of the unit structure 10 of the dielectric layer 5, the round-trip optical path length when the electromagnetic waves are transmitted through the dielectric layer 5, reflected by the reflecting member 2, and emitted to the incident side of the electromagnetic wave by being transmitted through the dielectric layer 5 again, are different. The differences in round-trip optical path length in the dielectric layers, that is, the optical path difference, will produce a relative reflection phase difference.

The term "optical path length" is used in the present description to refer to the effective distance when the electromagnetic wave passes through the dielectric layer in practice because the wavelength of the frequency band targeted in the present disclosure is more easily explained when described as behavior similar to the light since the wavelength of the frequency band targeted in the present disclosure is closer to that of the light as compared to the frequency band of a conventional LTE and is high in straightness.

Then, in the unit structure 10 of the dielectric layer 5, in a graph setting a horizontal axis as a length L of the predetermined direction D3 of the unit structure 10, and setting a vertical axis as a relative reflection phase when the electromagnetic waves are transmitted through the dielectric layer 5, reflected by the reflecting member 2 and emitted to the incident side of the electromagnetic wave by being transmitted through the dielectric layer 5 again, in the graph, a value of the relative reflection phase of the electromagnetic waves is over -360° and 0° or less, when a point corresponding to a central position of the predetermined direction D3 in each cell region and corresponding to the relative reflection phase of the electromagnetic waves in each cell region is plotted, and a straight line passing through a point corresponding to a minimum thickness cell region having a minimum thickness is drawn, each point is on a same straight line.

FIG. 16C is a graph setting a horizontal axis as the length L of the unit structure 10 of the dielectric layer 5 in the predetermined direction D3, and setting a vertical axis as a relative reflection phase when the electromagnetic waves are transmitted through the dielectric layer 5, reflected by the reflecting member 2 and emitted to the incident side of the electromagnetic wave by being transmitted through the dielectric layer 5 again, wherein a value of the relative reflection phase of the electromagnetic waves is over -360° and 0° or less; and it is an example of the relative reflection phase of electromagnetic waves in each cell region of the unit structure of the dielectric layer in the frequency selective reflector shown in FIGS. 16A and 16B. As shown in FIG. 16C, the relative reflection phases of electromagnetic waves in each cell region 11a to 11f of the unit structure 10 of the dielectric layer 5 are respectively 0°, -60°, -120°, -180°, -240°, and -300°, and the absolute value of the difference between the relative reflection phases of electromagnetic waves in neighboring cell regions is 60°. In this case, thicknesses t1 to t6 of six cell regions 11a to 11f of the unit structure 10 of the dielectric layer 5 are designed so that the absolute value of the difference between the relative reflection phases of the electromagnetic waves in neighboring cell regions become 360° divided by 6, that is 60°. Then, as shown in FIG. 16C, when a point corresponding to a central position of the predetermined direction D3 in each cell region 11a to 11f of the unit structure 10 of the dielectric layer 5 and corresponding to the relative reflection phase of the electromagnetic waves in each cell region 11a to 11f is plotted, and among each cell region 11a to 11f, a straight line (a solid line in the graph) passing through a point corresponding to minimum thickness cell region 11a having the minimum thickness t1 is drawn, each point is on a same straight line.

"Reflection phase" refers to the amount of change in phase of the reflected wave relative to the phase of the incident wave incident on a surface. However, in the frequency selective reflector including the reflecting member and the dielectric layer of the present aspect, "reflection phase" is referred to as the amount of change in phase of the reflected wave when the incident wave is transmitted through the dielectric layer, reflected by the reflecting member and is emitted through the dielectric layer by being transmitted through the dielectric layer again, with respect to the phase of the incident wave.

Also, in the frequency selective reflector including the reflecting member and the dielectric layer of present aspect, the term "relative reflection phase" is one in which, in one unit structure of the dielectric layer, when the reflection phase in the cell region where the delay of the reflection phase is the smallest is used as a reference, the delay of the reflection phase in a certain cell region with respect to the reflection phase of the reference is shown as a negative signal. For example, in one unit structure of the dielectric layer, when the reflection phase in the cell region where the delay of the reflection phase is the smallest is -10°, the relative reflection phase in the cell region where the reflection phase is -40°, is -30°.

When the reflecting member has a reflection phase control function as described below, the relative reflection phase of the electromagnetic wave in the cell region is a value obtained by synthesizing also the reflection phase at the reflecting member.

Also, in the frequency selective reflector including the reflecting member and the dielectric layer of present aspect, a "cell region" refers to a region in which the relative reflection phase of an electromagnetic wave is the same in the unit structure of the dielectric layer.

Note that, in the frequency selective reflector including the reflecting member and the dielectric layer of the present aspect, the reflection phase is in the range of over -360° to less than +360° unless otherwise noted, and -360° and +360° return to 0°. Also, in the frequency selective reflector including the reflecting member and the dielectric layer of the present aspect, the relative reflection phase is in the range of over -360° to 0°or less, unless otherwise noted, and -360° returns to 0°.

In a reflect array according to the related art in which a plurality of reflection elements arranged, for example, by adjusting the size and shape of the reflection element, the reflection phase can be delayed or the reflection phase can be advanced. On the other hand, in the frequency selective reflector of the present aspect, the reflection phase is basically delayed by adjusting the thickness of each cell region of the unit structure of the dielectric layer. For this reason, the relative reflection phase is based on the reflection phase in the cell region where the delay of the reflection phase is the smallest.

Also, usually, in one unit structure of the dielectric layer, the cell region where the delay of the reflection phase is the smallest is a minimum thickness cell region having a minimum thickness in a predetermined direction in which the thickness increases. In the above graph, a straight line is drawn through a point corresponding to the minimum thickness cell region having the minimum thickness.

As described above, in each cell region 11a to 11f of the unit structure 10 of the dielectric layer 5, the thickness t1 to t6 vary, thereby the round-trip optical path length in the dielectric layer 5 varies and the relative reflection phase of the electromagnetic waves varies; thus, the electromagnetic waves can be reflected to a direction different from the regular reflection (specular reflection) direction.

Therefore, in the frequency selective reflector of the present aspect, by varying the thickness of each cell region of the unit structure of the dielectric layer, the round-trip optical path length in the dielectric layer can be varied per cell region, and the reflection phase of the electromagnetic wave can be controlled. As a result, the reflection direction of the electromagnetic waves with respect to the predetermined incident direction can be controlled in any direction.

Further, the concave and convex structure of the dielectric layer in the present aspect is formed by various techniques such as cutting, laser processing, using a mold, 3D printer, and joining small piece parts. There is no need for a photomask unlike photolithographic processing of a metal layer in a reflect array according to related art. Thus, when the thickness of each cell region of the unit structure of the dielectric layer is designed and the dielectric layer can be formed so as to obtain reflection properties with the desired incident angle and reflection angle in accordance with the situation, the desired dielectric layer can be formed with comparatively low cost and short term, which easily meets a small quantity and variety of needs. In addition, for the thickness of the dielectric layer and the size of the unit structure of the dielectric layer that affect the control of the reflection properties, the range of possible processing is relatively wide, and thus, for example, the incident angle and the reflection angle of the electromagnetic waves can be increased, and the control region of the reflection properties can be widened. Furthermore, with respect to the thickness of the dielectric layer and the pitch of the cell region of the unit structure of the dielectric layer, the margin of dimensional processing accuracy for achieving the desired reflection phase is relatively wide, and thus the desired reflection properties can be easily obtained and the influence of dimensional variations can be reduced. Accordingly, it is easy to customize the reflection properties of the frequency selective reflector.

Also, in the frequency selective reflector of the present aspect, the reflecting member may be a frequency selective plate that reflects only a particular electromagnetic wave. For example, in FIGS. 16A and 16B, the reflecting member 2 is the one in which a plurality of ring-shaped reflection elements 3 arranged, and it includes dielectric substrate 4, and a plurality of reflection elements 3 arranged on the dielectric layer 5 side surface of the dielectric substrate 4.

Further, in the frequency selective reflector of the present aspect, the reflecting member may be a frequency selective plate that reflects only a particular electromagnetic wave, as well as a member including a reflection phase control function that controls the reflection phase of the electromagnetic wave. In such a reflecting member, by varying the size and shape of the reflection element, the resonant frequency per reflection element can be varied and the targeted reflection phase of the electromagnetic waves can be controlled. In this case, the reflection phase of the electromagnetic wave can be controlled not only by the thickness of the dielectric layer but also by the size and shape of the reflection element, and the degree of freedom of design for controlling the reflection properties can be improved.

Thus, in the frequency selective reflector of the present aspect, when such a reflecting member is used, the degree of freedom in controlling the reflection properties can be widened by combining with the dielectric layer. Therefore, customization of the reflection properties of the frequency selective reflector can be made easier. For example, an operation where the reflection properties in top and bottom directions may be prepared with multiple types of reflecting members and combined with a dielectric layer that adjusts the reflection properties in horizontal direction is one example.

The inventors of the present disclosure also simulated the reflection properties of electromagnetic waves in a particular frequency band when the reflecting member is a frequency selective plate including a reflection element that reflects only a particular electromagnetic wave in the frequency selective reflector including the reflecting member and the dielectric layer of the present aspect, and found that when the thickness of the cell region of the unit structure of the dielectric layer is varied to vary the round-trip optical path length in the dielectric layer per cell region, the deviation of the reflection phase was greater compared to the deviation of the reflection phase in the reflection element due to the proximity of the dielectric layer to the reflecting member (the frequency selective plate), and the design of substantial reflection properties can be substantially determined by the design of the concave and convex structure of the dielectric layer. At this time, the resonant frequency of the reflection element varies depending on the presence or absence of the adjacent dielectric layer, but if the design is performed on the premise that the dielectric layer is present, the practical problem is solved. Furthermore, the in-plane arrangement of the concave and convex structure of the dielectric layer to achieve an in-plane distribution design of the reflection phase in the frequency selective reflector need not be in a fixed positional relationship with respect to the in-plane arrangement of the reflection element of the reflecting member, and it has been found out that even if the concave and convex structure of the dielectric layer is shifted and arranged with respect to the in-plane arrangement of the reflection element, there is no significant effect on the reflection properties.

Thus, when the dielectric layer and the reflecting member as described above are combined and used in the frequency selective reflector of the present aspect, it is possible to design each of the dielectric layer and the reflecting member independently, and combine the two. In this case, a dielectric layer for achieving reflection properties according to the use environment may be made each time and a plurality of specifications may be prepared in advance. As a result, it is possible to more easily customize the design of the reflection direction of the frequency selective reflector that changes according to the use environment, and it becomes easy to apply to various situations. Incidentally, as described above, in the case of adjusting the total reflection properties of the frequency selective reflector by the combination of the respective reflection phase distributions of the reflecting member and the dielectric layer, the accuracy of the misalignment of the reflecting member and the dielectric layer according to the required specification is required, but when the reflection properties of the frequency selective reflector are adjusted only by the reflection phase distribution of the dielectric layer, the accuracy of the misalignment of the reflecting member and the dielectric layer is not required so much.

In the present embodiment, since the reflection direction vectors of electromagnetic waves in each of the divided regions differ from one another, the dielectric layer may include a plurality of kinds of unit structures of which reflection direction vectors of the electromagnetic waves differ from one another in accordance with the reflection properties of each of the divided regions. In the present aspect, each of the divided regions may include at least one unit structure, and may include a plurality of unit structures in which the reflection direction vectors of the electromagnetic waves are the same. Further, when the number of divided regions is increased and a gentle change in the reflection direction vector is designed on the entire surface of the frequency selective reflector, each of the divided regions may include at least one cell region.

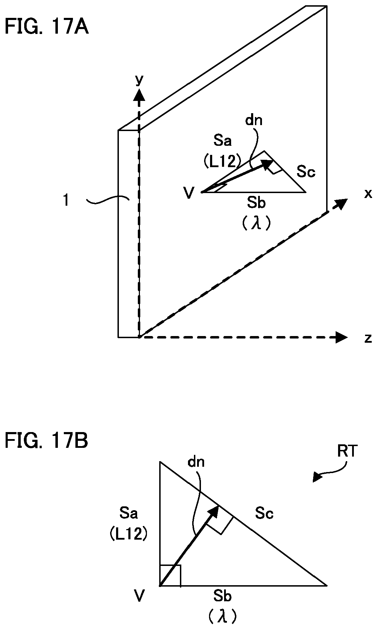

Here, in the present aspect, the reflection direction vector of the electromagnetic waves can be determined as follows. In the present aspect, the thickness of the cell region repeats increasing and decreasing in a certain direction. For example, in the reflecting member, when the dimension of the plurality of reflection elements is equal, the reflection direction vector may be determined by the length of the unit structure in the direction in which the thickness of the cell region increases and the wavelength of the electromagnetic wave. Specifically, first, the three-dimensional orthogonal coordinate system is assumed with reference to the horizontal direction (x-axis), the vertical direction (y-axis), and the normal direction (z-axis) assuming that the frequency selective reflector 1 is erected perpendicular to the ground (xz-plane), as shown in FIG. 6. The three-dimensional orthogonal coordinate system is a three-dimensional orthogonal coordinate system in which the surface of the frequency selective reflector 1 is the xy plane and the normal direction of the surface of the frequency selective reflector 1 is the z axis. Next, in the xy plane, the direction in which the dimension of the reflection element increases is determined. For example, in the case of FIGS. 16A and 16B, in the xy plane, the direction in which the thicknesses t1 to t6 of the cell regions 11a to 11f increase is shown as direction D12. Next, in the xy plane, the length of the unit structure in the direction in which the thickness of the cell region increases is determined. For example, in the case of FIGS. 16A and 16B, in the xy plane, a length of the unit structure 10 in the direction D12 in which the thicknesses t1 to t6 of the cell regions 11a to 11f increase is shown as length L12. Next, in the three-dimensional orthogonal coordinate system, the wavelength of the electromagnetic waves is taken parallel to the z-axis. Then, a right angled triangle is formed setting a start point of the unit structure in the direction in which the thickness of the cell region increases on the xy plane as a right angle apex, and the length of the unit structure in the direction in which the thickness of the cell region increases on the xy plane and the wavelength of the electromagnetic wave parallel to the z axis as adjacent sides. The normal direction of the hypotenuse of the right angled triangle is the reflection direction vector of the electromagnetic waves when the incident direction of the electromagnetic waves is parallel to the z-axis. For example, as shown in FIGS. 17A and 17B, in the three-dimensional orthogonal coordinate system, a right angled triangle RT is formed setting the start point of the unit structure in the direction in which the thickness of the cell region increases on the xy plane as a right angle apex V, and the length L12 of the unit structure in the direction in which the thickness of the cell region increases on the xy plane and the wavelength $\lambda$ of the electromagnetic wave parallel to the z axis as adjacent sides Sa and Sb. The normal direction dn of the hypotenuse Sc of the right angled triangle RT becomes the reflection direction vector of the electromagnetic waves when the incident direction of the electromagnetic waves is parallel to the z-axis.

Note that in FIGS. 16A, 16B and 17A, the direction D12 in which the thickness of the cell region increases is horizontal with the x-axis, but the direction in which the thickness of the cell region increases can be any direction in the xy-plane without being limited thereto.

Thus, in the present aspect, in other words:

an entire surface of the frequency selective reflector is divided into a plurality of divided regions, the plurality of divided regions includes a main region that is a divided region positioned in a center of the frequency selective reflector, and a plurality of sub regions being divided regions other than the main region, the plurality of sub regions is disposed around the main region,

the frequency selective reflector includes: a reflecting member reflecting the electromagnetic waves, and a dielectric layer that: is disposed at an incident side of the electromagnetic waves with respect to the reflecting member, includes a concave and convex structure in which a plurality of a unit structures including a thickness distribution of increasing thickness in a predetermined direction is arranged, and transmits the electromagnetic waves, wherein the unit structure of the dielectric layer includes a plurality of cell regions of which thickness differs from one another, and each of the divided regions includes at least one unit structure,

when assuming a three-dimensional orthogonal coordinate system in which a surface of the frequency selective reflector is defined as xy plane and a normal direction of the surface of the frequency selective reflector is defined as z-axis, and assuming a right angled triangle setting a start point of the unit structure in the direction in which the thickness of the cell region increases on the xy plane as a right angle apex, and a length of the unit structure in a direction in which the thickness of the cell region increases on the xy plane and the wavelength of the electromagnetic waves parallel to the z-axis as adjacent sides in the three-dimensional orthogonal coordinate system,

normal directions of a hypotenuses of the right angled triangle in the respective divided regions are different from each other, and

the normal directions of the hypotenuse of the right angled triangle in the respective sub regions are set so as to spread outward around the normal direction of the hypotenuse of the right angled triangle in the main region.

Also, when the relative reflection phase of the electromagnetic waves in each cell region of n pieces of the unit structures is set so that the n-wavelength components (phase difference: n * 360°) are shifted by the n unit structures as described below, the direction in which the thickness of the cell region of the unit structure increases is the same, and the unit structures having different lengths in the direction in which the thickness of the cell region o increases will be repeatedly arranged by n pieces. In such a case, a right angled triangle is assumed in which the start point of the unit structure in the direction in which the thickness of the cell region increases on the xy plane is defined as a right angle apex, and the sum of the lengths of n pieces of the unit structures in the direction in which the thickness of the cell region increase on the xy plane and the n times the wavelength of the electromagnetic waves parallel to the z-axis are defined as adjacent sides.

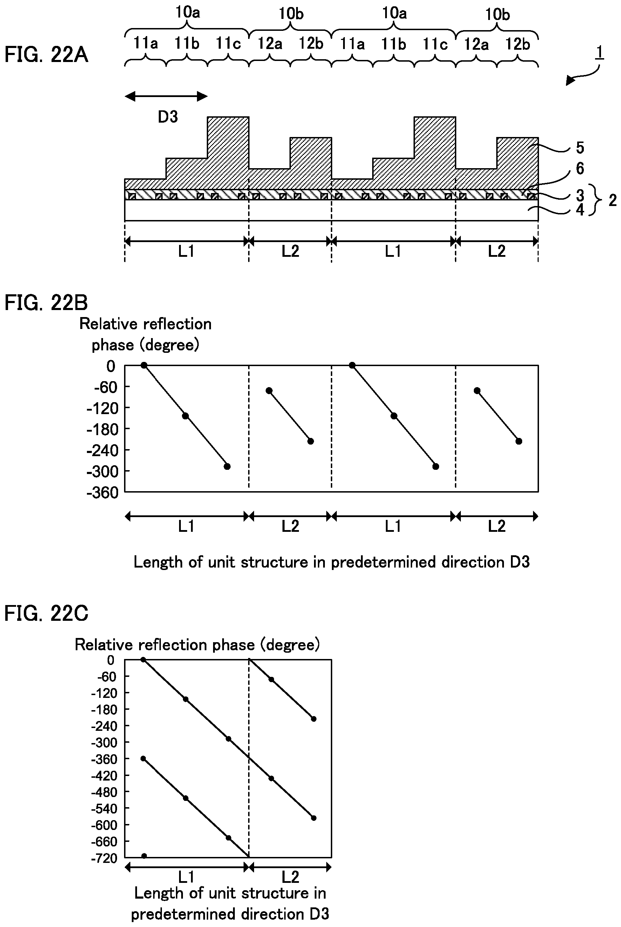

For example, in FIG. 22, the relative reflection phases of the electromagnetic waves in the respective cell regions of two unit structures 10a and 10b are set so as to be shifted by two wavelengths (phase difference: 720°) by the two pieces of unit structures. At this time, a right angled triangle may be assumed, wherein the left end of the unit structure 10a as the start point of the unit structure in the direction in which the thickness of the cell region increases on the xy plane is defined as a right angle apex , the sum of the lengths of the two unit structures 10a and 10b in the direction in which the thickness of the cell regions increase on the xy plane , which isL1 + L2, and twice the wavelength of the electromagnetic waves parallel to the z-axis are defined as adjacent sides.

In the following, each configuration of the frequency selective reflector of the present aspect will be described.

(a) Dielectric layer

The dielectric layer in the present disclosure is a member that is disposed at an incident side of the electromagnetic waves with respect to the reflecting member; includes a concave and convex structure in which a plurality of unit structures including a thickness distribution of increasing thickness in a predetermined direction is arranged; and transmits the electromagnetic waves in a particular frequency band. Also, the unit structure of the dielectric layer includes a plurality of cell regions of which thickness differs from one another; and in each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic wave by being transmitted through the dielectric layer again, in the graph, a value of the relative reflection phase of the electromagnetic waves is over -360° and 0° or less, when a point corresponding to a central position of the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line. Also, the dielectric layer includes, as the unit structure, at least a unit structure including three or more of the cell regions of which thickness differs from one another.

(i) Structure of dielectric layer

The dielectric layer includes a concave and convex structure in which a plurality of unit structures including a thickness distribution of increasing thickness in a predetermined direction is arranged.

The unit structure of the dielectric layer includes a plurality of cell regions of which thickness differs from one another; and in each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic wave by being transmitted through the dielectric layer again, in the graph, a value of the relative reflection phase of the electromagnetic waves is over -360° and 0° or less, when a point corresponding to a central position of the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line.

It should be noted that when each point is on the same straight line, the difference in the vertical axis direction of each point with respect to the straight line is within ±72°. The difference in the vertical axis direction of each point relative to the straight line is preferably within ±54°, more preferably within ±36°, and further more preferably within ±18°. In the case where each point includes a deviation in the vertical axis direction with respect to the straight line, and a straight line passing through each point is difficult to be drawn, "a straight line connecting a point (relative reflection phase 0°) corresponding to a minimum thickness cell region having a minimum thickness and a point (assumed that relative reflection phase -360°) corresponding to a minimum thickness cell region having a minimum thickness in a unit structure adjacent to the unit structure" is considered.

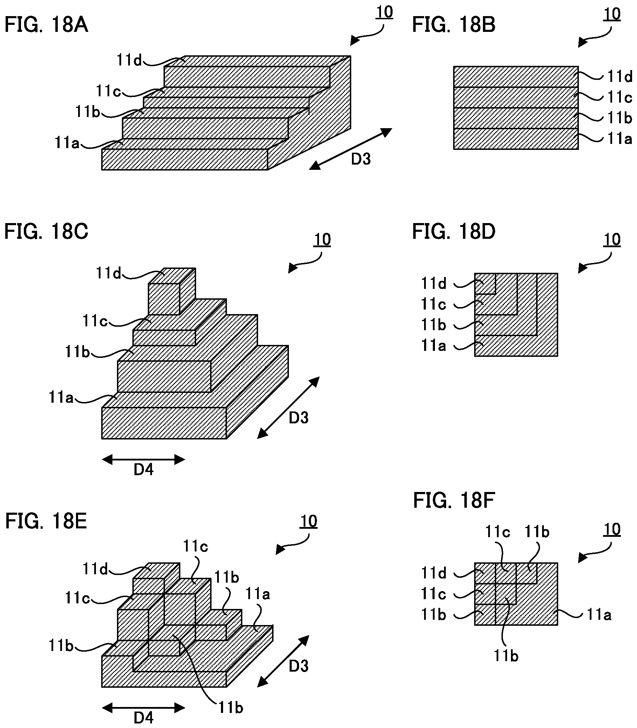

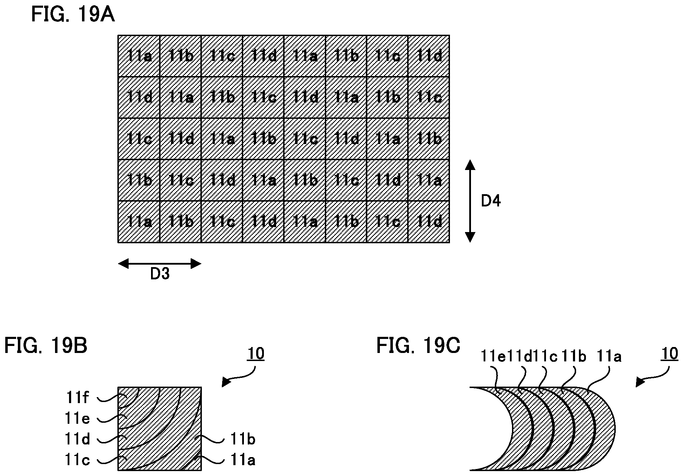

The unit structure of the dielectric layer includes a thickness distribution of increasing thickness in a predetermined direction. The unit structure of the dielectric layer may, for example, include a thickness distribution in which the thickness increases in only one direction, or may include a thickness distribution in which the thickness increases in two directions of a first direction and a second direction perpendicular to the first direction. For example, FIG. 18A is an example in which the unit structure 10 of the dielectric layer includes a thickness distribution in which the thickness increases only in the first direction D3, and FIGS. 18C, 18E, and 19A are examples of a thickness distribution in which the thickness of the unit structure 10 of the dielectric layer increases in the first direction D3 and the second direction D4.

If the unit structure of the dielectric layer includes a thickness distribution that increases in thickness only in one direction, then each point will be on the same straight line when plotting the above points in the graph with the length of the unit structure in one direction as the horizontal axis. Also, when the unit structure of the dielectric layer includes a thickness distribution in which the thickness increases in two directions perpendicular to each other, each point is on the same straight line in each graph when the points are plotted in the graph in which the length of the unit structure in the two directions is respectively the horizontal axis.

In one unit structure of the dielectric layer, the absolute value of the relative reflection phase difference of the electromagnetic waves in neighboring cell regions is less than 180°, preferably 120° or less, and more preferably 60° or less. The smaller the absolute value of the difference in the relative reflection phase of the electromagnetic waves in neighboring cell regions, the smoother the wavefront of the reflected waves. Also, the absolute value of the difference of the relative reflection phase of the electromagnetic waves in neighboring the cell regions is over 0°.

When the maximum thickness cell region having the maximum thickness in one unit structure and the minimum thickness cell region having the minimum thickness in the other unit structure are adjacent to each other in the adjacent unit structure, on the basis of reflection phase in the cell region where the delay of reflection phase in one unit structure is the smallest, when the relative reflection phase of the electromagnetic wave in the minimum thickness cell region having the minimum thickness in the other unit structure is set to be over -720° and -360° or less shifted by one cycle, the absolute value of the difference between the relative reflection phase of the electromagnetic wave in the maximum thickness cell region having the maximum thickness in one unit structure and the relative reflection phase of the electromagnetic wave in the minimum thickness cell region having the minimum thickness in the other unit structure is less than 180°, preferably 120° or less, and more preferably 60° or less. The smaller the absolute value of the difference in the relative reflection phase of the electromagnetic waves in these neighboring cell regions, the smoother the wavefront of the reflected waves. Also, the absolute value of the difference in the relative reflection phase of electromagnetic waves in these neighboring cell regions is over 0°. For example, in FIG. 16C, in the adjacent unit structures 10a and 10b, the relative reflection phase of the electromagnetic wave in the maximum thickness cell region 11f having the maximum thickness t6 of one unit structure 10a is -300°, and the relative reflection phase of the electromagnetic wave in the minimum thickness cell region 11a having the minimum thickness t1 of the other unit structure 10b is -360°, and the absolute value of a difference between the relative reflection phase of the electromagnetic waves in the maximum thickness cell region 11f having the maximum thickness t6 of one unit structure 10a and the relative reflection phase of the electromagnetic waves in the minimum thickness cell region 11a having the minimum thickness t1 of the other unit structure 10b, is 60°.

Also, in one unit structure of the dielectric layer, the difference of the relative reflection phase of the electromagnetic waves in neighboring cell regions is preferably equal. For example, as shown in FIG. 16B, if the unit structure 10 of the dielectric layer 5 includes six cell regions, each of the difference of the relative reflection phases of the electromagnetic waves in the neighboring cell regions 11a and 11b, the difference of the relative reflection phases of the electromagnetic waves in the neighboring cell regions 11b and 11c, the difference of the relative reflection phases of the electromagnetic waves in the neighboring cell regions 11c and 11d, the difference of the relative reflection phases of the electromagnetic waves in the neighboring cell regions 11d and 11e, and the difference of the relative reflection phases of the electromagnetic waves in the neighboring cell regions 11e and 11f, are preferably equal. For example, in FIG. 16C, all of the absolute values of differences in the relative reflection phases of electromagnetic waves in neighboring cell regions are 60° and equal.

In addition, when the maximum thickness cell region having the maximum thickness in one unit structure and the minimum thickness cell region having the minimum thickness in the other unit structure are adjacent to each other in the adjacent unit structure, on the basis of the reflection phase in the cell region where the delay of the reflection phase in one unit structure is the smallest, when the relative reflection phase of the electromagnetic wave in the minimum thickness cell region having the minimum thickness in the other unit structure is set to be over - 720° and -360° or less shifted by one cycle, the difference in the relative reflection phases of the electromagnetic waves in neighboring cell regions are preferably equal not only in all the cell regions in one unit structure but also including the minimum thickness cell region having the minimum thickness in the other unit structure. For example, in FIG. 16C, in adjacent unit structures 10a and 10b, the relative reflection phases of electromagnetic waves in each cell region 11a to 11f of one unit structure 10a are respectively 0°, -60°, -120°, -180°, -240°, and -300°, and the relative reflection phase of electromagnetic waves in the minimum thickness cell region 11a having the minimum thickness t1 of the other unit structure 10b is -360°and in all the cell regions 11a to 11f in one unit structure 10a, and including the minimum thickness cell region 11a having the minimum thickness t1 in the other unit structure 10b, the absolute values of difference in the relative reflection phases of the electromagnetic waves in neighboring cell regions are all 60° and equal.

Also, in one unit structure of the dielectric layer, an absolute value of a difference between the relative reflection phase of the electromagnetic waves in the minimum thickness cell region having the minimum thickness, and the relative reflection phase of the electromagnetic waves in the maximum thickness cell region having the maximum thickness, is less than 360°. Also, in one unit structure of the dielectric layer, an absolute value of a difference between the relative reflection phase of the electromagnetic waves in the minimum thickness cell region having the minimum thickness, and the relative reflection phase of the electromagnetic waves in the maximum thickness cell region having the maximum thickness needs to be more than 180°, and is preferably 300° or more and less than 360°. For example, as shown in FIG. 16B, when the unit structure 10 of the dielectric layer 5 includes six cell regions, in one unit structure 10, an absolute value of a difference between the relative reflection phase of the electromagnetic waves in the minimum thickness cell region 11a having the minimum thickness t1, and the relative reflection phase of the electromagnetic waves in the maximum thickness cell region 11f having the maximum thickness t6, is preferably less than 360°. For example, in FIG. 16C, in one unit structure 10 of the dielectric layer 5, the relative reflection phase of the electromagnetic wave in the minimum thickness cell region 11a having the minimum thickness t1 is 0°, the relative reflection phase of the electromagnetic wave in the maximum thickness cell region 11f having the maximum thickness t6 is -300°, and the absolute value of the difference between the relative reflection phase of the electromagnetic wave in the minimum thickness cell region 11a having the minimum thickness t1 and the relative reflection phase of the electromagnetic wave in the maximum thickness cell region 11f having the maximum thickness t6 is 300°.

The size of the unit structure of the dielectric layer, specifically the length of the unit structure in a predetermined direction in which the thickness increases, is appropriately set according to the target reflection properties. The length of the unit structure in a predetermined direction in which the thickness increases allows the reflection angle to be adjusted because the one wavelength (phase difference: 360°) will be shifted. For example, by shortening the length of the unit structure in a predetermined direction in which the thickness increases, the difference of the reflection angle with respect to the regular reflection angle can be increased, while the difference of the reflection angle with respect to the regular reflection angle can be reduced by increasing the length of the unit structure in a predetermined direction in which the thickness increases.

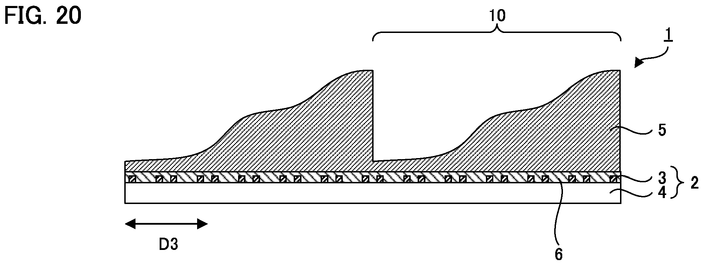

Also, the cross-sectional shape of the unit structure of the dielectric layer may be, for example, a stepped shape in which the thickness stepwise increases in a predetermined direction, or a tapered shape in which the thickness gradually increases in a predetermined direction. FIG. 16B is an example in which the unit structure 10 of the dielectric layer 5 has a stepped shape. FIG. 20 is an example in which the unit structure 10 of the dielectric layer 5 has a tapered shape.

The unit structure of the dielectric layer includes a plurality of cell regions having different thicknesses, but if the cross-sectional shape of the unit structure of the dielectric layer has a tapered shape, the number of cell regions in the unit structure can be considered to be infinite. In this case, the thickness distribution of the unit structure is designed so that the relative reflection phase of the electromagnetic wave in each cell region is set as described above.

Further, since the dielectric layer includes a plurality of unit structures including a thickness distribution, the pattern shape in a planar view of the unit structure may be a shape that can be arranged without a gap, and examples of the shape may include a rectangular shape, a regular hexagon shape. For example, FIGS. 18A to 18F and 19A are examples in which the pattern shape in the planar view of the unit structure 10 of the dielectric layer is rectangular.

In the unit structure of the dielectric layer, the difference in the round-trip optical path lengths in neighboring cell regions is designed such that the relative reflection phase of the electromagnetic waves in each cell region is set as described above, and the thickness of each cell region is set such that the difference in thickness of neighboring cell regions is the difference in the round-trip optical path lengths in the neighboring cell regions described above. The thickness of each cell region is appropriately set according to the wavelength of the electromagnetic wave, the dielectric constant of the material of the dielectric layer, and the intended reflection properties. For example, if the effective wavelength of the electromagnetic wave passing through the dielectric layer is $\lambda_g$ and the thickness of the base is $\alpha$, the thickness of each cell region is preferably about $\alpha + 0\lambda_g$ or more and $\alpha + 2\lambda_g$ or less. The thickness $\alpha$ of the base may be the same as the minimum thickness of the minimum thickness cell region having the minimum thickness in one unit structure of the dielectric layer. Although the thickness $\alpha$ of the base is appropriately set in consideration of the overall strength, ease of formation, etc., it is preferable that the thickness $\alpha$ of the base is typically about $0.1 \lambda_g$ or less, in view of the influence to the electromagnetic waves. Specifically, when the wavelength $\lambda_0$ in the air of the electromagnetic wave is 10 mm and the dielectric constant of the dielectric layer is 2.57, the thickness of each cell region is preferably 0 mm or more and 8.6 mm or less. When the thickness of the cell region is 0 mm, it means that the cell region located on the reflecting member is not formed with a dielectric layer.

In the unit structure of the dielectric layer, the pitch and width of the cell region are appropriately set.

Also, when the reflecting member is a member in which a plurality of reflection elements is arranged, the pitch of the cell region of the unit structure of the dielectric layer may be the same as or different from the pitch of the reflection element of the reflecting member. If the pitch of the cell region of the unit structure of the dielectric layer is the same as the pitch of the reflection element of the reflecting member, the designing is easy. Also, for example, by narrowing the pitch of the cell region of the unit structure of the dielectric layer while keeping the difference in the relative reflection phase of the electromagnetic wave in the neighboring cell regions, the control region of the reflection properties can be widened regardless of the pitch of the reflection element of the reflecting member.

Also, in one unit structure of the dielectric layer, the pitch of the cell regions is preferably equal.

The pitch of the cell region refers to the distance from the center of one cell region to the center of the neighboring cell region.

Also, in one unit structure of the dielectric layer, the width of the cell regions in a predetermined direction in which the thickness increases, is preferably equal.

In the unit structure of the dielectric layer, the pattern shape of the cell region in plan view includes, for example, a stripe shape, one shape of the concentric square divided into four equal parts by straight lines perpendicular to each other and parallel to the sides, a microarray shape, a concentric quadrant, which is one shape of a concentric circle divided into four equal parts by diameter perpendicular to each other, a curved stepped shape, or the like. For example, FIG. 18B is an example of the stripe shape, FIG. 18D is an example of one shape of the concentric square divided into four equal parts by straight lines perpendicular to each other and parallel to the sides, FIG. 18F and FIG. 19A are examples of the microarray shape, FIG. 19B is an example of the concentric quadrant, and FIG. 19C is an example of the curved stepped shape. Note that FIG. 18B is a top view of FIG. 18A, FIG. 18D is a top view of FIG. 18C, and FIG. 18F is a top view of FIG. 18E. Further, when these illustrated unit structures are arranged without gaps, there is no particular restriction in the direction of the arrangement; for example, a rectangular unit structure may be arranged on the entire surface in a state of being rotated clockwise by 30 degrees in a plan view, and the unit structure may be selected and arranged at an appropriate angle and an appropriate arrangement direction according to the required reflection properties' design.

The unit structure of the dielectric layer includes a plurality of cell regions. In one unit structure of the dielectric layer, the number of cell regions is, for example, 3 or more and preferably 6 or more. The greater the number of cell regions in one unit structure of the dielectric layer, the smaller the difference in the relative reflection phase of the electromagnetic waves in neighboring cell regions, and the wavefront of the reflected waves can be smoothed. Also, the larger the number of cell regions in one unit structure of the dielectric layer, the more preferable, and there is no upper limit thereto. When the cross-sectional shape of the unit structure is stepped shape, the number of cell regions corresponds to the number of steps in the stepped shape. Also, when the cross-sectional shape of the unit structure is tapered shape, the tapered shape can be regarded as having an infinite number of cell regions, as described above.

As described above, the dielectric layer includes a plurality of kinds of unit structures of which reflection direction vector of the electromagnetic waves differs from one another according to the reflection properties of the main region and each of the sub regions. Also, in the present aspect, the main region and each of the sub region may respectively include at least one unit structure, and may include a plurality of unit structures of which reflection direction vector of the electromagnetic waves is equal.

In the unit structure, the reflection properties can be varied by, for example, varying at least one of the length of the unit structure in the direction in which the thickness increases, the thickness distribution, the number of cell regions, the width of the cell region, the pitch of the cell region, the pattern shape in the plan view of the unit structure, and the pattern shape in the plan view of the cell region.

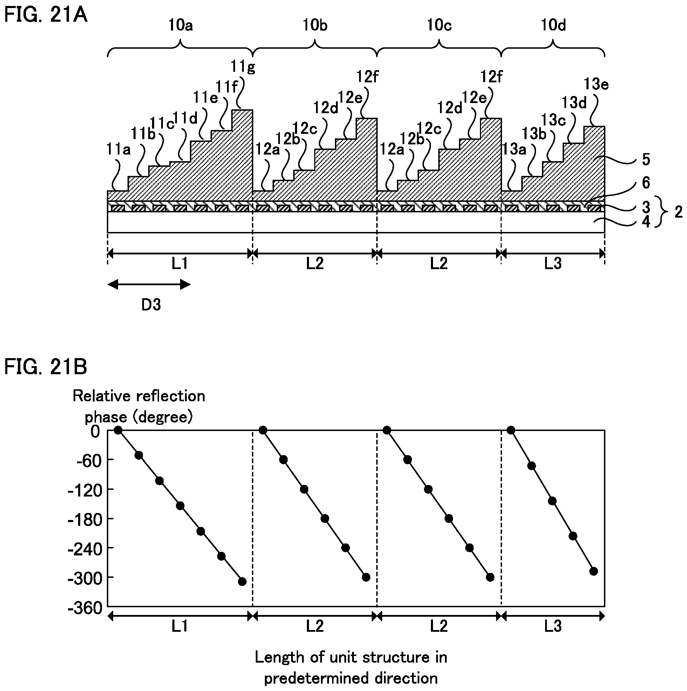

For example, examples of the aspect of the dielectric layer may include the one that includes a plurality of mutually different unit structures arranged therein, the length of the unit structure in the direction, in which the thickness increases, is different, and the pattern shape in the planar view of the cell region is striped. For example, in FIG. 21A, the dielectric layer 5 includes three kinds of unit structures 10a, 10b, 10c and 10d, of which reflection properties differ from one another, and in the unit structures 10a, 10b, 10c and 10d, the length L1, L2, and L3 of the unit structure in the predetermined direction D3 are different from each other, and the number of cell regions 11a to 11g, 12a to 12f, and 13a to 13e are different from each other. Thus, as shown in FIG. 21B, the relative reflection phases of the electromagnetic waves in each cell region 11a to 11g of the unit structure 10a are 0°, -51.4°, -103°, -154°, -206°, -257°, -309°, respectively; the relative reflection phases of the electromagnetic waves in each cell regions 12a to 12f of the unit structures 10b and 10c are 0°, -60°, -120°, -180°, -240°, -300°, respectively; the relative reflection phases of the electromagnetic waves in each cell regions 13a to 13e of the unit structure 10d are 0°, -72°, -144°, -216°, -288°, respectively; and the unit structures 10a, 10b, 10c and 10d have different reflection properties. Also, although not illustrated, the pattern shapes in the planner view of the cell regions 11a to 11g, 12a to 12f, and 13a to 13e are striped. In this case, the polar angle θ of the reflection direction of the electromagnetic waves can be increased in the order of the unit structures 10a < 10b = 10c < 10d. In the above described case, the unit structures 10b and 10c are the main regions, and the unit structures 10a and 10c are the sub regions.

Also, in the dielectric layer, the relative reflection phase of the electromagnetic waves in each cell region of n pieces of unit structures may be set so as to be shifted by n wavelengths (phase difference: n * 360°) by the n pieces of unit structures. Note that n is an integer greater than or equal to 2. FIGS. 22A to 22C are examples in which the dielectric layer 5 includes two kinds of unit structures 10a and 10b different from each other, and the relative reflection phases of the electromagnetic waves in the cell regions 11a to 11c, 12a to 12b of the two unit structures 10a and 10b are set so as to be shifted by two wavelengths (phase difference: 720°) by the two unit structures 10a and 10b. FIG. 22B is a graph in which the range of the relative reflection phase of the electromagnetic wave is denoted as over -360° and 0° or less. FIG. 22C is a graph in which the range of the relative reflection phase of the electromagnetic wave is over -720° and 0° or less, and a point at which substantially the same phase of the relative reflection phase is shifted by 360°, is complimented. In these unit structures 10a and 10b, the length L1 and L2 of the unit structure in a predetermined direction D3 are different from each other, and the number of cell regions 11a to 11c, 12a to 12b are different from each other.

In the above case, one unit structure 10a includes three cell regions 11a to 11c, while the other unit structure 10b includes two cell regions 12a and 12b. The dielectric layer includes, as the unit structure, at least a unit structure including three or more cell regions of which thickness differs from one another, but may further include a unit structure including two cell regions of which thicknesses differ from each other as described above.

Also, in each of the divided regions, a plurality of unit structures may be arranged by appropriately selecting the thickness distribution of the dielectric layer so that the normal vector of the same phase surface of the reflected wave relative to the incident wave incident at a certain incident angle becomes the desired reflection direction vector, but for example, when the incident wave is reflected as a so-called plane wave which reflects the incident wave to a single direction, it is preferable that, in each of the divided regions, a plurality of only the unit structures having the same reflection properties is arranged therein, the length of the unit structure in the direction in which the thickness increases is the same, and the pattern shape in the planar view of the cell region is more preferably striped.

Note that, although FIG. 16A shows an arrangement in which the longitudinal direction of the stripes of the cell region is parallel to the shorter direction of the frequency selective reflector, but the arrangement is not limited thereto; in an actual frequency selective reflector, the longitudinal and shorter directions of the stripes of the cell region are set according to the design of the reflection properties.

When the incident wave and the reflected wave are plane waves, the dielectric layer includes a periodic structure in which the unit structure is repeatedly arranged. The term "periodic structure" refers to a structure in which a unit structure is periodically repeatedly arranged. In the unit structure in the periodic structure, in the unit structure having the same reflection properties, the length of the unit structure in the direction in which the thickness increases, the thickness distribution, the number of cell regions, the width of cell region, the pitch of cell region, the pattern shape in the plan view of the unit structure, the pattern shape in the plan view of the cell region, and the like can be made the same. Also, in the case where the dielectric layer has a periodic structure, the unit structures including different reflection properties can be combined as described above. In that case, the reflection properties of the unit structure to be combined are appropriately designed according to the target reflection properties, and specifically, the length of the unit structure in a direction in which the thickness increases, thickness distribution, the number of cell regions, the width of cell region, the pitch of cell region, the pattern shape of the unit structure in plan view, the pattern shape of the cell region in plan view, etc. in the unit structure to be combined are appropriately set according to the target reflection properties.

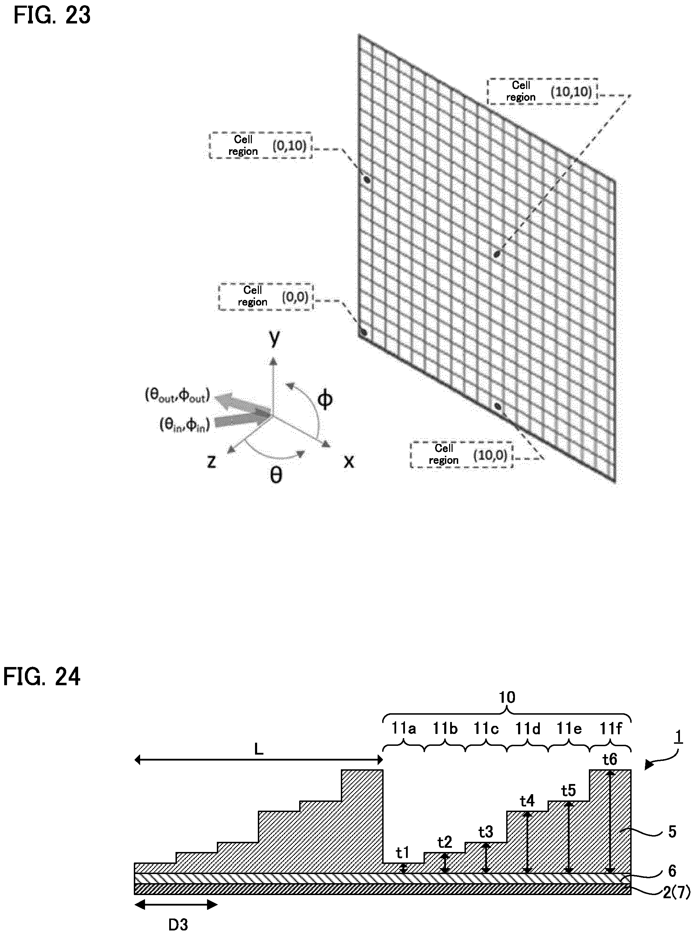

In general, a reflective characteristic design in which a plane wave is reflected as a plane wave to a direction different from the regular reflection direction, for example, can be designed by, after resolving into incident and reflection properties as the in-plane x-direction and in-plane y-direction of the reflective plate, converting them to a reflective phase distribution in the x-direction and the y-direction, and incorporating them as the thickness distribution of the unit structure. As shown in FIG. 23, a part of the frequency selective reflector in which a cell region of the same size capable of individually adjusting a reflection phase is arranged to 10 * 10 (i = 10, j = 10), is described as an example. It should be noted that at this time, the size of 10 * 10 of the cell region is not necessarily the size of the unit structure. The reflection phase $\delta_{i,j}$ determined in the cell region of the (i,j) position when the plane wave incident from the direction of the incident angle ($\theta_{in}$, $\varphi_{in}$) is reflected by the plane wave in the direction of the reflection angle ($\theta_{out}$, $\varphi_{out}$) is given by following equation.

$$\delta_{i,j} = 2\Pi \{p * i (\sin\theta_{out}*\cos\phi_{out} - \sin\theta_{in}*\cos\phi_{in}) + p*j* (\sin\theta_{out}*\sin\phi_{out} - \sin\theta_{in}*\sin\phi_{in}) \} / \lambda$$

Here, in the above equation, indicated are:

$\delta_{i,j}$: the reflection phase of the cell region in the (i,j) position with respect to phase center (0, 0)
$\lambda$: wavelength [m] of the reflected wave
p: size of the cell region [m]
$\theta_{in}$: $\theta$ slope of incident wave
$\varphi_{in}$: $\varphi$ slope of incident wave
$\theta_{out}$: $\theta$ slope of reflected wave
$\varphi_{out}$: $\varphi$ slope of reflected wave.

The dielectric layer may be a single layer or multiple layers. The dielectric layer may also include a substrate portion that can be a base and a concave and convex portion disposed on the substrate portion. Also, the dielectric layer may be a single member in which all cell regions are integrally formed, and may be one in which the individual cell regions are formed separately, and the block-like cell regions are arranged.

(ii) Properties of the dielectric layer

The dielectric layer transmits electromagnetic waves in a particular frequency band and may or may not transmit electromagnetic waves in other frequency bands.

The dielectric loss tangent of the dielectric layer is preferably relatively small. The low dielectric loss tangent of the dielectric layer can reduce dielectric loss and reduce high frequency losses. Specifically, the dielectric loss tangent of the dielectric layer with respect to the electromagnetic wave of the target frequency is preferably 0.01 or less. Also, the dielectric loss tangent of the dielectric layer is the smaller the more preferable, and the lower limit value is not particularly limited.

Also, the dielectric constant of the dielectric layer is preferably relatively high. With the high dielectric constant of the dielectric layer, the effect of reducing the thickness of the dielectric layer can be expected. Specifically, the dielectric constant of the dielectric layer in the electromagnetic wave of the target frequency is preferably 2 or more, more preferably 2.5 or more, and further more preferably 3 or more when the difference in the reflection angle with respect to the regular reflection angle is increased.

The dielectric loss tangent and the dielectric constant of the dielectric layer are measured by a resonator method. The dielectric loss tangent and the dielectric constant of the dielectric layer are measured in accordance with JIS C 2138:2007.

(iii) Material of dielectric layer

The material of the dielectric layer is not particularly limited if it is a dielectric capable of transmitting a predetermined electromagnetic wave, and a resin, glass, quartz, ceramics, or the like can be used. In view of the ease of forming the concave and convex structure, the resin is suitable among them.

Although the resin is not particularly limited if it is capable of transmitting a predetermined electromagnetic wave, it is preferably the one that absorption of the electromagnetic wave is relatively low and the transmittance of the electromagnetic wave is relatively high. Also, the resin preferably satisfies the aforementioned dielectric loss tangent, and more preferably satisfies the aforementioned dielectric constant. Such resins may include polycarbonates, acrylic resins, ABS resins, PLA resins, olefinic resins, copolymers thereof, and the like. In particular, the polycarbonate is suitable since it is excellent in dimensional stability and low in high frequency loss.

Also, the dielectric layer may further contain a filler. The dielectric layer may contain a filler to adjust the dielectric constant and mechanical strength of the dielectric layer. The dielectric constant of the filler is preferably higher than the dielectric constant of the resin. This can increase the dielectric constant of the dielectric layer and reduce the thickness of the required dielectric layer. The high dielectric constant filler is not particularly limited, and examples thereof may include inorganic particles such as glass, silica, barium titanate; and fine fibers.

The filler material, shape, size, and content may be appropriately chosen from the desired dielectric constant, mechanical strength, and difficulty of dispersibility, etc. The size of the filler needs to be sufficiently smaller than the effective wavelength of the electromagnetic wave that passes through the dielectric layer, and if the effective wavelength of the electromagnetic wave is $\lambda_g$, the diameter of the filler sphere is preferably 0.01 $\lambda_g$ or less. However, it tends to be difficult to uniformly disperse as the size of the filler approaches the nanometer order, the load of the processing process may increase. In addition, the content of the filler in the dielectric layer varies depending on the combination of the material of the dielectric and the filler, the shape of the filler, the size of the filler, and the like, and is appropriately adjusted.

When the concave and convex structure of the dielectric layer is formed by molding or the like using a mold, for example, a release agent, an antistatic agent, or the like may be added to the dielectric layer. These can be used as appropriately selected from those generally used. In addition, it is preferable that the dielectric layer does not contain additives or fillers such as carbon black and metal particles that impart electrical conductivity.

(iv) Method for forming dielectric layer

The method for forming the dielectric layer is not particularly limited if a predetermined concave and convex structure can be formed, and examples thereof may include cutting a resin sheet, laser processing, using a mold and vacuum casting, a 3D printer, and joining small piece parts. In the case of a forming method that does not use a mold, such as cutting, laser processing, and 3D printers, since customization according to the target reflection angle is easy, and thus it can be suitably used for tuning the design when designing and developing a large-scaled frequency selective reflector of which a special installation simulation and simulation are difficult. In the case of using a mold, it may be shaped on a substrate made of a dielectric, where the substrate and the shaped resin in this case may be materials that are different from each other if they are materials that transmit a predetermined electromagnetic wave. Also, for example, in the case of designing and manufacturing the reflecting member and the dielectric layer separately, by preparing a plurality of kinds of dielectric layers having reflection properties to have a predetermined incident angle and reflection angle in advance, selecting the kind of the dielectric layer according to the situation, and rotating the dielectric layer in the plane with the normal direction as an axis with respect to the reflecting member, when a fine adjustment of the reflection direction of the electromagnetic wave is performed, the dielectric layer of the same specification can be made more cost effectively, and in that case, the method of using a mold is suitable.

(b) Reflecting member

The reflecting member in the present aspect is a member that reflects electromagnetic waves in a particular frequency band.

The reflecting member is not particularly limited if it reflects electromagnetic waves in a particular frequency band, and for example, it may reflect only electromagnetic waves in a particular frequency band, or it may reflect not only electromagnetic waves in a particular frequency band but also electromagnetic waves in other frequency bands. In particular, the reflecting member preferably includes a wavelength selecting function that reflects only electromagnetic waves in a particular frequency band.

The reflecting member that reflects electromagnetic waves in a particular frequency band as well as other frequency bands may include a reflective layer disposed on the entire surface of the frequency selective reflector. For example, FIG. 24 is an example in which the reflecting member 2 is a reflective layer 7. In FIG. 24, the reflective layer 7 is disposed on the entire surface of the frequency selective reflector 1.

The material of the reflective layer is not particularly limited if it is a material capable of reflecting electromagnetic waves in a particular frequency band, and examples thereof may include a conductive material such as a metal material and ITO.

The thickness of the reflective layer is not particularly limited if a thickness is capable of reflecting electromagnetic waves in a particular frequency band, and it is appropriately set.

In addition, the reflecting member that reflects only the electromagnetic waves of a particular frequency band may be the one that includes a wavelength selecting function that reflects only electromagnetic waves in the electromagnetic waves of a particular frequency band, and examples thereof may include a frequency selective plate.

Incidentally, the frequency selective plate is in the same contents as those described in the first embodiment above. For example, FIG. 16B is an example in which the reflecting member 2 is a frequency selective plate, and the reflecting member 2 includes a dielectric substrate 4 and a plurality of reflection elements 3 arranged on a surface of the dielectric substrate 4 that is the dielectric layer 5 side.

The shape and the configuration of the reflection element are also in the same contents as those described in the first embodiment above.

The frequency reflective plate, that is, the reflecting member preferably includes a reflection phase control function controlling a reflection phase of the electromagnetic waves. In such a reflecting member, by varying the size and shape of the reflection element, the resonant frequency per reflection element can be varied and the reflection phase of the electromagnetic waves can be controlled. Therefore, when the frequency selective plate has a reflection phase control function, the reflection properties of the electromagnetic wave can be controlled by controlling the reflection phase distribution of the electromagnetic wave based on the thickness of the dielectric layer and the size and shape of the reflection element. Thus, for example, the reflection properties in two orthogonal directions (such as x-axis direction and y-axis direction) in the plane of the frequency selective reflector can be individually designed with the frequency selective plate and the dielectric layer, and the reflection properties of the desired electromagnetic wave can be obtained while suppressing the thickness of the dielectric layer.

General frequency selective surfaces may be applied as a frequency selective plate having a reflection phase control function. It is possible to vary the reflection phase of the electromagnetic wave by varying the size and shape of these reflection element.

The different sizes of the reflection element are appropriately selected depending on the shape of the reflection element.

(c) Control of reflection direction of electromagnetic waves

In the frequency selective reflector of the present aspect, by varying the thickness of each cell region of the unit structure of the dielectric layer, the reciprocal optical path length in the dielectric layer can be varied per cell region, and the relative reflection phase of the electromagnetic wave can be controlled. Thereby, by adjusting the size and the plan view pattern of the unit structure of the dielectric layer as well as the number and thickness of the cell regions of the unit structure of the dielectric layer, the reflection direction of the electromagnetic wave incident from the predetermined direction can be controlled.

In addition, when the reflecting member is a frequency selective plate and is a member having a reflection phase control function, by varying the thickness of each cell region of the unit structure of the dielectric layer, the round-trip optical path length in the dielectric layer can be varied per cell region, and also, by varying the size and shape of the reflection element of the reflecting member, the resonance frequency per reflection element can be varied to control the reflection phase of the electromagnetic wave; thereby, the degree of freedom of design related to the reflection characteristic control can be increased.

In this case, it is also possible to divide the reflection control direction in the reflecting member and the reflection control direction in the dielectric layer, and perform two-dimensional reflection direction control in the entire frequency selective reflector. Also, when the reflection control directions in the reflecting member and the dielectric layer are overlapped, for example, a reflection phase distribution to be reflected in a certain direction to some degree can be achieved by the reflecting member, and further fine adjustment can be performed in the dielectric layer. In this case, there is an advantage that the thickness of the dielectric layer can be reduced.

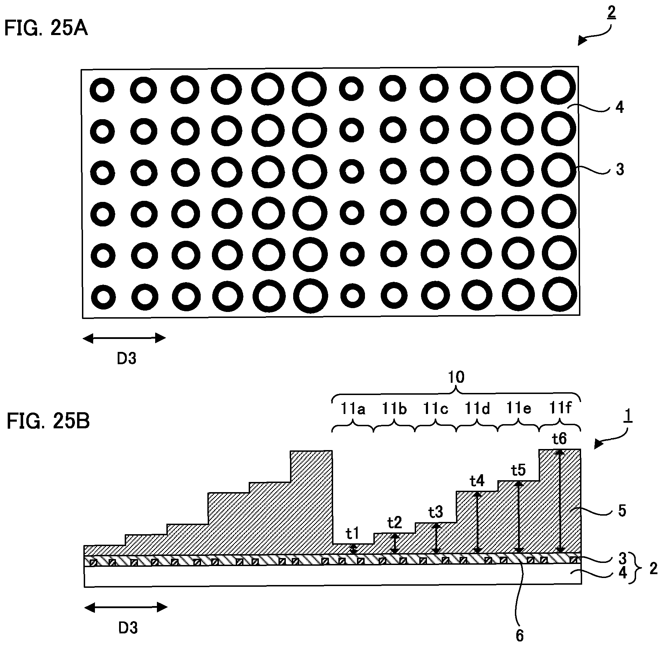

As the arrangement of the thickness distribution of the dielectric layer and the size distribution of the reflection element of the reflecting member, for example, as shown in FIGS. 25A and 25B, the dielectric layer 5 and the reflecting member 2 can be arranged so that the thickness of the cell regions 11a to 11f of the unit structure 10 of the dielectric layer 5 becomes thicker as the size of the reflection element 3 of the reflecting member 2 increases. In such an aspect, the thickness of the dielectric layer can be reduced. This makes it possible to reduce the weight and cost of the frequency selective reflector because the dielectric layer is thin, and to make the reflected wave less likely to hit the dielectric layer even when the reflection angle increases.

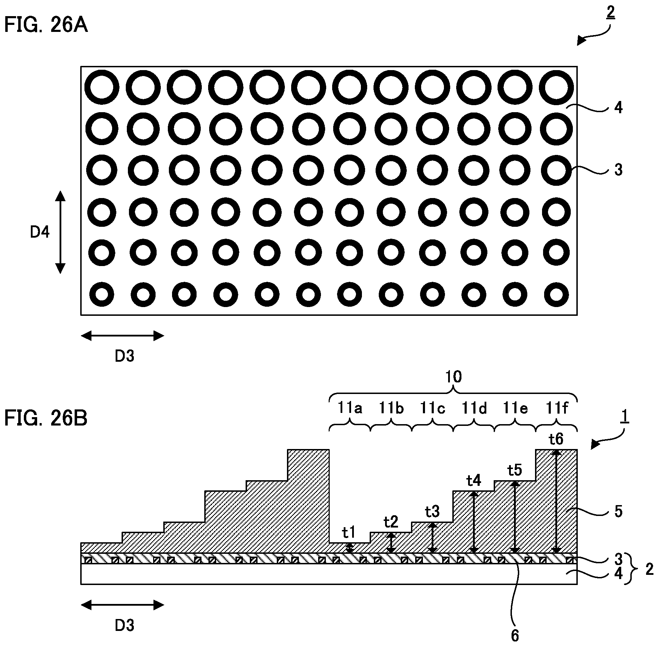

As an arrangement of the thickness distribution of the dielectric layer and the size distribution of the reflection element of the reflecting member, for example, as shown in FIGS. 26A and 26B, the dielectric layer 5 and the reflecting member 2 may be arranged such that the size of the reflection element 3 of the reflecting member 2 is increased along the direction D4, and the thickness of the cell regions 11a to 11f of the unit structure 10 of the dielectric layer 5 becomes thicker along a direction D3 perpendicular to the direction D4.

Incidentally, in FIG. 26, since the sizes of the reflection element are different in one cell region, the relative reflection phase of the electromagnetic wave in one cell region is partially different according to the sizes of the reflection element. Even in such a case, when cut out in a predetermined direction D3 in which the thickness increases, each point is on the same straight line in the graph described above.

Also, in the case of a specification in which the reflecting member and the dielectric layer are separately designed and combined, the reflection direction of the electromagnetic wave can be finely adjusted by rotating the dielectric layer in the plane with the normal direction as an axis with respect to the reflecting member to adjust the orientation of the cell region of the unit structure of the dielectric layer relative to the reflecting member.

Also, in the unit structure of the dielectric layer, the reflection properties can be controlled by adjusting the length of the unit structure in a predetermined direction in which the thickness increases. For example, by shortening the length of the unit structure in a predetermined direction in which the thickness increases, the reflection angle of the electromagnetic waves can be increased. On the other hand, by increasing the length of the unit structure in a predetermined direction in which the thickness increases, the reflection angle of the electromagnetic waves can be reduced.

The length of the unit structure in a predetermined direction in which the thickness increases in the unit structure of the dielectric layer refers to the length of the unit structure in the predetermined direction when the unit structure of the dielectric layer includes a thickness distribution in which the thickness increases in the predetermined direction. For example, in FIG. 24, in the unit structure 10 of the dielectric layer 5, the thickness increases in a predetermined direction D3, and the length of the unit structure 10 in this predetermined direction D3 is L.

Incidentally, as described above, the in-plane arrangement of the concave and convex structure of the dielectric layer that achieves the in-plane distribution design of the reflection phase in the frequency selective reflector does not need to be in a fixed positional relationship with respect to the in-plane arrangement of the reflection element of the reflecting member, and even if the concave and convex structure of the dielectric layer is shifted and arranged relative to the in-plane arrangement of the reflection element, there is no significant effect on the reflection properties. Thus, when the reflecting member is a frequency selective plate and is a member having a reflection phase control function, it is possible to independently design the dielectric layer and the reflecting member, respectively.

(d) Other configurations

The frequency selective reflector of the present aspect may include other configurations as required in addition to the reflecting member and the dielectric layer described above.

(i) Adhesive layer

The frequency selective reflector of the present aspect may include an adhesive layer between the reflecting member and the dielectric layer. The adhesive layer may bond the reflecting member and the dielectric layer. Further, when the reflecting member is a member in which a plurality of reflection elements arranged, the adhesive layer may flatten the unevenness of the reflection element, and may suppress the influence of unevenness caused by the reflection element when the dielectric layer is laminated on the reflecting member. For example, in FIG. 16B, an adhesive layer 6 is disposed between the reflecting member 2 and the dielectric layer 5.

The adhesive layer may be, for example, an adhesive agent or a pressure-sensitive adhesive agent, and may be appropriately selected from known adhesive agents and pressure-sensitive adhesive agents. In that case, the adhesive agent or the pressure-sensitive adhesive agent needs to be a non-conductor. In addition, when the adhesive agent or the pressure-sensitive adhesive agent is in a liquid state, it is preferable that the one can be uniformly spread and have a fluidity to the extent capable of removing the biting of bubbles. In addition, when the adhesive agent or the pressure-sensitive adhesive agent is in the form of a sheet, the thickness is preferably uniform, and it is preferable to have flexibility to the extent capable of following the unevenness of the bonding interface and suppressing the biting of bubbles.

The thickness of the adhesive layer is preferably uniform and in thickness to provide the desired adhesive force. Also, when the reflecting member is a member in which a plurality of reflection elements arranged, the thickness of the adhesive layer is preferably equal to or greater than the thickness of the reflection element from the point of planarization. When the adhesive layer is thicker than the thickness of the reflection element, the reflection element is embedded in the adhesive layer. Preferably, the thickness of the adhesive layer is sufficiently smaller than the effective wavelength of the target electromagnetic wave, and when the effective wavelength of the electromagnetic wave is $\lambda_g$, specifically, it is preferably 0.01 $\lambda_g$ or less.

(ii) Space

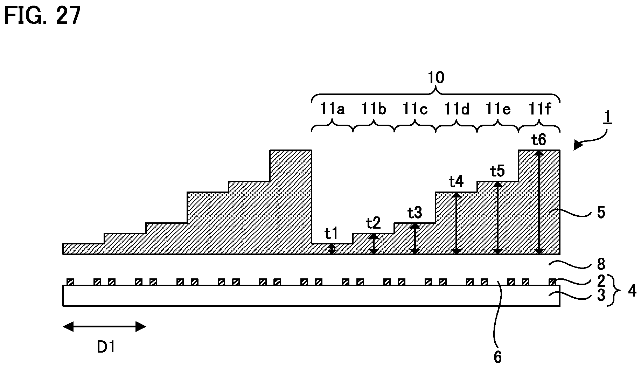

The frequency selective reflector of the present aspect may include a space between the reflecting member and the dielectric layer. For example, in FIG. 27, a space 8 is arranged between the reflecting member 2 and the dielectric layer 5.

When a space is arranged between the reflecting member and the dielectric layer, the distance between the reflecting member and the dielectric layer is preferably constant. This makes it possible to align the optical path lengths in the space.

(iii) Cover member

The frequency selective reflector of the present aspect may include a cover member on a surface of the dielectric layer that is opposite to the reflecting member. The cover member can protect the dielectric layer. Design can also be imparted by the cover member.

(iv) Ground layer

The frequency selective reflector of the present aspect may include a ground layer on a surface of the reflecting member that is opposite to the dielectric layer. The ground layer can block interference with objects present on the backside of the frequency selective reflector and suppress the occurrence of noise. The ground layer may also be a part of the reflecting member that does not have wavelength selectivity. As the ground layer, a conductive layer such as a metal plate, a metal mesh, and an ITO film is used.

(v) Planarizing layer

The frequency selective reflector of the present aspect may include a planarizing layer between the reflecting member and the dielectric layer. When the reflecting member is a member in which a plurality of reflection elements arranged, the planarizing layer can flatten the unevenness of the reflection elements, and can suppress the influence of the unevenness due to the reflection elements when the dielectric layer is laminated on the reflecting member. It should be noted that the planarizing layer referred to herein is the one disposed separately from the adhesive layer, and example thereof may be an ionizing radiation cured resin layer disposed in the state of embedding the reflection element. Further, when a space is provided between the reflecting member and the dielectric layer, the planarizing layer may be provided with a function of protecting the reflection element.

(vi) Fixing layer

When the frequency selective reflector of the present aspect is used by being attached to, for example, a wall or the like, a fixing layer having a mechanism for attaching the frequency selective reflector may be disposed on the reflecting member in an opposite side to the dielectric layer. In order to inhibit interference among the fixing layer, the reflecting member and the dielectric layer, a metal layer may also be disposed between the fixing layer and the reflecting member, and the fixing layer may also serve as a metal layer. In addition, when the frequency selective reflector of the present aspect is attached to a wall or the like, the fixing layer may have a mechanism for making the angle in the normal direction of the frequency selective reflector variable so that the deviation between the designed incident direction and the reflection direction of the designed electromagnetic wave, and the incident direction and the reflection direction of the actual electromagnetic wave can be corrected.

(vii) Anti-reflective layer

Because of the impact of reflections at the dielectric layer interface in the case of high frequencies, in the frequency selective reflector of the present aspect, an anti-reflective layer may be disposed in the interface between the dielectric layer and the air. The anti-reflective layer may have, for example, a multilayer structure having a different dielectric constant, and may include a concave and convex structure smaller than the effective wavelength of the electromagnetic wave.

(3) Another aspect of frequency selective reflector

The frequency selective reflector of the present embodiment may be a variable frequency selective reflector that makes the reflection direction of the electromagnetic waves variable by controlling the reflection phase of the electromagnetic waves by electrical control or mechanical control, as described above. The present embodiment can be achieved even in the case of such a variable frequency selective reflector. Known types of frequency selective reflectors may be applied as the variable frequency selective reflector.

3. Other points of frequency selective reflector

The size of the frequency selective reflector of the present embodiment is appropriately selected according to factors such as the reflection properties of the target entire frequency selective reflector, the reflection properties of each divided region, the placement of each divided region, the planar view shape of each divided region, and size of each divided region.

Specifically, the overall size of the frequency selective reflector can be designed as follows. First, the physical area $S_0$ of the frequency selective reflector, that is the area capable of reflecting the electromagnetic waves of the power required for the desired receive area, is calculated by formula (3) below from the radar cross-sectional area RCS of the frequency selective reflector capable of reflecting the electromagnetic waves of power required for the desired receive area, when the frequency selective reflector does not include the divided regions, which means it includes only the main region.

[Formula 1]

$$S_0 = \lambda \times \sqrt{\frac{RCS}{4 \times \pi \times k}} \qquad (3)$$

In the formula (3), $S_0$ represents a physical area ($m^2$) of the frequency selective reflector when the frequency selective reflector does not include the divided regions, RCS represents a radar cross-sectional area of the flat plate, $\lambda$ represents a wavelength (m) of the electromagnetic waves, and k represents an electric reflection rate (1 for an ideal metal) of the frequency selective reflector when the frequency selective reflector does not include the divided regions.

Next, when the frequency selective reflector does not include the divided regions, the full width at half maximum FWHM of the reflected beam profile by the frequency selective reflector is calculated by formula (2) below.

$$\text{FWHM[rad]} = \lambda/(0.8 * D) \text{ to } \lambda/(0.6 * D) \qquad (2)$$

In the formula (2), $\lambda$ represents a wavelength of the electromagnetic waves, and D represents a diameter of the frequency selective reflector. Also, in the formula (2), when the diameter D of the frequency selective reflector is rewritten by the physical area $S_0$ of the frequency selective reflector, it will be the following formula (4).

[Formula 2]

$$FWHM[rad] = \frac{\lambda}{0.8 \times 2 \times \sqrt{\frac{S_0}{\pi}}} \sim \frac{\lambda}{0.6 \times 2 \times \sqrt{\frac{S_0}{\pi}}} \qquad (4)$$

When the frequency selective reflector does not include the divided regions, that is when it includes only the main region and when the full width at half maximum FWHM of the reflected beam profile by the frequency selective reflector does not satisfy the desired receiving area, a design of configuring the frequency selective reflector with a plurality of divided regions, that is, a design of adding a plurality of sub regions to the main region is performed.

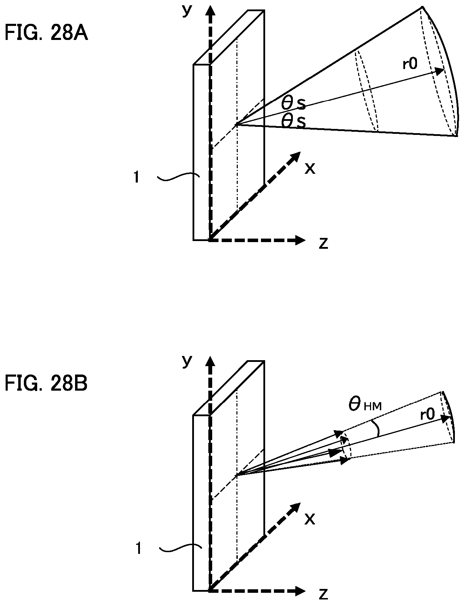

Also, the full width at half maximum FWHM of the reflected beam profile corresponds to solid angle Sr of the reflected beam. For example, as shown in FIG. 28A, when the reflected beam by the entire frequency selective reflector 1 is conically spread at $\pm\theta r$ with respect to the reflection direction vector r0 of the electromagnetic waves in the main region, the solid angle Sr of the cone where the spread from the reflection direction vector of the electromagnetic waves in the main region is $\pm\theta s$, is determined by the following formula (5):

$$Sr = 2\pi(1 - \cos\theta s) \qquad (5).$$

Also, as shown in FIG. 28B, in the case where the reflected beam by the entire frequency selective reflector 1 spreads in a conical shape with respect to the reflection direction vector r0 of the electromagnetic waves in the main region, and when the reflected beam of the entire frequency selective reflector 1 is a reflected beam including a reflection direction vector of the electromagnetic waves that becomes half or more of the reflection intensity of the reflection direction vector r0 of the electromagnetic waves in the main region, the solid angle $Sr_{HM}$ of the cone is determined by the following formula (6):

$$Sr_{HM} = 2\pi(1 - \cos\theta_{HM}) \qquad (6).$$

In the formula (6), in the reflected beam by the entire frequency selective reflector, $\theta_{HM}$ represents an angle formed by the reflection direction vector r0 of the electromagnetic waves in the main region and the reflection direction vector of the electromagnetic waves that becomes half of the reflection intensity of the reflection direction vector r0 of the electromagnetic waves in the main region, and is represented by the following formula (7) :

$$\theta_{HM} = FWHM/2 \qquad (7).$$

Thus, the area $S_1$ of the frequency selective reflector of the present embodiment preferably satisfies the following formula (1):

$$S_1 \geq S_0 * Sr_1/Sr_0 \qquad (1);$$

in the formula (1), $S_1$ is an area ($m^2$) of the frequency selective reflector of the present embodiment, $Sr_1$ is a solid angle of a reflected beam meeting a desired receive area of the electromagnetic waves, $S_0$ is an area ($m^2$) of the frequency selective reflector capable of reflecting the electromagnetic waves of the power required for a desired receive area when the frequency selective reflector does not include the divided regions, and $Sr_0$ is a solid angle of the reflected beam by the frequency selective reflector whose area is $S_0$ when the frequency selective reflector does not include the divided regions.

Also, in the case where the frequency selective reflector does not include the divided regions, and when the full width at half maximum FWHM of the reflected beam profile by the frequency selective reflector of which area is $S_0$ does not satisfy the desired receiving area, that is when the frequency selective reflector does not include the divided regions, in the case where the solid angle $Sr_0$ of the reflected beam by the frequency selective reflector of which area is $S_0$ does not satisfy the desired receiving area, and when the area $S_1$ of the frequency selective reflector of the present embodiment is designed to be n times of $S_0$, it is preferable to satisfy the following formula (8-1), more preferable to satisfy the following formula (8-2), an further preferable to satisfy the following formula (8-3):

$$Sr_0*n / Sr_1 \geq 1 \qquad (8-1);$$

$$Sr_0*n / Sr_1 \geq 1.5 \qquad (8-2);$$

and

$$Sr_0*n / Sr_1 \geq 2 \qquad (8-3).$$

The frequency selective reflector of the present embodiment is applicable in either case of when the incident wave is the plane wave or when the incident wave is the spherical wave. In the frequency selective reflector of the present embodiment, for example, it is possible that the incident plane wave is reflected as the plane wave; the incident spherical wave is reflected as the spherical wave; and the incident spherical wave is reflected as the plane wave.

The frequency selective reflector of the present embodiment reflects electromagnetic waves in a particular frequency band to a direction different from a regular reflection direction. The frequency band of the electromagnetic waves is preferably a frequency band of microwave or more of which straightness is strong. The frequency band of the electromagnetic waves is, for example, preferably 2.5 GHz or more, more preferably 24 GHz or more, and further preferably 24 GHz or more and 300 GHz or less. If the frequency band of the electromagnetic waves is in the above range, the frequency selective reflector of the present embodiment can be utilized for the fifth generation mobile communication system, so-called 5G.

The frequency selective reflector of the present embodiment can be used, for example, as a frequency selective reflector for communication, and is suitable as a frequency selective reflector for mobile communication, among others.

II. Second embodiment

The frequency selective reflector of the present embodiment is a frequency selective reflector reflecting electromagnetic waves in a particular frequency band to a direction different from a regular reflection direction, wherein an entire surface of the frequency selective reflector is divided into a plurality of divided regions; reflection direction vectors of the electromagnetic waves in the respective divided regions are different from each other; and the reflection direction vectors of the electromagnetic waves in the respective divided regions are set so as to spread outward around a main reflection direction vector of electromagnetic waves derived from a sum of the reflection direction vectors of the electromagnetic waves in the respective divided regions.

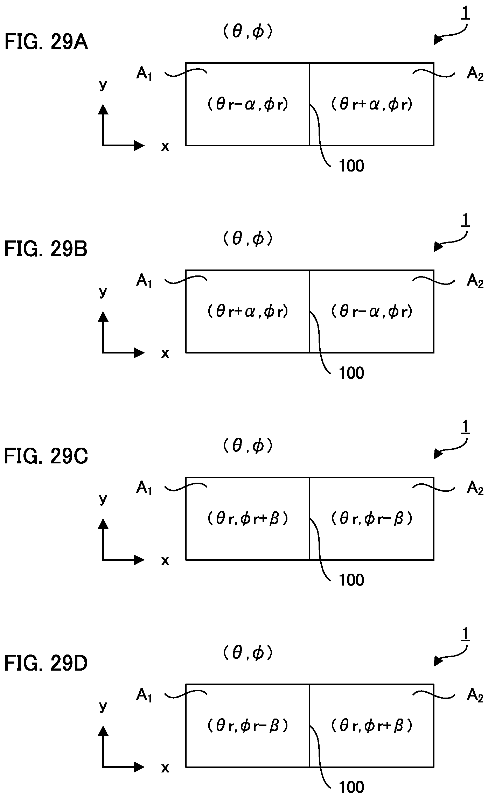

FIGS. 29A to 29D are schematic plan views showing an example of the frequency selective reflector of the present embodiment. As shown in FIGS. 29A to 29D, an entire surface of the frequency selective reflector 1 is divided into a plurality of divided regions. In the example shown in FIGS. 29A to 29D, the frequency selective reflector 1 includes two divided regions $A_1$ to $A_2$.

Also, FIGS. 29A to 29D show an example of the reflection properties of each divided region in the frequency selective reflector. For example, as shown in FIG. 6, when the frequency selective reflector 1 is erected vertically to the ground (XZ plane) and viewed from the electromagnetic wave reflection side, the left corner is defined as the origin, the horizontal direction is defined as the x-axis, the vertical direction is the y-axis, the reflection side normal direction is defined as the z-axis, and the polar angle of the reflection direction vector $d_r$ of the electromagnetic waves is defined as $\theta$ and the azimuth angle is defined as $\varphi$.

When the main reflection direction vector of the electromagnetic waves is inclined from the divided region $A_1$ to the divided region $A_2$ side ($\varphi = 0°$ direction), as shown in FIG. 29A, when the polar angle of the main reflection direction vector of the electromagnetic waves is denoted as $\theta_r$, and the azimuth angle is denoted as $\varphi_r$, it is $(\theta_r-\alpha, \varphi_r)$ in the divided region $A_1$, and it is $(\theta_r+\alpha, \varphi_r)$ in the divided region $A_2$.

The displacement amount of the polar angle and the azimuth angle of the reflection direction vector of the electromagnetic waves in each of these divided regions vary depending on which direction the main reflection direction vector of the electromagnetic waves is inclined with respect to the plane of the frequency selective reflector. FIG. 29B is an example of the case where the main reflection direction vector of the electromagnetic waves is inclined from the divided region $A_2$ to the divided region $A_1$ side ($\varphi = 180°$). FIG. 29C is an example of the case where the main reflection direction vector of the electromagnetic waves is inclined from the divided regions $A_1$, $A_2$ to the upper side of the paper ($\varphi = 90°$). FIG. 29D is an example of the case where the main reflection direction vector of the electromagnetic waves is inclined from the divided regions $A_1$, $A_2$ to the down side of the paper ($\varphi = 270°$) .

Note that $\alpha$ and $\beta$ are positive numbers. The values and codes of these $\alpha$ and $\beta$ are merely a measure when the reflection direction vector of the electromagnetic waves is represented by polar coordinates, and they change depending on the main reflection direction vector of the electromagnetic waves and the setting of the spread of the reflection direction vector of the electromagnetic waves in the entire frequency selective reflector.

In nature, the reflection direction vectors of the electromagnetic waves in the respective divided regions are set so as to spread outward around the main reflection direction vector of the electromagnetic waves, and the angle $\theta$ds formed by the reflection direction vector of the electromagnetic waves between the adjacent divided regions is preferably set to be within a predetermined range, as described below.

In FIGS. 29A to 29D, the overlapping of the reflected beams by each of the divided regions $A_1$ to $A_2$ forms one main lobe (main beam) in the reflected beam profile by the entire frequency selective reflector 1, and the beam width of the reflected wave by the entire frequency selective reflector 1 can be widened. This allows the area irradiated with the reflected beam by the frequency selective reflector to be widened.

It should be noted that, as is related technology, if the frequency selective reflector does not include the divided regions and includes only the main region such as the one in the first embodiment, for example, increasing the size of the frequency selective reflector in principle increases the gain, and sharpens the reflected beam by the frequency selective reflector. In this case, since the beam width of the reflected wave by the frequency selective reflector becomes narrow, the area irradiated with the reflected beam by the frequency selective reflector becomes narrow.

In the present embodiment, since the frequency selective reflector is divided into a plurality of divided regions, and the size of each divided region decreases, the beam width of the reflected wave by each divided region becomes wider, although the gain is reduced to some extent. Further, since the reflection direction vectors of the electromagnetic waves in each of the divided regions delicately different from each other, and the reflection direction vectors of the electromagnetic waves in the respective divided regions are set so as to spread outward around a main reflection direction vector of electromagnetic waves, the overlapping of the reflected beams by each of the divided regions can widen the beam width of the reflected wave by the entire frequency selective reflector. Thus, it is possible to widen the area irradiated with the reflected beam reflected by the frequency selective reflector.

Each configuration of the frequency selective reflector of the present embodiment will be hereinafter explained.

1. Divided region

An entire surface of the frequency selective reflector of the present embodiment is divided into a plurality of divided regions.

The placement of each of the divided regions is appropriately selected according to factors such as the reflection properties of the entire target frequency selective reflector, the reflection properties of each of the divided regions, the planar view shape of each of the divided regions.

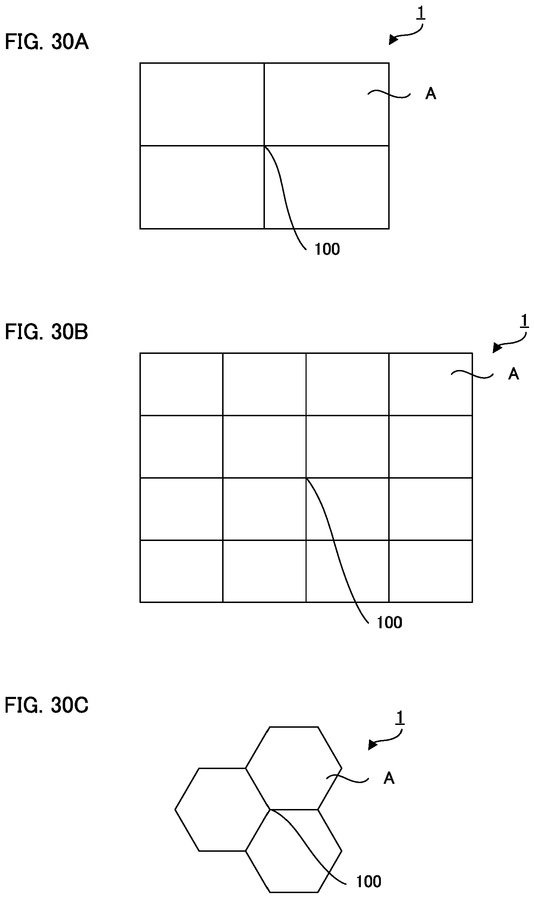

In particular, each divided region is preferably disposed point-symmetrically with respect to the center of the frequency selective reflector. This makes it easier to widen the beam width of the reflected wave by the entire frequency selective reflector. For example, in FIGS. 29A to 29B, two divided regions $A_1$ to $A_2$ are disposed point-symmetrically with respect to center 100 of the frequency selective reflector 1. Also, for example, in FIG. 30A, four divided regions A are disposed point-symmetrically with respect to the center 100 of the frequency selective reflector 1. In FIG. 30B, sixteen divided regions A are disposed point-symmetrically with respect to the center 100 of the frequency selective reflector 1. In FIG. 30C, three divided regions A are disposed point-symmetrically with respect to the center 100 of the frequency selective reflector 1.

The planar view shape of each of the divided regions can be the same as those of the first embodiment described above.

The number of the divided regions is plural, and appropriately selected according to factors such as the reflection properties of the entire target frequency selective reflector, the reflection properties of each of the divided regions, the placement of each of the divided regions, the planar view shape of each of the divided regions, and the size of each of the divided regions. When the size of the overall frequency selective reflector is constant, the more the number of the divided regions, the smaller the size of the divided regions. As the size of the divided regions decreases, disturbance of the reflected beam profile by the entire frequency selective reflector is suppressed and the side lobe tends to be low in the reflected beam profile. In this case, a broad reflected beam can be stably obtained.

Also, in the present embodiment, the reflection direction vectors of the electromagnetic waves in each of the divided regions are different from each other. Specifically, in each divided region, at least one of the polar angle and the azimuth angle of the reflection direction vector of the electromagnetic waves may be different.

In addition, in the adjacent divided regions, the angle formed by the reflection direction vector of the electromagnetic waves is preferably relatively small. In each divided region, the reflection direction vector of the electromagnetic waves gradually changes, so that the disturbance of the reflected beam profile by the entire frequency selective reflector is suppressed, and the side lobe tends to be low in the reflected beam profile. In this case, a broad reflected beam can be stably obtained.

In the adjacent divided regions, at least one of the polar angle and the azimuth angle of the reflection direction vector of the electromagnetic waves may be different.

The angle θds formed by the reflection direction vectors of the electromagnetic waves in adjacent divided regions can be the same as those in the first embodiment described above.

Also, in each of the divided regions, the angles formed by the reflection direction vectors of the electromagnetic waves in adjacent divided regions may be the same or different, but they are typically the same.

Also, in the present embodiment, the reflection direction vectors of the electromagnetic waves in the respective divided regions are set so as to spread outward around a main reflection direction vector of electromagnetic waves derived from a sum of the reflection direction vectors of the electromagnetic waves in the respective divided regions. The reflection direction vectors of the electromagnetic waves in the respective divided regions are thus set so that the beam width of the reflected wave by the entire frequency selective reflector can be widened.

The main reflection direction vector of the electromagnetic waves is derived from the sum of the reflection direction vectors of the electromagnetic waves in each of the division region, and is the direction of the synthesis vector of the unit vector representing the reflection direction of the electromagnetic waves in each of the division region. In the present embodiment, the main reflection direction vector of the electromagnetic waves reflected as the whole frequency selective reflector can be regarded as being reflected from the center of the frequency selective reflector.

The reflection direction vector of each of the divided regions may be set so that the reflection direction vector of the electromagnetic waves in each of the divided regions in the plane of the frequency selective reflector spreads outward around the main reflection direction vector of the electromagnetic waves. The reflection direction vector of the electromagnetic waves in each of the divided regions can be set by the polar angle and the azimuth angle of the reflection direction vector of the electromagnetic waves. The angle formed by the reflection direction vectors of the electromagnetic waves in adjacent divided regions is preferably gradually changed within the range of the angle formed by the reflection direction vectors of the electromagnetic waves in the above described adjacent divided regions.

Also, in the present embodiment, a full width at half maximum of a reflected beam profile in a graph, in which a deviation angle from a main reflection direction vector of the electromagnetic waves is a horizontal axis and a reflection intensity of the electromagnetic waves of the frequency selective reflector is a vertical axis, may be the same as that of the first embodiment described above.

Also, the size of each of the divided regions is appropriately selected according to the factors such as the reflection properties of the entire target frequency selective reflector, the reflection properties of each of the divided regions, the placement of each of the divided regions, the planar view shape of each of the divided regions, and the number of divided regions. The size of each of the divided regions may be less than or equal to 1/2 of the size of the frequency selective reflector. Further, the other points of the size of each of the divided regions can be the same as those of the first embodiment described above.

2. Configuration of frequency selective reflector

The configuration of the frequency selective reflector of the present embodiment can be the same as that of the first embodiment described above.

(1) First aspect of frequency selective reflector

The first aspect of the frequency selective reflector of the present embodiment is the same as the first aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions;
the frequency selective reflector includes a reflecting member that: reflects the electromagnetic waves; and includes a reflection phase control function that controls the reflection phase of the electromagnetic waves; in the reflecting member, a plurality of unit structures including a plurality of reflection elements of which dimension differs from one another is arranged; and each of the divided regions includes at least one unit structure;
when assuming a three-dimensional orthogonal coordinate system in which a surface of the frequency selective reflector is defined as xy plane and a normal direction of the surface of the frequency selective reflector is defined as z-axis, and assuming a right angled triangle setting a start point of the unit structure in the direction in which the dimension of the reflection element increases on the xy plane as a right angle apex, and a length of the unit structure in a direction in which the dimension of the reflection element increases on the xy plane and the wavelength of the electromagnetic waves parallel to the z-axis as adjacent sides in the three-dimensional orthogonal coordinate system; normal directions of hypotenuses of the right angled triangles in the respective divided regions are different from each other; and the normal directions of the hypotenuses of the right angled triangles in the respective divided regions are set so as to spread outward around the main reflection direction vector of the electromagnetic waves derived from the sum of the vectors of the normal directions of the hypotenuses of the right angled triangles in the respective divided regions.

Note that the length of the vector in the normal direction of the hypotenuse of the right angled triangle in each of the divided regions is defined as a unit vector, and the direction of the main reflection direction vector of the electromagnetic waves is determined by the sum of the unit vectors.

(2) Second aspect of frequency selective reflector

The second aspect of the frequency selective reflector of the present embodiment is the same as the second aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions;
the frequency selective reflector includes: a reflecting member reflecting the electromagnetic waves; and a dielectric layer that: is disposed at an incident side of the electromagnetic waves with respect to the reflecting member; includes a concave and convex structure in which a plurality of a unit structures including a thickness distribution of increasing thickness in a predetermined direction is arranged; and transmits the electromagnetic waves, wherein the unit structure of the dielectric layer includes a plurality of cell regions of which thickness differs from one another, and each of the divided regions includes at least one unit structure;
when assuming a three-dimensional orthogonal coordinate system in which a surface of the frequency selective reflector is defined as xy plane and a normal direction of the surface of the frequency selective reflector is defined as z-axis, and assuming a right angled triangle setting a start point of the unit structure in the direction in which the thickness of the cell region increases on the xy plane as a right angle apex, and a length of the unit structure in a direction in which the thickness of the cell region increases on the xy plane and the wavelength of the electromagnetic waves parallel to the z-axis as adjacent sides in the three-dimensional orthogonal coordinate system;
normal directions of hypotenuses of the right angled triangles in the respective divided regions are different from each other; and the normal directions of the hypotenuses of the right angled triangles in the respective divided regions are set so as to spread outward around the main reflection direction vector of the electromagnetic waves derived from the sum of the vectors of the normal directions of the hypotenuses of the right angled triangles in the respective divided regions.

Note that the length of the vector in the normal direction of the hypotenuse of the right angled triangle in each of the divided regions is defined as a unit vector, and the direction of the main reflection direction vector of the electromagnetic waves is determined by the sum of the unit vectors.

3. Other points of frequency selective reflector

The other points of the frequency selective reflector of the present embodiment can be the same as those of the first embodiment described above.

III. Third embodiment

The frequency selective reflector of the present embodiment is a frequency selective reflector reflecting electromagnetic waves in a particular frequency band to a direction different from a regular reflection direction, wherein an entire surface of the frequency selective reflector is divided into a plurality of divided regions; the plurality of divided regions includes a main region that is a divided region positioned in a center of the frequency selective reflector, and a plurality of sub regions being divided regions other than the main region; the plurality of sub regions is disposed around the main region; reflection direction vectors of the electromagnetic waves in each of the divided regions are different from each other; and reflection direction vectors of the electromagnetic waves in the respective sub regions are set so as to converge inwardly around the reflection direction vector of the electromagnetic waves in the main region.

In the present embodiment, as in the first embodiment, the reflected beam by each sub-region overlaps the reflected beam by the main region, so that one main lobe (main beam) is formed in the reflected beam profile by the entire frequency selective reflector. On the other hand, in the present embodiment, as opposed to the first embodiment, reflection direction vectors of the electromagnetic waves in the respective sub regions are set so as to converge inwardly around the reflection direction vector of the electromagnetic waves in the main region, so that the reflected waves by the entire frequency selective reflector may be concentrated for a predetermined distance and a predetermined direction. That is, in the present embodiment, the beam width of the reflected wave by the entire frequency selective reflector can be narrowed, as opposed to the first embodiment, so that the area irradiated with the reflected beam by the frequency selective reflector can be narrowed. Such a frequency selective reflector can be applied, for example, when the reflected electromagnetic waves are concentratedly delivered to a repeater or a customer premises equipment (CPE), etc.

The frequency selective reflector of the present embodiment can be the same as that of the first embodiment except that the reflection direction vectors of the electromagnetic waves in the respective sub regions are set so as to converge inwardly around the reflection direction vector of the electromagnetic waves in the main region.

<First aspect of frequency selective reflector>

The first aspect of the frequency selective reflector of the present embodiment is the same as the first aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions; the plurality of divided regions includes a main region that is a divided region positioned in a center of the frequency selective reflector, and a plurality of sub regions being divided regions other than the main region; the plurality of sub regions is disposed around the main region;

the frequency selective reflector includes a reflecting member that: reflects the electromagnetic waves; and includes a reflection phase control function that controls the reflection phase of the electromagnetic waves; in the reflecting member, a plurality of unit structures including a plurality of reflection elements of which dimension differs from one another is arranged; and each of the divided regions includes at least one unit structure;

when assuming a three-dimensional orthogonal coordinate system in which a surface of the frequency selective reflector is defined as xy plane and the normal direction of the surface of the frequency selective reflector is defined as z-axis, and assuming a right angled triangle setting a start point of the unit structure in a direction in which a dimension of the reflection element increases on the xy plane as a right angle apex, and a length of the unit structure in a direction in which a dimension of the reflection element increases on the xy plane and the wavelength of the electromagnetic waves parallel to the z-axis as adjacent sides in the three-dimensional orthogonal coordinate system; and

a normal direction of the hypotenuse of the right angled triangle in each of the divided regions differs from one another, and the normal direction of the hypotenuse of the right angled triangle in each of the sub region is set to converge inward around the normal direction of the hypotenuse of the right angled triangle in the main region.

<Second aspect of frequency selective reflector>

The second aspect of the frequency selective reflector of the present embodiment is the same as the second aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions; the plurality of divided regions includes a main region that is a divided region positioned in a center of the frequency selective reflector, and a plurality of sub regions being divided regions other than the main region; the plurality of sub regions is disposed around the main region;

the frequency selective reflector includes: a reflecting member reflecting the electromagnetic waves; and a dielectric layer that: is disposed at an incident side of the electromagnetic waves with respect to the reflecting member; includes a concave and convex structure in which a plurality of a unit structures including a thickness distribution of increasing thickness in a predetermined direction is arranged; and transmits the electromagnetic waves, wherein the unit structure of the dielectric layer includes a plurality of cell regions of which thickness differs from one another, and each of the divided regions includes at least one unit structure;

when assuming a three-dimensional orthogonal coordinate system in which a surface of the frequency selective reflector is defined as xy plane and a normal direction of the surface of the frequency selective reflector is defined as z-axis, and assuming a right angled triangle setting a start point of the unit structure in the direction in which the thickness of the cell region increases on the xy plane as a right angle apex, and a length of the unit structure in a direction in which the thickness of the cell region increases on the xy plane and the wavelength of the electromagnetic waves parallel to the z-axis as adjacent sides in the three-dimensional orthogonal coordinate system; and

a normal direction of the hypotenuse of the right angled triangle in each of the divided regions differs from one another, and the normal direction of the hypotenuse of the right angled triangle in each of the sub region is set to converge inwardly around the normal direction of the hypotenuse of the right angled triangle in the main region.

<Variations>

The reflection direction vectors of the electromagnetic waves in the respective sub regions may be set so as to spread outward around the reflection direction vector of the electromagnetic waves in the main region in a horizontal direction, and set so as to converge inwardly around the reflection direction vector of the electromagnetic waves in the main region in the vertical direction. Alternatively, the reflection direction vectors of the electromagnetic waves in the respective sub regions may be set so as to spread outward around the reflection direction vector of the electromagnetic waves in the main region in the vertical direction, and set so as to converge inwardly around the reflection direction vector of the electromagnetic waves in the main region in the horizontal direction. By setting the reflection direction vectors of the electromagnetic waves in the respective divided regions in this manner, it is possible to arbitrarily control the area irradiated with the reflected beam.

IV. Fourth embodiment

The frequency selective reflector of the present embodiment is a frequency selective reflector reflecting electromagnetic waves in a particular frequency band to a direction different from a regular reflection direction, wherein an entire surface of the frequency selective reflector is divided into a plurality of divided regions; reflection direction vectors of the electromagnetic waves in the respective divided regions are different from each other; and the reflection direction vectors of the electromagnetic waves in the respective divided regions are set so as to converge inwardly around a main reflection direction vector of electromagnetic waves derived from a sum of the reflection direction vectors of the electromagnetic waves in the respective divided regions.

In the present embodiment, as in the second embodiment, the reflected beams by each of the divided regions overlap, whereby one main lobe (main beam) is formed in the reflected beam profile by the entire frequency selective reflector. On the other hand, in the present embodiment, as opposed to the second embodiment, the reflection direction vectors of the electromagnetic waves in the respective divided regions are set so as to converge inwardly around the main reflection direction vector of the electromagnetic waves, and thus the reflected wave by the entire frequency selective reflector can be concentrated for a predetermined distance and a predetermined direction. That is, in the present embodiment, the beam width of the reflected wave by the entire frequency selective reflector can be narrowed, contrary to the second embodiment described above. This allows the area irradiated with the reflected beam by the frequency selective reflector to be narrowed. Such a frequency selective reflector can be applied, for example, when the reflected electromagnetic waves are concentratedly delivered to a repeater or a customer premises equipment (CPE), etc.

The frequency selective reflector of the present embodiment can be the same as that in the second embodiment except that the reflection direction vectors of the electromagnetic waves in the respective divided regions are set so as to converge inwardly around a main reflection direction vector of electromagnetic waves.

<First aspect of frequency selective reflector>

The first aspect of the frequency selective reflector of the present embodiment is the same as the first aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions;
the frequency selective reflector includes a reflecting member that: reflects the electromagnetic waves; and includes a reflection phase control function that controls the reflection phase of the electromagnetic waves; in the reflecting member, a plurality of unit structures including a plurality of reflection elements of which dimension differs from one another is arranged; and each of the divided regions includes at least one unit structure;
when assuming a three-dimensional orthogonal coordinate system in which a surface of the frequency selective reflector is defined as xy plane and the normal direction of the surface of the frequency selective reflector is defined as z-axis, and assuming a right angled triangle setting a start point of the unit structure in a direction in which a dimension of the reflection element increases on the xy plane as a right angle apex, and a length of the unit structure in a direction in which a dimension of the reflection element increases on the xy plane and the wavelength of the electromagnetic waves parallel to the z-axis as adjacent sides in the three-dimensional orthogonal coordinate system; a normal direction of the hypotenuse of the right angled triangle in each of the divided regions differs from one another, and the normal direction of the hypotenuse of the right angled triangle in each of the divided regions is set to converge inward around the main reflection direction vector of the electromagnetic waves derived from the sum of the normal direction vectors of the hypotenuse of the right angled triangle in each of the divided regions.

Note that the length of the vector in the normal direction of the hypotenuse of the right angled triangle in each of the divided regions is defined as a unit vector, and the direction of the main reflection direction vector of the electromagnetic waves is determined by the sum of the unit vectors.

<Second aspect of frequency selective reflector>

The second aspect of the frequency selective reflector of the present embodiment is the same as the second aspect of the frequency selective reflector of the first embodiment described above.

In the present aspect, the reflection direction vector of electromagnetic waves is determined in the same manner as that of the first aspect of the frequency selective reflector of the first embodiment described above.

Thus, in the present aspect, in other words:

an entire surface of the frequency selective reflector is divided into a plurality of divided regions;
the frequency selective reflector includes: a reflecting member reflecting the electromagnetic waves; and a dielectric layer that: is disposed at an incident side of the electromagnetic waves with respect to the reflecting member; includes a concave and convex structure in which a plurality of unit structures including a thickness distribution of increasing thickness in a predetermined direction is arranged; and transmits the electromagnetic waves, wherein the unit structure of the dielectric layer includes a plurality of cell regions of which thickness differs from one another, and each of the divided regions includes at least one unit structure;
when assuming a three-dimensional orthogonal coordinate system in which a surface of the frequency selective reflector is defined as xy plane and a normal direction of the surface of the frequency selective reflector is defined as z-axis, and assuming a right angled triangle setting a start point of the unit structure in the direction in which the thickness of the cell region increases on the xy plane as a right angle apex, and a length of the unit structure in a direction in which the thickness of the cell region increases on the xy plane and the wavelength of the electromagnetic waves parallel to the z-axis as adjacent sides in the three-dimensional orthogonal coordinate system; and
a normal direction of the hypotenuse of the right angled triangle in each of the divided regions differs from one another, and the normal direction of the hypotenuse of the right angled triangle in each of the divided regions is set to converge inward around the main reflection direction vector of the electromagnetic waves derived from the sum of the normal direction vectors of the hypotenuse of the right angled triangle in each of the divided regions.

Note that the length of the vector in the normal direction of the hypotenuse of the right angled triangle in each of the divided regions is defined as a unit vector, and the direction of the main reflection direction vector of the electromagnetic waves is determined by the sum of the unit vectors.

<Variations>

The reflection direction vectors of the electromagnetic waves in the respective divided regions may be set so as to spread outward around the main reflection direction vector of the electromagnetic waves in the horizontal direction, and set so as to converge inwardly around the main reflection direction vector of the electromagnetic waves in the vertical direction. Alternatively, the reflection direction vectors of the electromagnetic waves in the respective sub regions may be set so as to spread outward around the main reflection direction vector of electromagnetic waves in the vertical direction, and set so as to converge inwardly around the main reflection direction vector of the electromagnetic waves in the horizontal direction. By setting the reflection direction vector of the electromagnetic waves in each of the divided regions in this manner, it is possible to arbitrarily control the area irradiated with the reflected beam.

V. Fifth embodiment

The frequency selective reflector of the present embodiment is a frequency selective reflector reflecting electromagnetic waves in a particular frequency band to a direction different from a regular reflection direction, wherein a plurality of cell regions, of which reflection phase of the electromagnetic waves differs from one another, is repeatedly arranged; and when a relative reflection phase of the electromagnetic waves in each cell region is set to be over -360° and 0° or less with reference to a reflection phase of the electromagnetic waves in the cell region with the largest advance in the reflection phases of the electromagnetic waves, a boundary part, in which gradually decreasing relative reflection phase of the electromagnetic wave abruptly increases, is a non-branching and continuous curved shape.

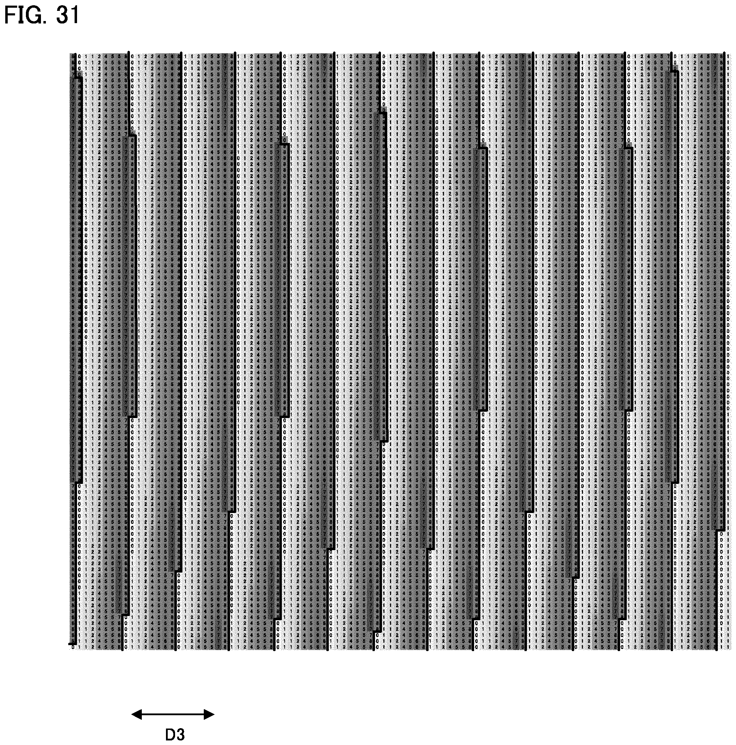

FIG. 31 is a schematic plan view exemplifying the cell region in the frequency selective reflector of the present embodiment. The frequency selective reflector shown in FIG. 31 includes nine kinds of cell regions of which reflection phase of the electromagnetic waves differs from one another. In the nine kinds of cell regions, when a relative reflection phase of the electromagnetic waves in each cell region is set to be over -360° and 0° or less with reference to a reflection phase of the electromagnetic waves in the cell region with the largest advance in the reflection phases of the electromagnetic waves, the relative reflection phase of the electromagnetic waves in each cell region in the order from the largest is, for example, 0°, -40°, -80°, -120°, -160°, -200°, -240°, -280° and -320°. In FIG. 31, the numbers 0, 1, 2, 3, 4, 5, 6, 7, and 8 are indicated in the order from the largest relative reflection phase of the electromagnetic waves in each cell region.

In FIG. 31, the relative reflection phase of the electromagnetic waves in each cell region is repeatedly increased or decreased in a predetermined direction D3. In FIG. 31, the boundary part, in which gradually decreasing relative reflection phase of the electromagnetic wave abruptly increases, is a part where the relative reflection phase of the electromagnetic waves increases from - 320° to 0°, and a part where the relative reflection phase of the electromagnetic waves increases from - 320° to - 40°. That is, the boundary part between the cell region (8) and the cell region (0), and the boundary part between the cell region (8) and the cell region (1) are the boundary part where the gradually decreasing relative reflection phase of the electromagnetic waves abruptly increases. This boundary part is shown in bold line. The boundary part is non-branching continuous curved shape.

Here, like the frequency selective reflector from the first embodiment to the fourth embodiment described above, the entire surface of the frequency selective reflector is divided into a plurality of divided regions, and when the reflection direction vectors of the electromagnetic waves in each of the divided regions are different from each other, for example, it is considered to respectively design the reflection properties of the divided regions, and to combine all the divided regions. At this time, in each of the divided regions, the relative reflection phase of the electromagnetic waves repeatedly increases and decreases. On the other hand, there may be a point where the relative reflection phase of the electromagnetic waves varies discontinuously at the boundary between the adjacent divided regions. In this case, the boundary part, in which the gradually decreasing relative reflection phase of the electromagnetic wave abruptly increases, is branched or interrupted. This degrades the performance of the frequency selective reflector.

On the other hand, in the present embodiment, the boundary part, in which the gradually decreasing relative reflection phase of the electromagnetic wave abruptly increases, is a non-branching and continuous curved shape. Therefore, the boundary between adjacent divided regions as described above can be eliminated and the performance of the frequency selective reflector can be improved.

In the present embodiment, the boundary between adjacent divided regions as described above is eliminated, and the boundary part, in which the gradually decreasing relative reflection phase of the electromagnetic waves abruptly increases, can be non-branching and continuous curved shape by designing the reflection properties of the whole frequency selective reflector, rather than designing reflection properties for each divided region.

Further, in the present embodiment, when the entire surface of the frequency selective reflector is divided into a plurality of virtual divided regions, and the reflection direction vector of the electromagnetic waves in each of the virtual divided regions is set in the same manner as that in the frequency selective reflector from the first embodiment to the fourth embodiment described above, the boundary part, in which the gradually decreasing relative reflection phase of the electromagnetic waves abruptly increases, is non-branching and continuous curve shape, so that the change of the reflection direction vector of the electromagnetic waves can be smoothed over the entire surface of the frequency selective reflector.

Note that the virtual divided region is, for example, a region indicating one reflection direction vector of electromagnetic wave. The gradual change of the reflection direction vector of the electromagnetic waves over the entire surface of the frequency selective reflector is suitable for adjusting the spread of the electromagnetic waves such as a so-called spherical wave or a plane wave. To that end, it is necessary to increase the number of virtual divided regions. That is, it is necessary to reduce the size of the virtual divided regions. At this time, the size of the divided region can be reduced to the size of the cell region when the size of the virtual divided region is reduced to the utmost limit. If the size of the virtual divided region is the size of the cell region, then the reflection direction vector of the electromagnetic wave in one virtual divided region is determined based on the relationship with the other virtual divided regions adjacent to the vicinity of the one virtual divided region. Also, gently changing the reflection direction vector of the electromagnetic waves over the entire surface of the frequency selective reflector is equivalent to smoothing the reflected wavefront determined from the in-plane distribution of the relative reflection phase of the electromagnetic waves. To that end, it is necessary to set the boundary part, in which the gradually decreasing relative reflection phase of the electromagnetic waves abruptly increases, to be non-branching and continuous curved shape.

Each configuration of the frequency selective reflector of the present embodiment will be hereinafter explained.

1. Cell region

In the frequency selective reflector of the present embodiment, a plurality of cell regions, of which reflection phase of the electromagnetic waves differs from one another, is repeatedly arranged.

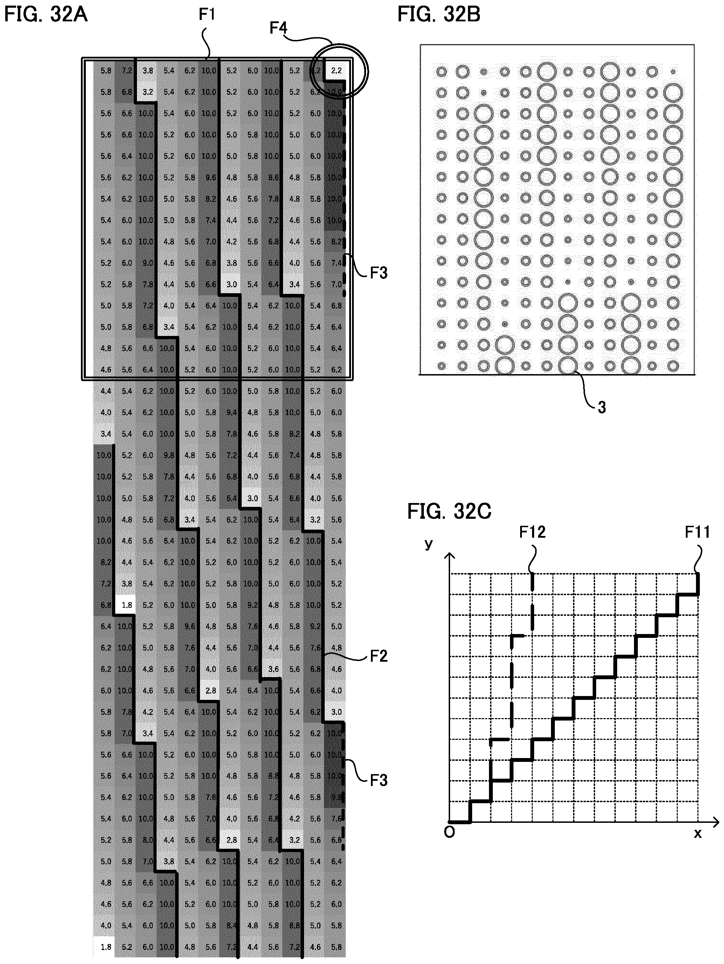

Incidentally, "the plurality of cell regions, of which reflection phases of the electromagnetic waves differs from one another, is repeatedly arranged" means that although the plurality of cell regions is arranged so that the reflection phase of the electromagnetic waves in each cell region repeatedly increases and decreases, the increase and the decrease are not necessarily periodic. For example, as shown in FIG. 31, FIGS. 32A and 32B, although each cell region appears to be generally periodically arranged, it is not strictly periodically arranged, but is repeatedly arranged according to the target reflection properties.

In the present embodiment, when a relative reflection phase of the electromagnetic waves in each cell region is set to be over -360° and 0° or less with reference to a reflection phase of the electromagnetic waves in the cell region with the largest advance in the reflection phases of the electromagnetic waves, a boundary part, in which gradually decreasing relative reflection phase of the electromagnetic wave abruptly increases, is a non-branching and continuous curved shape.

Here, as described in the section of the first embodiment described above, "reflection phase" refers to the amount of change in phase of the reflected wave relative to the phase of the incident wave incident on a surface. In the frequency selective reflector including the reflecting member and the dielectric layer of the later described third aspect, "reflection phase" is referred to as the amount of change in phase of the reflected wave when the incident wave is transmitted through the dielectric layer, reflected by the reflecting member and is emitted through the dielectric layer by being transmitted through the dielectric layer again, with respect to the phase of the incident wave.

Also, in the frequency selective reflector of the present embodiment, for the term "relative reflection phase", when the reflection phase in the cell region where the advance of the reflection phase is the largest is used as a reference, the delay of the reflection phase in a certain cell region with respect to the reflection phase of the reference is shown as a negative signal. For example, when the reflection phase in the cell region where the advance of the reflection phase is the largest is -10°, the relative reflection phase in the cell region where the reflection phase is -40°, is -30°.

It should be noted that "the advance of the reflection phase is the largest" means that the delay of the reflection phase is the smallest when the reflection phase in all the cell regions is 0° or less.

Incidentally, as described below, in the frequency selective reflector including the reflecting member and the dielectric layer of the third aspect, the relative reflection phase of the electromagnetic waves in the cell region is a value based on the reflection phase in the dielectric layer, regardless of whether the reflecting member has a reflection phase control function or not. In other words, the relative reflection phase of the electromagnetic waves in the cell region is not based on a value obtained by synthesizing the reflection phase in the dielectric layer and the reflection phase in the reflecting member.

Also, in the frequency selective reflector of the present embodiment, a "cell region" refers to a region in which the relative reflection phase of the electromagnetic waves is the same.

Note that, in the frequency selective reflector of the present embodiment, the reflection phase is in the range of over -360° to less than +360° unless otherwise noted, and -360° and +360° return to 0°. Also, in the frequency selective reflector of the present embodiment, the relative reflection phase is in the range of over -360° to 0° or less, unless otherwise noted, and -360° returns to 0°.

The boundary part, in which the gradually decreasing relative reflection phase of the electromagnetic waves abruptly increases, is a part where the relative reflection phase gradually decreases from 0° toward -360°, and then abruptly increases toward 0°.

Also, in the frequency selective reflector of the present embodiment, the "curved shape" includes, of course, a curved line, as well as a state that looks like a curved line when viewed as a whole although it is a continuous straight line, and a state close to a curved line although a straight-lined part is partly included.

Also, in the frequency selective reflector of the present embodiment, "continuous curved shape" refers to a seamless curved shape, and in specific, it means that the boundary part is not interrupted. Also, in the frequency selective reflector of the present embodiment, "non-branching curved shape" specifically means that the boundary part is not branched.

The curved shape may be, for example, an open curved shape and may be a closed curved shape.

Also, the curved shape may be, for example, an arc shape, a curved shape like a gourd, and a curved shape in which curvature is gradually changed.

FIG. 32A is a schematic plan view exemplifying the cell region in the frequency selective reflector of the present embodiment. The frequency selective reflector shown in FIG. 32A includes a reflecting member in which a plurality of ring shaped reflection elements 3 of which outer diameter differs from one another is arranged, as shown in FIG. 32B. FIG. 32B corresponds to the part of frame line F1 of FIG. 32A, and the numbers in FIG. 32A indicate the outer radius of the ring of the reflection element 3. In this frequency selective reflector, the element region in which one reflection element 3 is arranged is one cell region, and as the outer radius of the ring of the reflection element 3 increases, the relative reflection phase of the electromagnetic waves in each cell region decreases.

In FIGS. 32A and 32B, the relative reflection phase of the electromagnetic waves in each cell region repeatedly increases and decreases in a certain direction. In FIGS. 32A and 32B, the boundary part, in which the gradually decreasing relative reflection phase of the electromagnetic waves abruptly increases, is a part where the gradually increasing outer radius of the ring of the reflection element abruptly decreases. In FIG. 32A, this boundary part is shown as bold line F2. The boundary part is non-branching and continuous curved shape. On the other hand, in FIG. 32A, since there is no more column on the right side in the cell region of the rightmost column, the boundary part is considered to be, for example, indicated by dashed line F3, but it cannot be determined whether there is the boundary part between the cell region of the rightmost column and the column on the right side thereof. For this reason, in the part of the frame line F4, the boundary part appears to be interrupted. However, the boundary part is considered to be, for example, indicated by the dashed line F3, and if the dashed line F3 is also included, the boundary part becomes a seamless curved line, that is continuous curved shape. Thus, in the frequency selective reflector of the present embodiment, for the cell region of the outermost periphery, the boundary part may not be non-branching and continuous curved shape.

Note that in FIGS. 32A and 32B, each cell region is considered a matrix arranged in a grid. The minimum resolution when representing the in-plane layout of the relative reflection phase of electromagnetic waves is the size of the cell region. This can be considered similarly to a display that displays information by the arrangement of pixels. For example, in FIG. 32A, the arrangement matrix of the cell region when the lower left is the origin O and the horizontal direction is the x-axis and the vertical direction is the y-axis, is schematically illustrated in FIG. 32C. The situation in which the boundary part is present in the right rising straight line of $y = x$ is represented by a continuous right rise of the crank-like bend for one cell region, as in the solid line F11. The solid line F11 should be considered as a substantially straight line. Similarly, the situation where the boundary part is present in accordance with the curved line of $y = x^2$, is represented by a right rising curve that includes a crank-like bend for one cell region, as in dashed line F12. The dashed line F12 should also be considered a substantially curved line. Therefore, when the boundary part, in which the gradually decreasing relative reflection phase of the electromagnetic waves abruptly increases, is represented by the bold line F2, the crank-like bend for one cell region is not considered as an inflection point but can be considered as a smooth change.

Also, in the frequency selective reflector of the present embodiment, the boundary part may include a part which is not a non-branching and continuous curved shape. It should be noted that the part which is not the non-branching and continuous curved shape of the boundary part may be referred to as a noise part. For example, as described below, if the frequency selective reflector includes a reflecting member reflecting electromagnetic waves, and in the reflecting member, a plurality of reflection elements of which size differs from one another is repeatedly arranged, examples of the noise part may include an error in the size or shape of the reflection element and, in extreme cases, a defect in the reflection element. Also, for example, as described below, if the frequency selective reflector has a reflective member reflecting electromagnetic waves and a dielectric layer arranged on the incident side of the electromagnetic waves with respect to the reflective member and transmitting electromagnetic waves, and in the dielectric layer a plurality of dielectric cell regions with different thicknesses are repeatedly arranged, the noise part is, for example, errors in the thickness or shape of the dielectric cell regions, errors in the size or shape of the reflective elements of the reflective member, and in extreme cases, missing reflective elements or missing dielectric layers. In addition, examples of the noise part may include a structure not related to the control of the reflection phase of the electromagnetic waves. Examples of the structure not related to the control of the reflection phase of the electromagnetic waves may include a supporting member and an alignment mark. The supporting member is, for example, a member that supports a cover member when the cover member is arranged. The structure not related to the control of the reflection phase of the electromagnetic waves may be an intentionally arranged structure and may be an accidentally formed structure. Examples of materials of the structure not related to the control of the reflection phase of electromagnetic waves may include a metal material, a conductive material, and a non-conductive material.

Incidentally, for example, when the supporting member is arranged on the outer periphery of the frequency selective reflector, it is considered that the supporting member is positioned outside the effective region of the frequency selective reflector. Thus, in this case, the supporting member is not a noise part. Also, as described above, for the outermost cell region, since the boundary part may not be the non-branching and continuous curved shape, the outermost cell region is not a noise part.

The noise part is identified by the following method.

As described below, for example, when the frequency selective reflector includes a reflecting member reflecting the electromagnetic waves, and in the reflecting member, a plurality of reflection elements of which size differs from one another is repeatedly arranged, the boundary part, in which the gradually decreasing relative reflection phase of the electromagnetic waves abruptly increases, is a part where the gradually increasing size of the reflection element is abruptly reduced. Thus, by confirming the increase and decrease in the size of the reflection element, the noise part can be confirmed. It is determined that there is a noise part if the part, in which the gradually increasing size of the reflection element is abruptly reduced, is either branched or interrupted. The noise part may be visually confirmed and may be confirmed by a magnifying glass.

Also, as described below, for example, when the frequency selective reflector includes a reflecting member reflecting the electromagnetic waves, and a dielectric layer that is disposed at an incident side of the electromagnetic waves with respect to the reflecting member, and that transmits the electromagnetic waves, wherein, in the dielectric layer, a plurality of dielectric cell regions of which thickness differs from one another is repeatedly arranged, the boundary part, in which gradually decreasing relative reflection phase of the electromagnetic waves abruptly increases, is a part where the gradually increasing thickness of the dielectric cell region is abruptly reduced. That is, the boundary part, in which the gradually decreasing relative reflection phase of the electromagnetic waves is abruptly increased, is the ridgeline part of the dielectric layer. Thus, by confirming the increase and decrease of the thickness of the dielectric cell region, the noise part can be confirmed. It is determined that there is a noise part if the part, in which the gradually increasing thickness of the dielectric cell region is abruptly reduced, is branched or interrupted. For the reflecting member, the confirmation of the noise part is as described above. For the dielectric layer, a stylus-type step profiler or a laser microscope is used to confirm the noise part.

The noise part may be one and may be plural.

The size of the noise part is, for example, when the wavelength of the electromagnetic wave is λ, preferably 2λ * 2λ or less, more preferably λ * λ or less, and further preferably λ/2 * λ/2 or less. If the size of the noise part is too large, the performance of the frequency selective reflector is degraded. For this reason, it is necessary to increase the size of the frequency selective reflector to compensate for it. Also, if the size of the noise part is less than λ/2 x λ/2, resonance is less likely to occur and the reflected intensity of the electromagnetic waves in the noise part decreases rapidly. Meanwhile, there is no lower limit of the size of the noise part.

Note that the size of the noise part refers to the size of one noise part. Also, if the noise part is an error in the size or shape of the reflection element of the reflecting member, or an error in the thickness or shape of the dielectric cell region, the size of the noise part is the size of the cell region of which size or shape of the reflection element is error, or the size of the dielectric cell region of which thickness or shape is error. Also, if the noise part is, for example, a supporting member or an alignment mark, the size of the noise part is the size of the supporting member or the size of the alignment mark.

Also, the ratio of the total area of the noise parts to the total area of the cell regions is preferably 20% or less, more preferably 10% or less, and further preferably 5% or less. If the ratio is too much, the performance of the frequency selective reflector is degraded. For this reason, it is necessary to increase the size of the frequency selective reflector to compensate for it. Meanwhile, there is no lower limit of the ratio.

Here, the ratio of the total area of the noise parts to the total area of the cell regions is measured by the following method. First, a region of 1/25 size of the entire frequency selective reflector is randomly selected. For this selected region, the noise part is identified as described above. Then, the ratio of the total area of the noise parts to the total area of the cell regions included in the selected region is determined. At this time, if the ratio is in the above range, the ratio in the selected region is considered to be the ratio of the total area of the noise parts to the total area of the cell regions in the entire frequency selective reflector. On the other hand, if the ratio exceeds the above range, the noise part is further checked for the entire frequency selective reflector as described above. The ratio of the total area of the noise parts to the total area of the cell regions is then determined. At this time, as described above, when the supporting member is disposed on the outer periphery of the frequency selective reflector, the supporting member is not a noise part, and therefore is not included in the total area of the noise parts.

Preferably, the size of the noise part is in the above range and the ratio of the total area of the noise parts to the total area of the cell regions is in the above range.

2. Configuration of frequency selective reflector

The frequency selective reflector is not particularly limited if it is a member that reflects electromagnetic waves in a particular frequency band to a direction different from the regular reflection direction. For example, the frequency selective reflector may include a reflecting member reflecting the electromagnetic waves, and in the reflecting member, a plurality of reflection elements of which size differs from one another may be repeatedly arranged. Also, for example, the frequency selective reflector may include a reflecting member reflecting the electromagnetic waves, and a dielectric layer that is disposed at an incident side of the electromagnetic waves with respect to the reflecting member, and that transmits the electromagnetic waves; and in the dielectric layer, a plurality of dielectric cell regions of which thickness differs from one another may be repeatedly arranged. Also, for example, the frequency selective reflector may be a variable frequency selective reflector that varies the reflection direction of the electromagnetic waves by controlling the reflection phase of the electromagnetic wave with an electrical control or a mechanical control.

Hereinafter, the third aspect in which the frequency selective reflector includes a reflecting member reflecting the electromagnetic waves, wherein in the reflecting member, a plurality of reflection elements of which size differs from one another is repeatedly arranged, and the fourth aspect in which the frequency selective reflector includes a reflecting member reflecting the electromagnetic waves, and a dielectric layer that is disposed at an incident side of the electromagnetic waves with respect to the reflecting member, and that transmits the electromagnetic waves, wherein in the dielectric layer, a plurality of dielectric cell regions of which thickness differs from one another is repeatedly arranged, will be separately described.

(1) Third aspect of frequency selective reflector

The third aspect of the frequency selective reflector of the present embodiment includes a reflecting member reflecting the electromagnetic waves, and in the reflecting member, a plurality of reflection elements of which size differs from one another is repeatedly arranged. In the reflecting member in the present aspect, by varying the size of the reflection element, the resonant frequency can be varied per reflection element, and the reflection phase of the electromagnetic waves can be controlled. Thereby, the reflection direction of the electromagnetic waves incident from the predetermined direction can be controlled. Thus, in the frequency selective reflector of the present aspect, since the plurality of reflection elements of which size differs from one another is repeatedly arranged in the reflecting member, the reflecting member can have a reflection phase control function that controls the reflection phase of the electromagnetic waves, and can also have a wavelength selection function, or FSS, that reflects only electromagnetic waves in a particular frequency band.

(a) Reflecting member

The reflecting member in the present aspect is a member that reflects electromagnetic waves in a particular frequency band. Also, in the reflecting member, a plurality of reflection elements of which size differs from one another is repeatedly arranged.

The shape of the reflection element is not particularly limited, and examples thereof may include any shape such as a ring, a cross, a square, a rectangle, a polygon, a circle, an ellipse, a bar, a planar pattern such as a pattern divided into a plurality of adjacent regions, and a three-dimensional structure such as a through-hole via.

The different sizes of the reflection element are appropriately selected depending on the shape of the reflection element. For example, in the case of a ring, the ring is similar and the outer diameter of the ring is different. In the case of a cross, one or both of the lengths of the two lines of the cross is different. In the case of a square, the sides of the square are different in length. In the case of a rectangle, the rectangle is similar, and one or both of the length of the long side or the length of the short side of the rectangle is different. In the case of polygons such as hexagonal, octagonal, etc., the polygons are similar and the sides of the polygons differ in length. In the case of a circle, the diameter of the circle is different. In the case of an ellipse, the ellipses are similar and one or both of the major axis diameter or the minor axis diameter of the ellipse is different. In the case of a bar, the length of the bar is different.

In general, as the size of the reflection element increases, the relative reflection phase of the electromagnetic waves decreases. Thus, the boundary part, in which the gradually decreasing relative reflection phase of the electromagnetic waves is abruptly increased, is a part where the size of the gradually increasing reflection element is abruptly reduced. Specifically, when an element region in which one reflection element is disposed among a plurality of reflection elements, of which size differs from one another, is defined as a cell region, in the part where the gradually increasing size of the reflection element is abruptly reduced, a boundary line between an element region in which a large-sized reflection element is disposed and an element region in which a small-sized reflection element is disposed, is the boundary part.

Thus, a change in the relative reflection phase of the electromagnetic waves can be confirmed by confirming a change in the size of the reflection element. Furthermore, by confirming the part where the gradually increasing size of the reflection element is abruptly reduced, the boundary part, in which the gradually decreasing relative reflection phase of the electromagnetic waves is abruptly increased, can be confirmed.

In the present aspect, the "cell region" refers to an element region having the same relative reflection phase of electromagnetic waves, in other words, refers to an element region in which one reflection element is disposed among a plurality of reflection elements of different sizes.

In a plurality of reflection elements of which size differs from one another, the size is preferably three kinds or more, and preferably six kinds or more. The greater the kinds of the size of the reflection elements, the smaller the difference in the relative reflection phase of the electromagnetic waves in adjacent cell regions, and the wavefront of the reflected waves can be smoothed. Further, the larger the number of kinds of the size of the reflection elements, the more preferable, and there is no limitation on the upper limit, but is considered to be sufficient if there are 80 kinds, for example.

The reflecting member may include, for example, a dielectric substrate and a plurality of reflection elements arranged on one surface of the dielectric substrate.

The reflection element may be, for example, a single layer or multiple layers. When the reflection element is a single layer or multiple layers, the configuration of the reflecting member can be the same as that of the first aspect of the first embodiment described above.

(b) Other configurations

The frequency selective reflector of the present aspect may include configurations other than the reflecting member as required. The other configurations can be the same as those of the first aspect of the first embodiment described above.
Further, when the reflecting member includes a dielectric substrate and a plurality of reflection elements disposed on an electromagnetic wave incident side surface of the dielectric substrate, the FSS may be disposed on a surface opposite to the electromagnetic wave incident side of the dielectric substrate.

(2) Fourth aspect of frequency selective reflector

The fourth aspect of the frequency selective reflector of the present embodiment includes a reflecting member reflecting the electromagnetic waves, and a dielectric layer that is disposed at an incident side of the electromagnetic waves with respect to the reflecting member, and that transmits the electromagnetic waves; in the dielectric layer, a plurality of dielectric cell regions of which thickness differs from one another is repeatedly arranged. In the frequency selective reflector of the present aspect, by varying the thickness of each dielectric cell region of the dielectric layer, the roundtrip optical path length in the dielectric layer can be varied per dielectric cell region, and the reflection phase of the electromagnetic wave can be controlled. As a result, the reflection direction of the electromagnetic wave with respect to the predetermined incident direction can be controlled in any direction.

(a) Dielectric layer

The dielectric layer in the present aspect is a member that is disposed at an incident side of the electromagnetic waves with respect to the reflecting member, and transmits the electromagnetic waves in a particular frequency band. Also, in the dielectric layer, a plurality of dielectric cell regions of which thickness differs from one another is repeatedly arranged.
As described in the section of the first embodiment described above, as the thickness of the dielectric cell region increases, the relative reflection phase of the electromagnetic waves decreases. Thus, the boundary part, in which the gradually decreasing relative reflection phase of the electromagnetic waves is abruptly increased, is a part where the gradually increasing thickness of the dielectric cell region is abruptly reduced. That is, the boundary part, in which the gradually decreasing relative reflection phase of the electromagnetic waves is abruptly increased, is the ridgeline part of the dielectric layer. Specifically, when the derivative cell region is defined as a cell region, in the ridgeline part of the dielectric layer, the boundary line between the thick dielectric cell region and the thin dielectric cell region is the boundary part.
Note that "ridgeline part of the dielectric layer" refers to a part, in which the gradually increasing thickness of the dielectric cell region is abruptly reduced, as described above.
Thus, a change in the relative reflection phase of the electromagnetic waves can be confirmed by confirming a change in the thickness of the dielectric layer. Further, by confirming the ridgeline part of the dielectric layer, the boundary part, in which the gradually decreasing relative reflection phase of the electromagnetic waves is abruptly increased, can be confirmed.
In the present aspect, a "cell region" refers to a region in which the relative reflection phase of electromagnetic waves is the same, and refers to the dielectric cell region.
In the plurality of dielectric cell regions of which thickness differs from one another, the thickness is three kinds or more, and preferably six kinds or more. The greater the number of kinds of the thickness of the dielectric cell regions, the smaller the difference in the relative reflection phase of the electromagnetic waves in adjacent cell regions, and the wavefront of the reflected waves can be smoothed. Also, the greater the number of kinds of the thickness of the dielectric cell regions, the more preferable, and there is no particular limitation on the upper limit. When the cross-sectional shape of the dielectric layer is stepped shape, the number of kinds of the thickness of the dielectric cell regions corresponds to the number of steps in the stepped shape. Also, when the cross-sectional shape of the dielectric layer is tapered shape, the tapered shape can be regarded as having an infinite number of kinds of the thickness of the dielectric cell region, as described above.
The relative reflection phase of the electromagnetic waves in each of the dielectric cell region can be the same as that of the second aspect in the first embodiment described above.
Also, the structure, properties, material and forming method of the dielectric layer can be the same as those of the second aspect of the first embodiment described above.

(b) Reflecting member

The reflecting member in the present aspect can be the same as that of the second aspect of the first embodiment described above.

(c) Control of reflection direction of electromagnetic waves

In the frequency selective reflector of the present aspect, the control of the reflection direction of electromagnetic waves can be the same as that of the second aspect of the first embodiment described above.

(d) Other configurations

The frequency selective reflector of the present aspect may include other configurations as required in addition to the reflecting member and the dielectric layer described above. The other configurations can be the same as those of the second aspect of the first embodiment described above.

(3) Another aspect of frequency selective reflector

The frequency selective reflector of the present embodiment may be a variable frequency selective reflector that makes the reflection direction of the electromagnetic waves variable by controlling the reflection phase of the electromagnetic waves by electrical control or mechanical control, as described above. The present embodiment can be achieved even in the case of such a variable frequency selective reflector. Known types of frequency selective reflectors may be applied as the variable frequency selective reflector.

3. Other points of frequency selective reflector

Other points of the frequency selective reflector of the present embodiment can be the same as those of the first embodiment described above.

In the present embodiment, when the entire surface of the frequency selective reflector is divided into a plurality of virtual divided regions, it is preferable to design the reflection direction vector of the electromagnetic waves in each of the virtual divided regions same as that of the frequency selective reflector from the first embodiment to the fourth embodiment described above.

Also, the reflection direction vectors of the electromagnetic waves in the respective virtual divided regions may be set so as to spread outward with respect to the reflection direction vector of the electromagnetic wave being the center, and may be set so as to converge inwardly with respect to the reflection direction vector of the electromagnetic wave being the center. Further, the reflection direction vectors of the electromagnetic waves in the respective virtual divided regions may be set so as to spread outward in the horizontal direction, and set so as to converge inwardly in the vertical direction with respect to the reflection direction vector of the electromagnetic wave being the center. Alternatively, the reflection direction vectors of the electromagnetic waves in the respective virtual divided regions may be set so as to spread outward in the vertical direction, and set so as to converge inwardly in the horizontal direction with respect to the reflection direction vector of the electromagnetic wave being the center. By setting the reflection direction vector of the electromagnetic waves in each of the virtual divided regions in this manner, it is possible to arbitrarily control the area irradiated with the reflected beam.

B. Communication relay system

The communication relay system in the present disclosure is a communication relay system relaying communication between a base station and a user terminal, the communication relay system including: a plurality of direction controlling devices changing a traveling direction of electromagnetic waves in a particular frequency band, wherein the plurality of direction controlling devices is disposed on a propagation path of the electromagnetic waves from the base station, and one or more frequency selective reflectors described above are included as the direction controlling device.

Here, it is advantageous to use a reflect array that can reflect electromagnetic waves in a direction different from the regular reflection direction to eliminate coverage holes. The reflect array is advantageous in terms of installation cost and running cost as compared to adding base stations and relay stations.

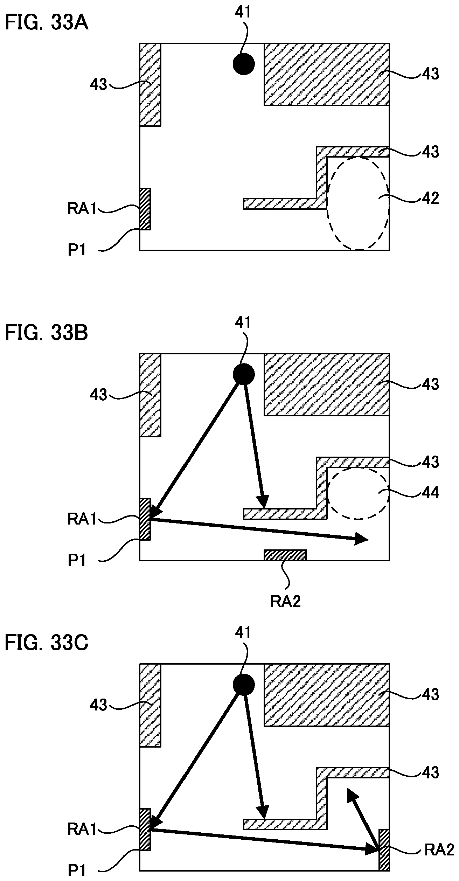

The reflect array needs to be placed in a position where it is possible to receive electromagnetic waves from the base station and possible to reflect electromagnetic waves to the user terminal. That is, the reflect array needs to be installed in a position to be seen from both the base station and the user terminal. In a practical use environment, however, it may be difficult to place the reflect array in such a position depending on the position of the obstacles for the electromagnetic waves. Therefore, there has been a problem that the effect of improving the desired propagation environment and the desired propagation area cannot be obtained even if the reflect array is used. For example, when a base station 41, a coverage hole 42, and an electromagnetic wave obstacle 43 are located as shown in FIG. 33A, even if a reflect array RA1 is placed in the position P1 as shown in FIG. 33B, the electromagnetic waves are interrupted by the electromagnetic wave obstacle 43, and no electromagnetic wave reaches to a part of the coverage hole 42. Therefore, as shown in FIG. 33B, another reflect array RA2 is considered to receive electromagnetic waves from the base station 41 and reflect the electromagnetic waves to a remaining area 44 to which the electromagnetic waves do not reach, but there is no position where it is possible to receive electromagnetic waves from the base station 41 as well as to reflect the electromagnetic waves to the remaining area 44 to which the electromagnetic waves do not reach.

The above problem can be solved by using a combination of a plurality of reflect arrays. For example, as shown in FIG. 33C, the electromagnetic waves from the reflect array RA1 may be reflected by another reflect array RA2 to the remaining area 44 where the electromagnetic waves do not reach.

As described above, when the base station is far from the reflect array, the distance is large, the incident wave from the base station can be regarded as a plane wave. On the other hand, if the reflect array is near the base station, the incident wave from the base station needs to be treated as a spherical wave. However, the design of reflect arrays according to related art assumes that the incident waves are the plane waves. For this reason, in a reflect array according to related art when the spherical wave is incident, the reflected beam spreads unintentionally. Therefore, even if a plurality of reflect arrays is used in combination, there is a problem that when the base station and the reflect array are close to each other, the designed reflection properties cannot be obtained, and the improvement effect of desired propagation environment and designed propagation area cannot be obtained.

In contrast, in the communication relay system of the present disclosure, in addition to using a plurality of direction controlling devices in combination, one or more frequency selective reflectors including the function of adjusting the reflected beam profile described above are provided as direction controlling devices. The frequency selective reflector can be applied in the case of when the incident wave is either the plane wave or the spherical wave, as described above. Thus, even when the incident wave is the spherical wave, the reflected beam is controlled from unintentionally spreading, and the reflection properties as designed can be obtained. Therefore, in the communication relay system of the present disclosure, an effect of improving the desired propagation environment and the desired propagation area can be obtained. Also, the communication relay system of the present disclosure can be used in a variety of environments. Furthermore, it is possible to expand the use of the frequency selective reflector and to advance the development and spread of next generation mobile communication systems including 5G.

The communication relay system in the present disclosure will be hereinafter explained.

1. Direction controlling device

The direction controlling device in the present disclosure changes a traveling direction of electromagnetic waves in a particular frequency band.

The direction controlling device may be a reflective direction controlling device that reflects electromagnetic waves or may be a transmission direction controlling device that transmits electromagnetic waves.

The reflective direction controlling device is not particularly limited as long as it is possible to reflect electromagnetic waves and change the direction of travel of electromagnetic waves, and examples thereof may include a metal plate, a sheet with a conductive layer, a reflector reflecting electromagnetic waves in the regular reflection direction, and a reflector reflecting electromagnetic waves in a direction different from the regular reflection direction. Examples of the reflector that reflects electromagnetic waves in the regular reflection direction may include an FSS. Examples of the reflector reflecting electromagnetic waves in a direction different from the regular reflection direction may include a reflect array and the above described frequency selective reflector. The reflect array is also referred to as a meta-surface reflector. The reflective direction controlling device is appropriately selected depending on the purpose of use and the environment of use.

The transmission direction controlling device is not particularly limited if it is possible to transmit electromagnetic waves and change the direction of travel of the electromagnetic waves, and known transmission direction controlling devices can be used. Examples thereof may include dielectric lens antennas, meta-surface lenses, and meta-surface refractive plates. The transmission direction controlling device is appropriately selected depending on the purpose of use and the environment of use.

The communication relay system of the present disclosure includes one or more frequency selective reflectors described above as the direction controlling device. As the direction controlling device, only the frequency selective reflector described above may be used, or the frequency selective reflector described above and another direction controlling device may be used in combination. Also, if the above described frequency selective reflector and another direction controlling device are used in combination, the frequency selective reflector and another reflective direction controlling device may be used in combination, the frequency selective reflector and the transmission direction controlling device may be used in combination, or the frequency selective reflector and other reflective direction controlling device and transmission direction controlling device may be used in combination. If all the direction controlling devices are the frequency selective reflector described above, the effect of improving the propagation environment and propagation area can be enhanced. Also, when another reflective direction controlling device is included as the direction controlling device, an existing reflective direction controlling device can be utilized, and costs can be reduced. Also, when the transmission direction controlling device is included as the direction controlling device, the propagation path of the electromagnetic waves is appropriately set according to the use environment.

The frequency selective reflector may be a frequency selective reflector of any of the embodiments. When a plurality of frequency selective reflectors is included as the direction controlling device, the frequency selective reflector may be used alone or may be used in combination of two or more kinds.

Above all, it is preferable that the communication relay system in the present disclosure includes one or more frequency selective reflectors described above as the direction controlling device, and one or more frequency selective reflectors of the fifth embodiment as a frequency selective reflector. In particular, it is preferred that all frequency selective reflectors are the frequency selective reflector of the fifth embodiment.

In addition, when a plurality of direction controlling devices other than the frequency selective reflector is included as the direction controlling device, the direction controlling device other than the frequency selective reflector may be used alone or may be used in combination of two or more kinds.

2. Placement of direction controlling device

In the communication relay system of the present disclosure, the plurality of direction controlling devices is respectively disposed on a propagation path of the electromagnetic waves from the base station. Specifically, a plurality of direction controlling devices is disposed downstream of the base station, the direction controlling device positioned on the most upstream side is disposed in a position where the direction controlling device receives some or all of the electromagnetic waves from the base station, and the direction controlling device positioned in downstream is disposed in a position where the direction controlling device receives some or all of the electromagnetic waves from the direction controlling device positioned in upstream.

Note that "upstream" refers to the upstream in the direction of travel of electromagnetic waves emitted from the base station. Also, "downstream" refers to the downstream in the direction of travel of the electromagnetic waves emitted from the base station. On the other hand, the electromagnetic waves emitted from the user terminal reach the base station following a propagation path opposite to the propagation path of the electromagnetic waves from the base station.

The placement of the direction controlling device is appropriately designed depending on the purpose of use and the environment of use.

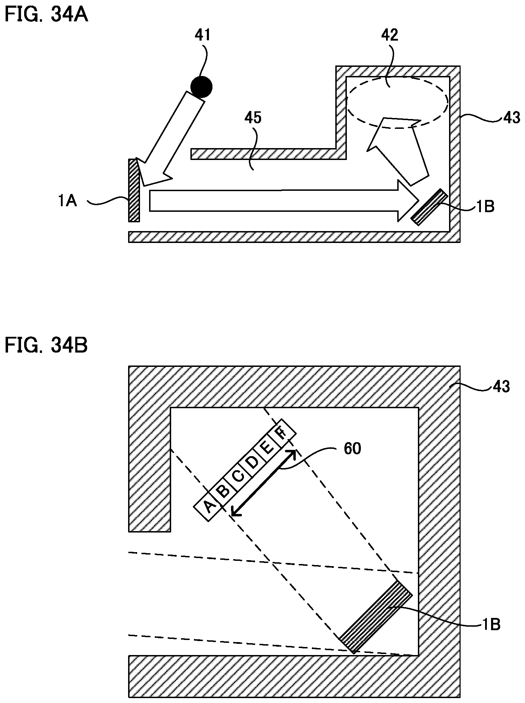

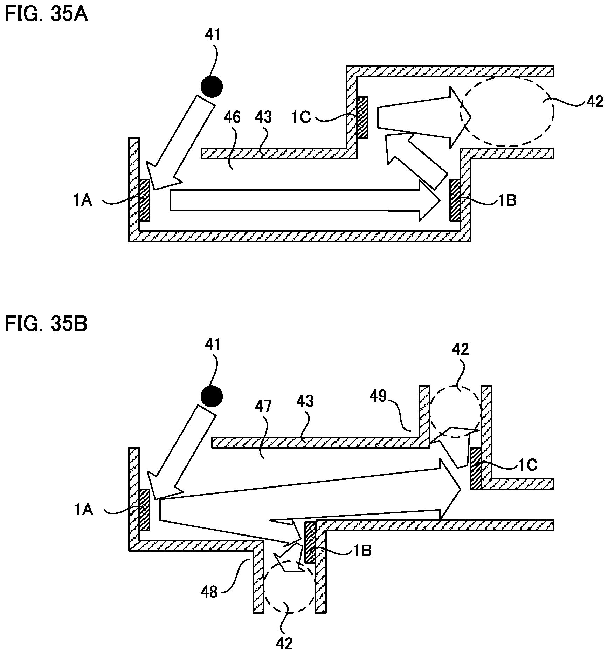

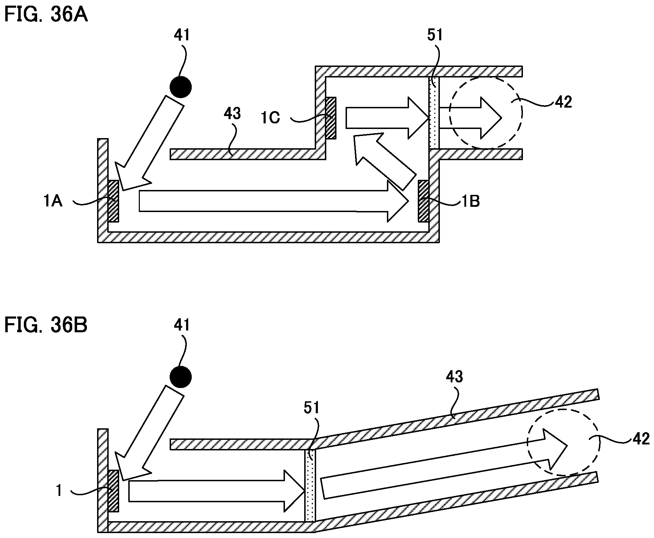

For example, the plurality of direction controlling devices may be disposed such that one propagation path of the electromagnetic waves starts from the base station. Also, the plurality of direction controlling devices may be disposed such that a propagation path of the electromagnetic waves starts from the base station branches. For example, FIGS. 34A and 35A are examples in which two or three frequency selective reflectors 1A, 1B, 1C are arranged such that one propagation path of the electromagnetic waves starts from the base station 41. Also, for example, FIG. 36A is an example in which three frequency selective reflectors 1A, 1B, 1C and one transmission direction controlling device 51 are arranged such that the propagation path of the electromagnetic waves is one path starting at the base station 41. Also, for example, FIG. 36B is an example in which one frequency selective reflector 1 and one transmission direction controlling device 51 are arranged such that the propagation path of the electromagnetic waves is one path starting at the base station 41. Also, for example, FIG. 35B is an example in which three frequency selective reflectors 1A, 1B, 1C are arranged such that the propagation path of the electromagnetic waves is branched starting at the base station 41. For example, as shown in FIGS. 34A, 35B, 36A and 36B, when there is one coverage hole 44 with respect to one base station 41, one propagation path may be formed. Meanwhile, when there is a plurality of coverage holes with respect to one base station, although not illustrated, a plurality of propagation paths may be formed so as to branch from the base station, and for example, as shown in FIG. 35B, a propagation path with a branch may be formed so as to branch in the middle of the propagation path.

Also, the combination of direction controlling devices are as described above.

In the placement of the direction controlling device, there are no particular limitations on the position of the above described frequency selective reflector. The frequency selective reflector may be, for example, placed upstream, and may be placed downstream.

For example, the direction controlling device positioned on the most upstream side may be the above described frequency selective reflector. In this case, even when the incident wave from the base station is the spherical wave, the spherical wave can be converted to the plane wave by the frequency selective reflector, and reflected to the direction controlling device in the downstream side.

Also, for example, the direction controlling device positioned on the most downstream side may be the above described frequency selective reflector. In this case, the reflected beam can be widened or narrowed by the frequency selective reflector on the most downstream side. Thus, the area irradiated with the reflected beam can be adjusted according to the target coverage hole. Also, the electromagnetic waves can be concentrated on CPE.

In particular, the direction controlling device positioned on the most downstream side is preferably the above described frequency selective reflector, and is more preferably the frequency selective reflector of the fifth embodiment. In this way, the electromagnetic waves from the base station can be appropriately delivered to the user terminal.

Also, when the direction controlling device positioned on the most upstream side is the reflective direction controlling device, the reflective direction controlling device on the most upstream side is disposed in a position that receives some or all of the electromagnetic waves from the base station, but typically does not reflect all of the electromagnetic waves from the base station.

Also, the direction controlling device positioned in the downstream side is disposed in a position that receives some or all of the electromagnetic waves from the direction controlling device positioned in the upstream side. When the direction controlling device is a frequency selective reflector, in the frequency selective reflector in the upstream side, the reflected beam profile may be designed to reflect electromagnetic waves so as to aim at the frequency selective reflector in the downstream side, or the reflected beam profile may be designed to reflect electromagnetic waves toward the region including the frequency selective reflector in the downstream side.

Hereinafter, the placement of the direction controlling device will be explained with reference to specific examples.

(1) When only frequency selective reflector is used

When only the above described frequency selective reflector is used as the direction controlling device, the effect of improving the propagation environment and propagation area can be enhanced.

When all the direction controlling devices are the above described frequency selective reflector, the positions of the direction controlling devices are appropriately designed depending on the purpose of use and use environment, as described above.

First, described is an example in which a plurality of frequency selective reflectors is arranged such that the propagation path of the electromagnetic waves is one path starting at the base station.

For example, as shown in FIG. 34A, there is an example in which the use environment is L-shaped space 45 that is surrounded by the electromagnetic wave obstacle 43. In this case, there is an example in which the electromagnetic waves from the base station 41 positioned outside the L-shaped space 45 is delivered from one end of the L-shaped space 45 to the other end of the L-shaped space 45. For example, when two frequency selective reflectors are used, an upstream-side frequency selective reflector 1A is disposed at one end of the L-shaped space 45, a downstream-side frequency selective reflector 1B is disposed near the corner of the L-shaped space 45. The upstream side frequency selective reflector 1A is disposed in a position that receives all or some of the electromagnetic waves from the base station 41. The downstream side frequency selective reflector 1B is disposed in a position that receives all or some of the electromagnetic waves from the upstream side frequency selective reflector 1A.

In this case, in the frequency selective reflector in the downstream side, the reflected beam profile may be adjusted so that the reflected beam is widened, and the reflected beam profile may be adjusted so that the reflected beam is narrowed. In the former case, for example, as shown in FIG. 34A, the spherical wave can be converted into a substantially plane wave by the upstream side frequency selective reflector 1A and reflected, and the reflected beam can be widened by the downstream side frequency selective reflector 1B. At this time, in the L-shaped space 45, when the coverage hole 42 is wide, the reflected beam profile may be adjusted so that the reflected beam spreads more for the downstream side frequency selective reflection 1B. The former example is an example of eliminating coverage holes. Also, in the latter case, the spherical wave can be converted into a substantially plane wave by the upstream side frequency selective reflector and reflected, and the reflected beam can be narrowed by the downstream side frequency selective reflector. The latter example is an example of concentrating the electromagnetic waves to CPE.

Also, in this case, also by the upstream side frequency selective reflector, the reflected beam profile may be adjusted so that the reflected beam is widened, and the reflected beam profile may be adjusted so that the reflected beam is narrowed. In the former case, the reflected beam can be widened by both of the upstream side frequency selective reflector and the downstream side frequency selective reflector. At this time, when the downstream side frequency selective reflector is disposed in a position that receives some of the electromagnetic waves from the upstream side frequency selective reflector, a part of the reflected beam widened by the upstream side frequency selective reflector can be delivered to the coverage hole by the downstream side frequency selective reflector. Also, in the latter case, the reflected beam can be narrowed by the upstream side frequency selective reflector, and the reflected beam can be widened by the downstream side frequency selective reflector. In this case, by narrowing the reflected beam in the middle of the propagation path, unwanted reflection by the electromagnetic wave obstacle can be suppressed, and the electromagnetic waves can be concentrated toward the downstream side frequency selective reflector. Therefore, it is possible to reduce propagation loss and to efficiently deliver electromagnetic waves.

Also, for example, as shown in FIG. 35A, there is an example in which the environment of use is space 46 of a crank surrounded by the electromagnetic wave obstacle 43. In this case, there is an example in which the electromagnetic waves from the base station 41 positioned outside the space 46 of the crank is delivered from one end of the space 46 of the crank to the other end of the space 46 of the crank. For example, when three frequency selective reflectors are used, the upstream side frequency selective reflector 1A is disposed at one end of the space 46 of the crank, midstream frequency selective reflector 1B is disposed near the first corner of the space 46 of the crank, and the downstream frequency selective reflector 1C is disposed near the second corner of the space 46 of the crank. The upstream frequency selective reflector 1A is disposed in a position that receives all or some of the electromagnetic waves from the base station 41. The midstream frequency selective reflector 1B is disposed in a position that receives all or some of the electromagnetic waves from the upstream frequency selective reflector 1A. The downstream frequency selective reflector 1C is disposed in a position that receives all or some of the electromagnetic waves from the midstream frequency selective reflector 1B.

In this case, in each of the frequency selective reflector 1A, 1B, and 1C, the reflected beam profile may be adjusted so that the reflected beam is widened, and the reflected beam profile may be adjusted so that the reflected beam is narrowed.

For example, the reflected beam may be narrowed by the upstream frequency selective reflector 1A, the reflected beam may be narrowed by the midstream frequency selective reflector 1B, and the reflected beam may be widened by the downstream frequency selective reflector 1C. In this case, by narrowing the reflected beam in the middle of the propagation path, unwanted reflection by the electromagnetic wave obstacle 43 can be suppressed, and the electromagnetic waves can be concentrated toward the downstream frequency selective reflector 1C. Thus, the propagation loss can be reduced and the electromagnetic waves can be efficiently delivered.

Described next is an example of arranging the plurality of direction controlling devices such that the propagation path of the electromagnetic waves is branched from the base station as a starting point.

As shown in FIG. 35B, there is an example in which the environment of use is space 47 that is surrounded by the electromagnetic wave obstacle 43, and includes two corners 48 and 49 of which turning directions differ from one another. In this case, there is an example in which the electromagnetic waves from the base station 41 positioned outside the space 47 is delivered from one end of the space 47 to the depth of one corner 48, and to the depth of the other corner 49. For example, when three frequency selective reflectors are used, the upstream side frequency selective reflector 1A is disposed in one end of the space 47, the downstream side frequency selective reflector 1B is disposed near the first corner 48, and one more downstream side frequency selective reflector 1C is disposed near the second corner 49. The upstream side frequency selective reflector 1A is disposed in a position that receives all or some of the electromagnetic waves from the base station 41. The downstream side frequency selective reflector 1B is disposed in a position that receives some of the electromagnetic waves from the upstream side frequency selective reflector 1A. One more downstream side frequency selective reflector 1C is disposed in a position that receives a part of remaining electromagnetic waves from the upstream side frequency selective reflector 1A.

In this case, the reflected beam profile is adjusted by the upstream side frequency selective reflector 1A so that the reflected beam is widened. Also, by the downstream frequency selective reflectors 1B and 1C, the reflected beam profile may be adjusted so that the reflected beam is widened, and the reflected beam profile may be adjusted so that the reflected beam is narrowed.

For example, as shown in FIG. 35B, the reflected beam may be widened by all the frequency selective reflectors 1A, 1B, and 1C.

Also, there is an example in which the environment of use is two spaces surrounded by the electromagnetic wave obstacle. Each space includes a corner, and one space is a L-shaped space. In this case, there is an example in which the electromagnetic waves from one base station positioned outside the two spaces are delivered to the depth of each of the two spaces. For example, when three frequency selective reflectors are used, two frequency selective reflectors are disposed in one space, and one frequency selective reflector is disposed in the other space.

In this case, in one L-shaped space, the upstream side frequency selective reflector is disposed at one end of the L-shaped space, and the downstream side frequency selective reflector is disposed near the corner of the L-shaped space. The upstream side frequency selective reflector is disposed in a position that receives all or some of the electromagnetic waves from the base station. The downstream side frequency selective reflector is disposed in a position that receives all or some of the electromagnetic waves from the upstream side frequency selective reflector. In this case, in the frequency selective reflector in the downstream side, the reflected beam profile may be adjusted so that the reflected beam is widened, and the reflected beam profile may be adjusted so that the reflected beam is narrowed. For example, in one space, the spherical wave may be converted into the plane wave by the upstream side frequency selective reflector, and reflected, and the reflected beam may be widened by the downstream side frequency selective reflector.

Also, in the other space, the frequency selective reflector is disposed near the corner. The frequency selective reflector is disposed in a position that receives all or some of the electromagnetic waves from the base station. In this case, by the frequency selective reflector, the reflected beam profile may be adjusted so that the reflected beam is widened, and the reflected beam profile may be adjusted so that the reflected beam is narrowed.

As described above, by each of the frequency selective reflector, the reflected beam profile may be adjusted so that the reflected beam is widened, and the reflected beam profile may be adjusted so that the reflected beam is narrowed. In the case of widening the reflected beam, coverage holes can be eliminated. In the case of narrowing the reflected beam, the propagation loss can be reduced, and the electromagnetic waves can be concentrated on CPE.

In the frequency selective reflector positioned on the most downstream side, the reflected beam profile may be appropriately adjusted according to the size and shape of the coverage hole. When the reflected beam is widened, since the ceiling and the floor can be the electromagnetic wave obstacle, the reflected beam may not be widened so much in the vertical direction, but may be widened in the horizontal direction. Also, when the reflected beam is widened, and there is a space, which is like steps spreading in the vertical direction, in the coverage hole, the reflected beam may not be widened so much in the horizontal direction, but may be widened in the vertical direction. Also, when there is CPE in the coverage hole, the reflected beam profile may be adjusted so that the electromagnetic waves are concentrated toward the CPE by narrowing the reflected beam.

(2) When frequency selective reflector and transmission direction controlling device are used in combination

As the direction controlling device, when the above described frequency selective reflector and transmission direction controlling device are used in combination, the propagation path of the electromagnetic waves is appropriately designed according to the environment of use.

As the direction controlling device, when the above described frequency selective reflector and transmission direction controlling device are used in combination, the placement of the direction controlling device is appropriately designed according to the purpose of use and the environment of use, as described above.

In the placement of the direction controlling device when only the frequency selective reflector is used as the direction controlling device as described above, some frequency selective reflectors may be replaced by the transmission direction controlling device. In this case, the transmission direction controlling device may be positioned on the path of the electromagnetic waves. Since the transmission direction controlling device transmits electromagnetic waves, it is disposed in a position different from that of the frequency selective reflector.

For example, the transmission direction controlling device can be installed in an opening in a window or wall. In this case, an electromagnetic wave propagation path can be formed through the opening in the window or wall. For example, in FIG. 36A, the transmission direction controlling device 51 is installed in the window and the direction controlling device positioned on the most downstream side is the transmission direction controlling device 51. The transmission direction controlling device 51 can deliver electromagnetic waves to the indoor coverage hole 42.

Also, for example, when there is a constraint in the position where the frequency selective reflector can be installed, the transmission direction controlling device can be used to ensure the propagation path of the electromagnetic waves. For example, the transmission direction controlling device may be disposed in upstream side and the frequency selective reflector may be disposed in downstream side. In this case, the upstream side transmission direction controlling device can bend the direction of travel of the electromagnetic waves towards the downstream side frequency selective reflector.

Also, for example, when there is a constrain in the position where the frequency selective reflector can be installed and the difference between the incident angle and the reflection angle needs to be desired receive area 180°, there is a concern that the reflection direction controlling device may have a significant decrease in reflection efficiency. Thus, in such cases, the transmission direction controlling device may be used. For example, as shown in FIG. 36B, in the upstream side frequency selective reflector 1, the spherical wave from the base station 41 is reflected as the plane wave, and in the downstream side transmission direction controlling device 51, the traveling direction of the electromagnetic waves can be bent.

(3) When frequency selective reflector and another reflective direction controlling device are used in combination

As the direction controlling device, when the above described frequency selective reflector and another reflective direction controlling device are used in combination, the placement of the direction controlling device is appropriately designed in accordance with the purpose of use and the environment of use as described above.

In the placement of the direction controlling device when only the frequency selective reflector is used as the direction controlling device as described above, some frequency selective reflectors may be replaced by another reflective direction controlling device.

Another reflective direction controlling device does not include the function of adjusting the reflected beam profile, and thus when the spherical wave is incident, the reflected beam unintentionally spreads. Thus, it is preferable to arrange the frequency selective reflector in the upstream side with respect to another reflective direction controlling device, and to convert the spherical wave from the base station into the plane wave by the frequency selective reflector positioned in the upstream side.

(4) Others

When emitting electromagnetic waves from the upstream side direction controlling device to the downstream side direction controlling device, it is preferred from the perspective of efficiency that the electromagnetic waves do not spread more than necessary to the size of the downstream side direction controlling device.

Also, if the downstream side direction controlling device receives a part of the electromagnetic waves from the upstream side direction controlling device and emits it to a further downstream area or further downstream side direction controlling device, it is necessary to ensure the strength of signals from the upstream side so that an effect of improving the propagation environment and the propagation area is obtained on the most downstream side. In this case, signal strength can be ensured by, for example, increasing the size of the upstream direction controlling device.

3. Communication relay system

The communication relay system in the present disclosure relays communication between a base station and a user terminal. For the base station and the user terminal, respectively a common base station and a common user terminals are used.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

The present disclosure will be hereinafter explained with reference to Examples.

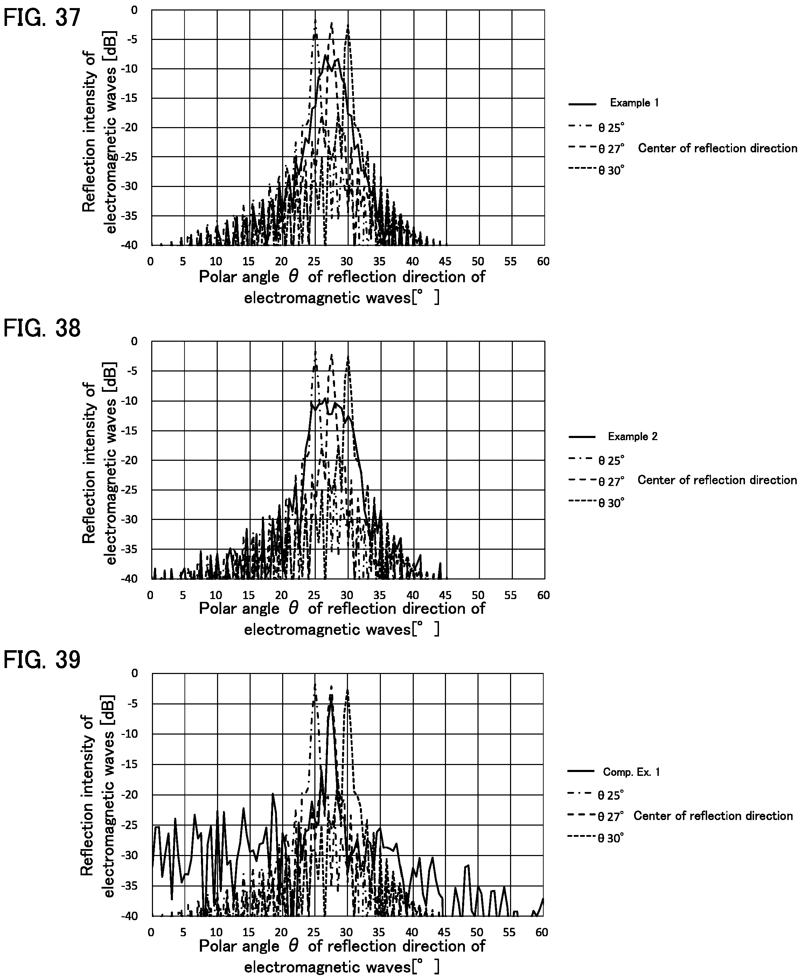

Incidentally, in all Examples 1 to 3, Comparative Example 1, and Reference Example 1, the electromagnetic wave of 28 GHz incident from the direction of the azimuth angle $\varphi = 0°$ and the polar angle $\theta = 0°$ was designed to be reflected to the direction of the azimuth angle $\varphi = 0°$ and the polar angle $\theta = 27°$. Also, the reflected beam profiles shown in FIG. 37 to FIG. 41 are profiles plotting the polar angle $\theta$ when cut out in the plane of the azimuth angle $\varphi = 0°$ in the horizontal axis, and the reflection intensity of the electromagnetic waves on the polar angle direction in the vertical direction.

[Example 1]

Simulation of the reflection properties of the frequency selective reflector was performed. The following model was used in the simulation. In the model, the length of one side was 80 cm. A plurality of reflection elements was arranged. In other words, a plurality of unit structures including a plurality of cell regions, of which reflection phase of the electromagnetic waves differed from one another, was arranged. Each of the cell region was a divided region. Also, in the model, the reflection direction vector of the electromagnetic waves in each of the divided regions was designed so as to obtain an irradiation area of full width at half maximum FWHM = 4.5° around the polar angle $\theta = 27°$. The result of the simulation is shown in FIG. 37.

[Example 2]

Simulation of the reflection properties of the frequency selective reflector was performed. The following model was used in the simulation. In the model, the length of one side was 80 cm. A plurality of reflection elements was arranged. In other words, a plurality of unit structures including a plurality of cell regions, of which reflection phase of the electromagnetic waves differed from one another, was arranged. The model was divided into three divided regions, in which two sub regions were symmetrically arranged to sandwich a main region. Also, in the model, the reflection direction vector of the electromagnetic waves in each of the divided regions was designed so as to obtain an irradiation area of full width at half maximum FWHM = 6.5° around the polar angle $\theta = 27°$. The result of the simulation is shown in FIG. 38.

[Comparative Example 1]

Simulation of the reflection properties of the frequency selective reflector was performed. The following model was used in the simulation. In the model, the length of one side was 80 cm. A plurality of reflection elements was arranged randomly. In other words, a plurality of cell regions, of which reflection phase of the electromagnetic waves differed from one another, was randomly arranged. Each of the cell region was a divided region. Also, in the model, the reflection phase of each cell region was changed with a random number of 60% standard deviation with respect to the design value in the frequency selective reflector reflecting at the polar angle θ = 27°. The result of the simulation is shown in FIG. 39.

[Example 3]

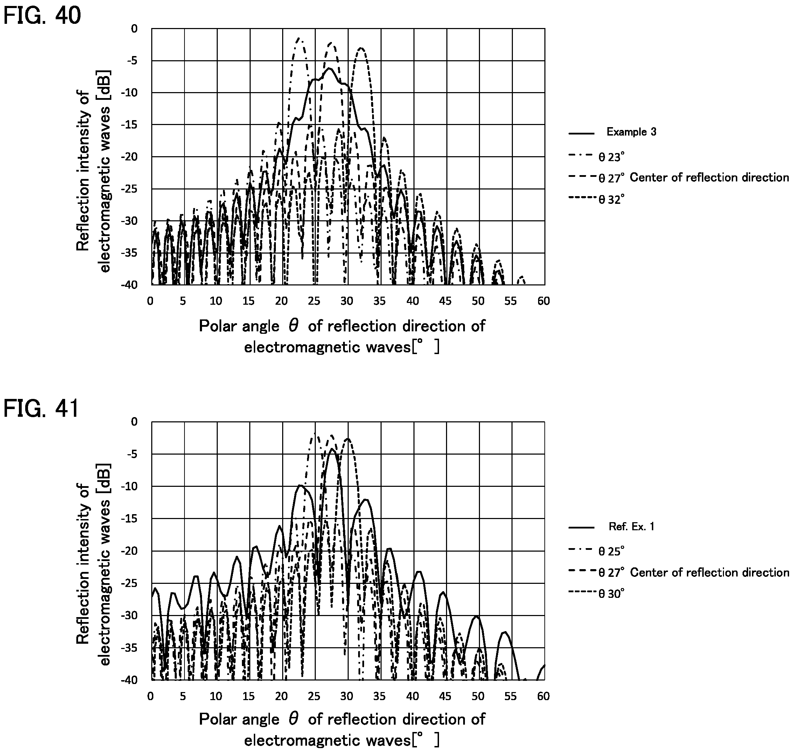

Simulation of the reflection properties of the frequency selective reflector was performed. The following model was used in the simulation. In the model, the length of one side was 30 cm. A plurality of reflection elements was arranged. In other words, a plurality of unit structures including a plurality of cell regions, of which reflection phase of the electromagnetic waves differed from one another, was arranged. Each of the cell region was a divided region. Also, in the model, the reflection direction vector of the electromagnetic waves in each of the divided regions was designed so as to obtain an irradiation area of the full width at half maximum FWHM = 6.5° around the polar angle θ = 27°. The result of the simulation is shown in FIG. 40.

[Reference Example 1]

Simulation of the reflection properties of the frequency selective reflector was performed. The following model was used in the simulation. In the model, the length of one side was 30 cm. A plurality of reflection elements was arranged. In other words, a plurality of unit structures including a plurality of cell regions, of which reflection phase of the electromagnetic waves differed from one another, was arranged. The model was divided into three divided regions, in which two sub regions were symmetrically arranged to sandwich a main region. Also, in the model, the reflection direction vector of the electromagnetic waves in each of the divided regions was designed so as to obtain an irradiation area of the full width at half maximum FWHM = 6.5° around the polar angle θ = 27°. The result of the simulation is shown in FIG. 41. It should be noted that the present example was used as a reference example since the desired reflected beam profile was not obtained.

[Evaluation 1]

It has been confirmed by Examples 1 to 3 that the beam width of the reflected wave by the entire frequency selective reflector can be widened by appropriately arranging a plurality of divided regions of which reflection direction vectors of the electromagnetic waves are delicately different from one another.
It has also been found that when the size of each divided region is large as in Example 2, the reflected beam profile tends to be disturbed and the sidelobe tends to be large, but when the size of each divided region is reduced as in Example 1, and the change of the reflection direction vector of the electromagnetic waves in each divided region is made gentle, a stable and broad main beam is easily obtained. Also, when the size of the frequency selective reflector is small as in Example 3 and Reference Example 1, the main beam tends to be broad, but similar to the case where the size of the frequency selective reflector is large as in Examples 1 and 2, it has been found that the reflected beam profile is easily stabilized by reducing the size of each divided region and making the change of the reflection direction vector of the electromagnetic waves in each divided region gentle as in Example 3. Note that in Reference Example 1, since the frequency selective reflector has a small size and a small number of divided regions, interference has occurred and sharp drops on both sides of polar angle θ = 27°have occurred, and the desired reflected beam profile was not obtained. From these results, it has been shown that it is effective to increase the number of divided regions to more finely separate the divided regions.
Also, in Comparative Example 1, it has been tried to widen the reflected beam by changing the reflection phase of each cell region with a variable of a standard deviation of 60%, but the reflected beam was not widened. This is presumably because it has not been able to form an ordered wavefront.

[Reference Example 2]

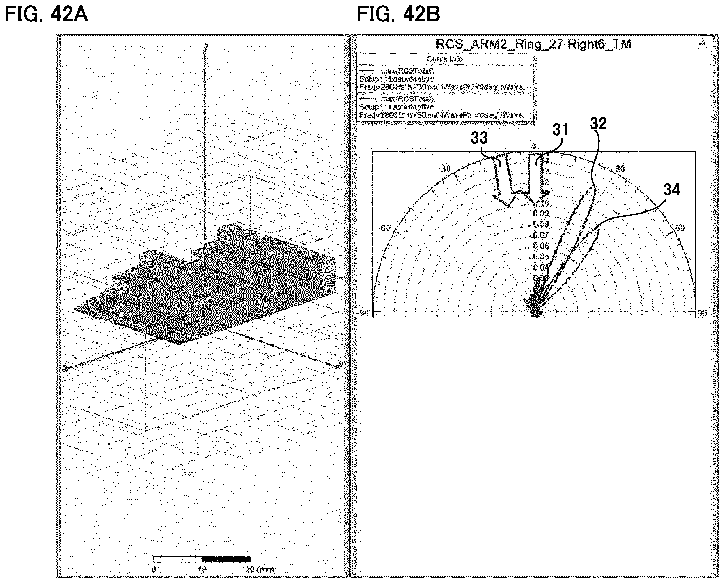

Simulation of the reflection properties of the frequency selective reflector was performed. As the model used in the simulation, as shown in FIG. 42A, the unit structure of the dielectric layer included a thickness distribution in which the thickness increases in one direction, and included six cell regions of which thickness differs from one another, and the dielectric layer was the one in which the unit structure had a periodic structure repeatedly arranged in one direction. Also, in the simulation, the reflecting member was a model in which ring-shaped reflection elements were regularly arranged, resonated at the frequency of the incident wave, and reflected the electromagnetic waves at that frequency. The following parameters were also used in the simulation.

Frequency of the incident wave: 28 GHz
Incident angle of the incident wave: 0°, -10°
Desired reflection angle of the reflected wave: 27°, 37°
Difference in relative reflection phase in neighboring cell regions: 60°

The results of the simulation are shown in FIG. 42B. When the incident angle was 0°, which means the reflection to the incident from the front surface direction 31, was shown in solid line indicated as reference sign 32, and if the incident angle was -10°, which means the reflection to incidence from -10° direction 33, was shown in solid line indicated as reference sign 34. It can be seen that when the incident angle was 0°, it was reflected to the +27° direction from the regular reflection direction, and when the incident angle was -10°, it was reflected to the +37° direction from the regular reflection direction.

[Reference Example 3]

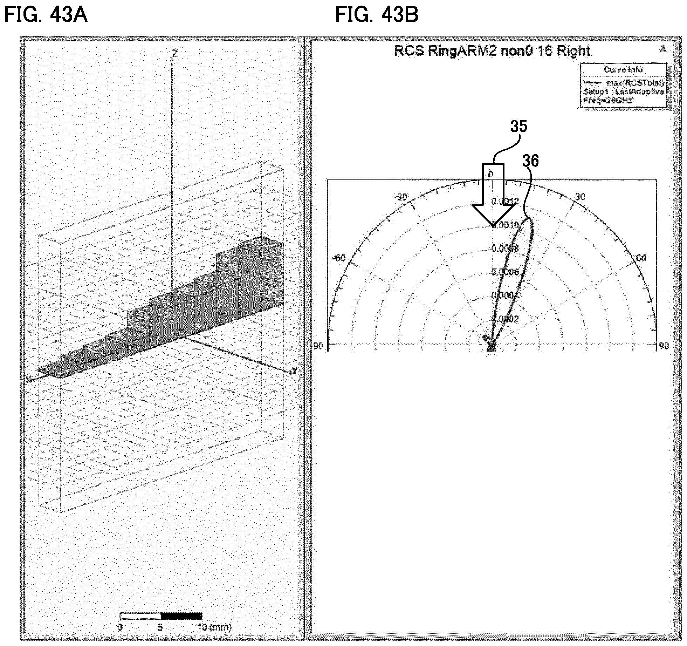

Simulation of the reflection properties of the frequency selective reflector was performed. As the model used in the simulation, as shown in FIG. 43A, the unit structure of the dielectric layer included a thickness distribution in which the thickness increases in one direction, and included ten cell regions of which thickness differs from one another, and the dielectric layer was the one in which the unit structure had a periodic structure repeatedly arranged in one direction. Also, in the simulation, the reflecting member was a model in which ring-shaped reflection elements were regularly arranged, resonated at the frequency of the incident wave, and reflected the electromagnetic waves at that frequency. The following parameters were also used in the simulation.
Frequency of the incident wave: 28 GHz
Incident angle of the incident wave: 0°
Desired reflection angle of the reflected wave: 16° Difference in relative reflection phase in
Neighboring cell regions: 36°

The results of the simulation are shown in FIG. 43B. If the incident angle was 0°, which means the reflection to incidence from the front direction 35, was shown in solid line indicated as reference sign 36. It can be seen that when the incident angle was 0°, it was reflected to +16° direction from the regular reflection direction. Also, the reflection direction of FIG. 43B was closer to the regular reflection direction compared to that of FIG. 42B, but this is because the unit structure of the dielectric layer in FIG. 42A had six cell regions, whereas there were ten cell regions in FIG. 43A, and the length of the unit structure in the predetermined direction of increasing thickness was long.

[Reference Example 4]

First, in accordance with the model of the reflecting member of Reference Example 2, a copper foil-attached PET film was etched to create a reflecting member in which ring-shaped reflection elements are regularly arranged. Also, a dielectric layer was formed by a 3D printer in accordance with the model of the dielectric layer of Reference Example 2. The dielectric layer was then applied on the reflecting member to create a frequency selective reflector.
The reflection properties of the frequency selective reflector were measured using a compact range measurement system and a network analyzer. The reflection properties of the frequency selective reflector of Reference Example 4 substantially matched with the simulation results of Reference Example 2.

[Reference Example 5]

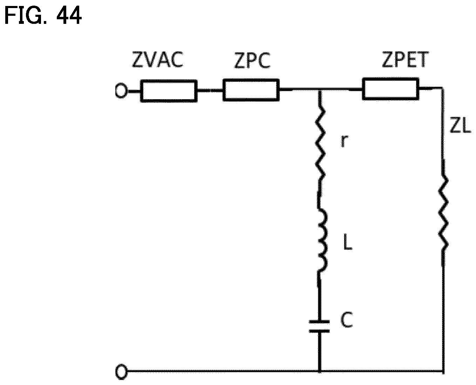

The reflection phase was calculated for a frequency selective reflector with a reflecting member including frequency selective surface (FSS) and a dielectric layer, using a general transmission line equivalent circuit, as shown in FIG. 44, in the analysis of the reflect array. The symbols in FIG. 44 are as follows:

ZVAC: A transmission line with a characteristic impedance of air.

The line length is a length obtained by subtracting the thickness of the dielectric layer from a phase observation surface set at any distance farther than the top surface of the dielectric layer.

ZPC: A transmission line with a characteristic impedance of a dielectric layer.

The line length is the thickness of the dielectric layer h.

r: Resistance of the ring-shaped reflection element of the FSS.

L: The inductance of the ring-shaped reflection element of the FSS.

C: Capacity of the ring-shaped reflection element of the FSS.

ZPET: A transmission line having a dielectric constant of a dielectric substrate on which the ring-shaped reflection element of FSS is arranged.

The line length is the thickness of the dielectric substrate.

ZL: The characteristic impedance of the space on the back surface of the dielectric substrate.

As a result, the reflection phase change due to the resonance frequency shift caused by the superposition of the dielectric layers of different thicknesses in the reflection phase was at most several tens of degrees, which was around 25% of the maximum reflection phase 360°, and other reflection phase changes were calculated to be due to wavelength shortening in the dielectric layer. Further, even if the positions of the reflecting member including the frequency selective surface and the dielectric layer are misaligned, the shift is equalized throughout the frequency selective reflector, so it can be concluded that there is little effect on the reflection direction given because of the reflection phase distribution with the neighboring cell region that is needed to get the reflected wave as a plane wave may be equal.

[Examples 4 to 9]

As shown in FIG. 31 and FIGS. 45 to 49, a frequency selective reflector, in which nine kinds of cell regions, of which reflection phase of electromagnetic waves differs from one another, are repeatedly arranged, was designed by simulation. When the relative reflection phase of the electromagnetic waves in each cell region is set to be over -360° and 0° or less with reference to the reflection phase of the electromagnetic wave in the cell region where the advance of the reflection phase of the electromagnetic wave is the largest in nine kinds of cell regions, the relative reflection phase of the electromagnetic waves in each cell region was set to, for example, 0°, - 40°, - 80°, - 120°, - 160°, - 200°, - 240°, - 280°, and - 320°. In FIGS. 31 and FIGS. 45 to 49, each cell region was indicated by a number of 0, 1, 2, 3, 4, 5, 6, 7, 8 from the order in which the relative reflection phase of electromagnetic waves in each cell region was large.

In Example 4 shown in FIG. 31, the incident wave from a finite distance in the $(\theta, \varphi) \fallingdotseq (28, 0)$ [°] direction was designed to reflect in the $(\theta, \varphi) \fallingdotseq (5, 170)$ [°] direction.

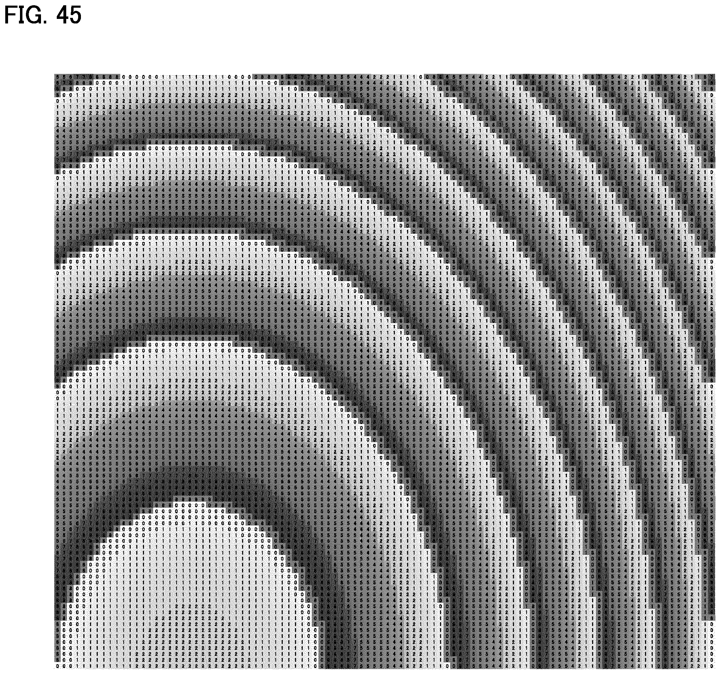

In the example 5 shown in FIG. 45, the incident wave from a finite distance in the $(\theta, \varphi) \fallingdotseq (3, 0)$ [°] direction was designed to be reflect with a spread around the $(\theta, \varphi) \fallingdotseq (7,0)$ [°] direction.

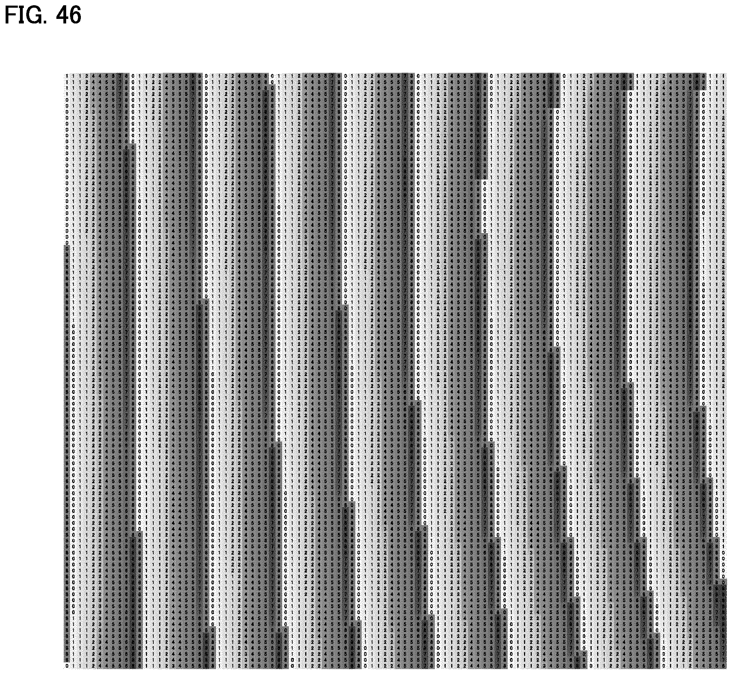

In the Example 6 shown in FIG. 46, the incident wave from a finite distance in the $(\theta, \varphi \fallingdotseq (27, 5)$ [°] direction was designed to reflect with a spread around the $(\theta, \varphi) \fallingdotseq (9, 160)$ [°] direction.

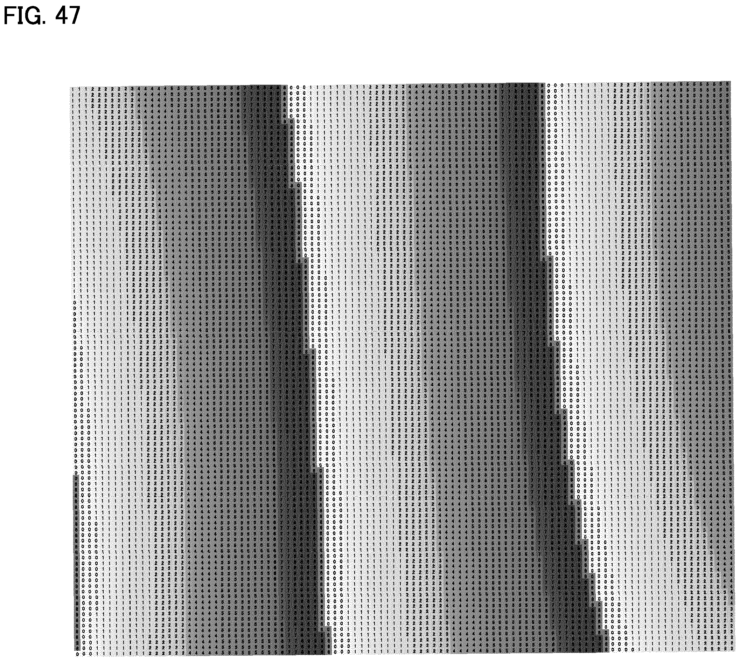

In Example 7 shown in FIG. 47, the incident wave from a finite distance in the $(\theta, \varphi) \fallingdotseq (27, 5)$ [°] direction was designed to reflect with a spread around the $(\theta, \varphi) \fallingdotseq (20, 170)$ [°] direction.

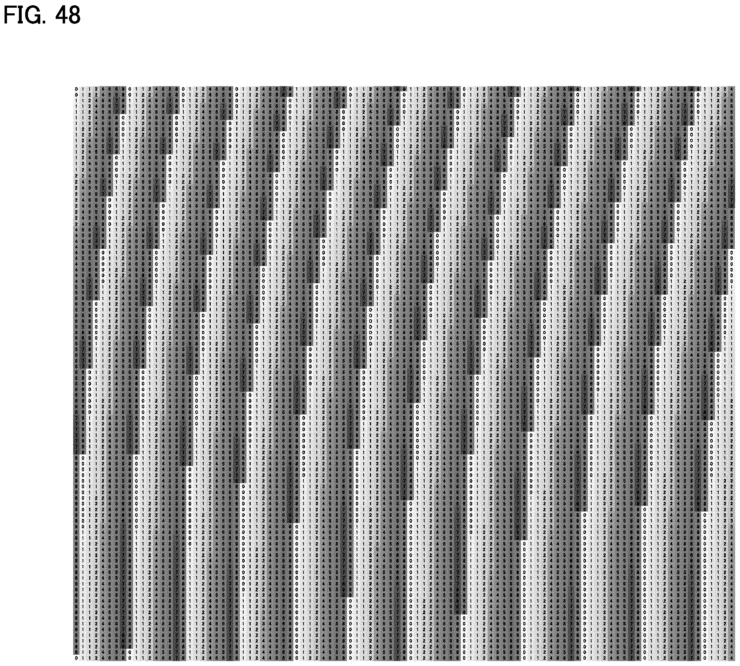

In Example 8 shown in FIG. 48, the incident wave from (x, y, z) = (5, 0, 10) [m] was designed to reflect with the beam width narrowed towards (x, y, z) = (- 2, 0, 20) [m].

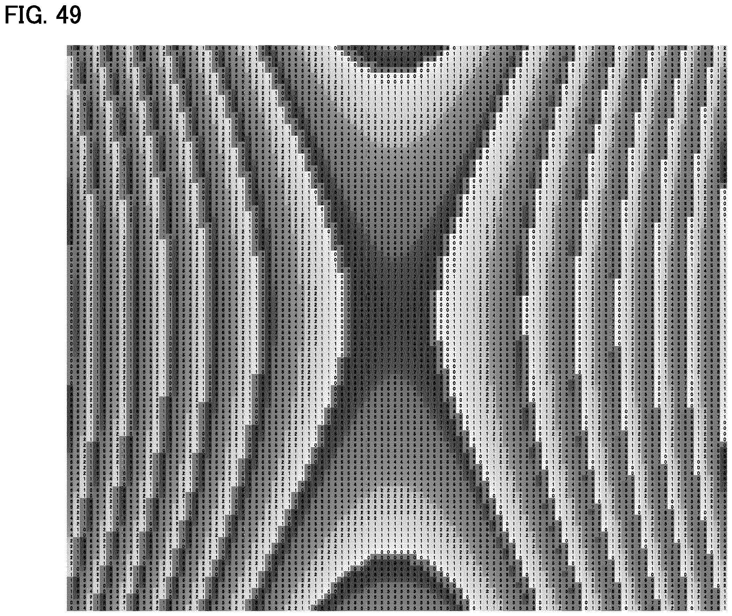

In Example 9 shown in FIG. 49, the incident wave from a finite distance in the $(\theta, \varphi) \fallingdotseq (3, 45)$ [°] direction was designed to be reflected with a large spread in the horizontal direction around the $(\theta, \varphi) \fallingdotseq (0,0)$ [°] direction.

In all of Examples 4 to 9, the boundary part, in which the gradually decreasing relative reflection phase of the electromagnetic waves abruptly increases, was non-branching continuous curved shape.

[Example 10]

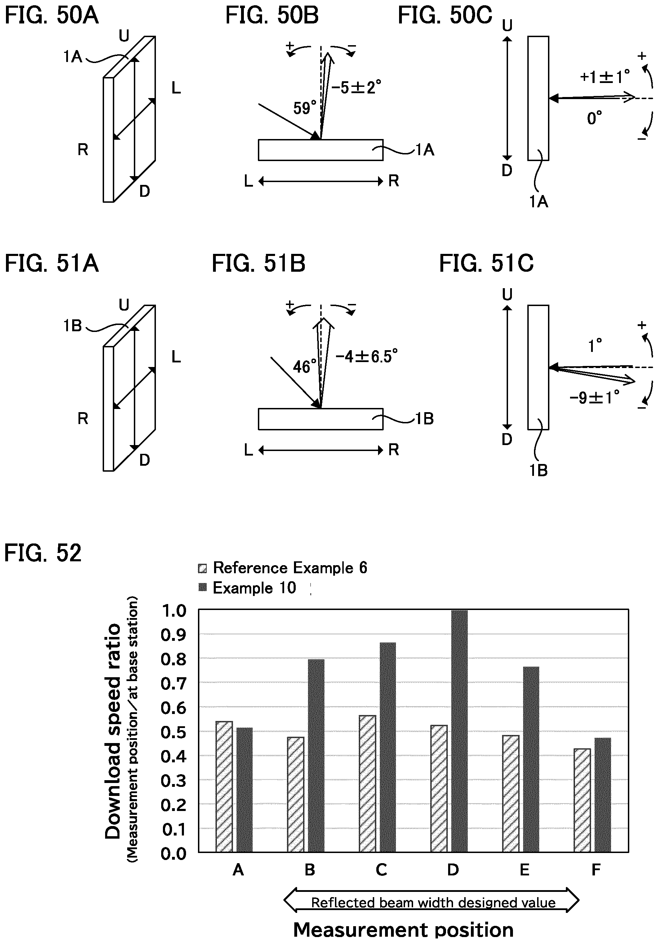

Two kinds of frequency selective reflector reflecting electromagnetic waves in 28 GHz band were prepared. Reflection properties of the frequency selective reflector 1A are shown in FIGS. 50A to 50C. As shown in FIGS. 50B, it was designed as the incident angle: 59° and the reflection angle: -5 ± 2°in the horizontal direction. As shown in FIG. 50C, it was designed as the incident angle: 0° and the reflection angle: +1 ± 1° in the vertical direction. In these manners, the frequency selective reflector 1 was designed such that the reflected beam does not spread too much. Also, reflection properties of the frequency selective reflector of 1B are shown in FIGS. 51A to 51C. As shown in FIG. 51B, it was designed as the incident angle: 46° and the reflection angle: -4 ± 6.5°in the horizontal direction. As shown in FIG. 51C, it was designed as the incident angle: 1° and the reflection angle: -9 ± 1°in the vertical direction. In these manners, the frequency selective reflector 1B was designed such that the reflected beam spreads in ± 6.5° in the horizontal direction. All the frequency selective reflectors were designed to account for the spherical wave. Also, the size of the frequency selective reflector 1A was A0 sheet size, and the size of the frequency selective reflector 1B was A2 sheet size.

Two frequency selective reflectors 1A and 1B were disposed as shown in FIG. 34A. The installation positions and angles of two frequency selective reflectors 1A and 1B were set so that electromagnetic waves from the base station 41 were sequentially reflected by the two frequency selective reflectors 1A and 1B, and the electromagnetic waves reach the coverage hole 42. FIG. 34B is an enlarged view of FIG. 34A. Since the reflected beam from the frequency selective reflector 1B was designed to spread at ± 6.5°, the measurement positions A to F were set across the reflected beam width direction. Note that in FIG. 34B, reference numeral 60 indicates the reflected beam width.

[Reference Example 6]

It was the same as Example 10 except that the frequency selective reflector 1B was not used.

[Evaluation 2]

The communication environment was confirmed by using a local 5G-enabled smart device (FMP181L manufactured by FCNT) and measuring the download speed from the server with a speed check application at each measurement positions A to F. The ratio of the download speed at each measurement positions A to F to the download speed at the base station was determined.

The results are shown in FIG. 52. In Reference Example 6, the download speed at each measurement positions A to F to the download speed at the base station was 0.42 times or more and 0.56 times or less. In contrast, in Example 10, compared to Reference Example 6, the download speed was faster at the measurement positions B to F. Thereby, the improvement of the communication environment was confirmed. Further, in Example 10, the download speed at the measurement position D was almost the same as the speed at the base station.

Also, in Example 10, the improvement of the communication environment by the installation of the frequency selective reflector 1B was not confirmed at the measurement position A that was out of the reflected beam width 60. Also, the improvement effect of the communication environment was small at the measurement position F that was close to the edge of the reflected beam width 60. Thus, it was confirmed that the reflected beam from the frequency selective reflector 1B was reflected with the reflected beam profile almost as designed.

The present disclosure provides the following [1] to [22]:

[1] A frequency selective reflector reflecting electromagnetic waves in a particular frequency band in a direction different from a regular reflection direction, the frequency selective reflector comprising:

a plurality of regions; and
a function of adjusting a reflected beam profile.

[2] The frequency selective reflector according [1], wherein,

an entire surface of the frequency selective reflector is divided into a plurality of divided regions,
the plurality of divided regions includes a main region that is a divided region positioned in a center of the frequency selective reflector, and a plurality of sub regions being divided regions other than the main region,
the plurality of sub regions is disposed around the main region,
reflection direction vectors of the electromagnetic waves in the respective divided regions are different from each other, and
the reflection direction vectors of the electromagnetic waves in the respective sub regions are set so as to spread outward around the reflection direction vector of the electromagnetic waves in the main region.

[3] The frequency selective reflector according [1], wherein

an entire surface of the frequency selective reflector is divided into a plurality of divided regions,
reflection direction vectors of the electromagnetic waves in each of the divided regions are different from each other, and
the reflection direction vectors of the electromagnetic waves in the respective divided regions are set so as to spread outward around a main reflection direction vector of electromagnetic waves derived from a sum of the reflection direction vectors of the electromagnetic waves in the respective divided regions.

[4] The frequency selective reflector according [1], wherein,

an entire surface of the frequency selective reflector is divided into a plurality of divided regions,

the plurality of divided regions includes a main region that is a divided region positioned in a center of the frequency selective reflector, and a plurality of sub regions being divided regions other than the main region, the plurality of sub regions is disposed around the main region, reflection direction vectors of the electromagnetic waves in the respective divided regions are different from each other, and reflection direction vectors of the electromagnetic waves in the respective sub regions are set so as to converge inwardly around the reflection direction vector of the electromagnetic waves in the main region.

[5] The frequency selective reflector according [1], wherein,

an entire surface of the frequency selective reflector is divided into a plurality of divided regions, reflection direction vectors of the electromagnetic waves in each of the divided regions are different from each other, and the reflection direction vector of the electromagnetic waves in the respective divided regions are set so as to converge inwardly around a main reflection direction vector of electromagnetic waves derived from a sum of the reflection direction vectors of the electromagnetic waves in the respective divided regions.

[6] The frequency selective reflector according to any one of [1] to [5], wherein an angle formed by the reflection direction vectors of the electromagnetic waves in divided regions adjacent to each other is within 15°.

[7] The frequency selective reflector according to [2], [4] or [6] wherein, a full width at half maximum of the reflected beam profile is within 40° in a graph in which a horizontal axis represents deviation angle from the reflection direction vector of the electromagnetic waves in the main region and a vertical axis represents reflection intensity of the electromagnetic waves of the frequency selective reflector.

[8] The frequency selective reflector according to [3], [5] or [6] wherein, a full width at half maximum of the reflected beam profile is within 40° in a graph in which a horizontal axis represents deviation angle from a main reflection direction vector of the electromagnetic waves and a vertical axis represents reflection intensity of the electromagnetic waves of the frequency selective reflector.

[9] The frequency selective reflector according to [2] or [3], wherein an area $S_1$ of the frequency selective reflector satisfies formula (1) below:

$$S_1 \geq S_0 * Sr_1/Sr_0 \qquad (1)$$

(in the formula (1), $S_1$ is an area ($m^2$) of the frequency selective reflector, $Sr_1$ is a solid angle of a reflected beam meeting a desired receive area of the electromagnetic waves, $S_0$ is an area ($m^2$) of the frequency selective reflector capable of reflecting the electromagnetic waves of the power required for the receive area when the frequency selective reflector does not include the divided regions, and $Sr_0$ is a solid angle of the reflected beam by the frequency selective reflector whose area is $S_0$ when the frequency selective reflector does not include the divided regions.)

[10] The frequency selective reflector according to any one of [2] to [9], wherein a plurality of unit structures each including a plurality of cell regions is disposed, the plurality of cell regions has reflection phases of the electromagnetic waves that differ from one another, and each of the divided regions includes at least one of the cell regions.

[11] The frequency selective reflector according to any one of [2] to [10], wherein the frequency selective reflector includes:

a reflecting member reflecting the electromagnetic waves, and a dielectric layer that is disposed at an incident side of the electromagnetic waves with respect to the reflecting member, that includes a concave and convex structure in which a plurality of unit structures including a thickness distribution of increasing a thickness in a predetermined direction is arranged, and that transmits the electromagnetic waves, each of the unit structures of the dielectric layer includes a plurality of cell regions having thickness differs from one another, in each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic wave by being transmitted through the dielectric layer again, in the graph, a value of the relative reflection phase of the electromagnetic waves is over -360° and 0° or less, when a point corresponding to a central position in the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line,

the dielectric layer includes, as the unit structure, at least a first unit structure including three or more of the cell region having thicknesses different from one another, and

a reflection direction of the electromagnetic waves is controlled by controlling a relative reflection phase distribution of the electromagnetic waves based on the thickness distribution of the dielectric layer.

[12] The frequency selective reflector according to [11], wherein the reflecting member is a frequency selective reflector reflecting only the electromagnetic waves.

[13] The frequency selective reflector according to [12], wherein the reflecting member includes a reflection phase control function controlling a reflection phase of the electromagnetic waves.

[14] The reflecting structure according to any one of [1] to [10], wherein

the frequency selective reflector includes a reflecting member reflecting the electromagnetic waves, and

the reflecting member includes a reflection phase control function controlling a reflection phase of the electromagnetic waves.

[15] The frequency selective reflector according to [1], that is a frequency selective reflector reflecting electromagnetic waves in a particular frequency band to a direction different from a regular reflection direction, wherein

a plurality of cell regions having reflection phases of the electromagnetic waves different from one another is repeatedly arranged, and

when a relative reflection phase of the electromagnetic waves in each cell region is set to be over -360° and 0° or less with reference to a reflection phase of the electromagnetic waves in the cell region with the largest delay in the reflection phases of the electromagnetic waves, a boundary part, in which a gradually decreasing relative reflection phase of the electromagnetic waves abruptly increases, has a non-branching and continuously curved shape.

[16] The frequency selective reflector according to [15], wherein

the frequency selective reflector includes a reflecting member reflecting the electromagnetic waves, and a dielectric layer that is disposed at an incident side of the electromagnetic waves with respect to the reflecting member, and that transmits the electromagnetic waves,

in the dielectric layer, a plurality of dielectric cell regions having thicknesses different from one another is repeatedly arranged, and

the boundary part is a ridgeline part of the dielectric layer.

[17] The reflecting structure according to [15], wherein

the frequency selective reflector includes a reflecting member reflecting the electromagnetic waves,

in the reflecting member, a plurality of reflection elements having size different from one another is repeatedly arranged, and

the boundary part is a part where a size of the reflection element gradually increasing is abruptly reduced.

[18] A communication relay system relaying communication between a base station and a user terminal, the communication relay system comprising:

a plurality of direction controlling devices changing a traveling direction of electromagnetic waves in a particular frequency band, wherein

the plurality of direction controlling devices is disposed on a propagation path of the electromagnetic waves from the base station, and

one or more of the frequency selective reflectors each of which is frequency selective reflector according to any one of [1] to [17] is included as the direction controlling device.

[19] The communication relay system according to [18], wherein the plurality of direction controlling devices is disposed such that the propagation path of the electromagnetic waves is one path starting from the base station.

[20] The communication relay system according to [18], wherein the plurality of direction controlling devices is disposed such that the communication relay system has the propagation path of the electromagnetic waves, the propagation path starting at the base station and branching.

[21] The communication relay system according to any one of [18] to [20], wherein the direction controlling device positioned most downstream is the frequency selective reflector.

[22] The communication relay system according to any one of [18] to [21], a transmission direction controlling device transmitting the electromagnetic waves is included as the direction controlling device.

Reference Sings List

| | |
|---|---|
| 1, 1A, 1B, 1C | frequency selective reflector |
| 2 | reflecting member |
| 3 | reflection element |
| 4 | dielectric substrate |
| 5 | dielectric layer |
| 6 | adhesive layer |
| 8 | space |
| 10, 10a, 10b | unit structure |
| 11a to 11g, 12a to 12f, 13a to 13e | cell region |
| 41 | base station |
| 42 | coverage hole |
| 51 | transmission direction controlling device |
| $A_0$ | main region |
| $A_{11}$ to $A_{mn}$ | sub region |
| D3 | predetermined direction |
| L | length of unit structure in predetermined direction in which thickness increases |
| t1, t2, t3, t4, t5, t6 | thickness of cell region |

**Claims**

1. A frequency selective reflector reflecting electromagnetic waves in a particular frequency band in a direction different from a regular reflection direction, the frequency selective reflector comprising:

   a plurality of regions; and
   a function of adjusting a reflected beam profile.

2. The frequency selective reflector according to claim 1, wherein

   an entire surface of the frequency selective reflector is divided into a plurality of divided regions,
   the plurality of divided regions includes a main region that is a divided region positioned in a center of the frequency selective reflector, and a plurality of sub regions being divided regions other than the main region,
   the plurality of sub regions is disposed around the main region,
   reflection direction vectors of the electromagnetic waves in the respective divided regions are different from each other, and
   the reflection direction vectors of the electromagnetic waves in the respective sub regions are set so as to spread outward around the reflection direction vector of the electromagnetic waves in the main region.

3. The frequency selective reflector according to claim 1, wherein

   an entire surface of the frequency selective reflector is divided into a plurality of divided regions,
   reflection direction vectors of the electromagnetic waves in the respective divided regions are different from each other, and
   the reflection direction vectors of the electromagnetic waves in the respective divided regions are set so as to spread outward around a main reflection direction vector of electromagnetic waves derived from a sum of the reflection direction vectors of the electromagnetic waves in the respective divided regions.

4. The frequency selective reflector according to claim 1, that is a frequency selective reflector reflecting electromagnetic waves in a particular frequency band in a direction different from a regular reflection direction, wherein

an entire surface of the frequency selective reflector is divided into a plurality of divided regions,
the plurality of divided regions includes a main region that is a divided region positioned in a center of the
frequency selective reflector, and a plurality of sub regions being divided regions other than the main region,
the plurality of sub regions is disposed around the main region,
reflection direction vectors of the electromagnetic waves in the respective divided regions are different from
each other, and
the reflection direction vectors of the electromagnetic waves in the respective sub regions are set so as to
converge inwardly around the reflection direction vector of the electromagnetic waves in the main region.

5. The frequency selective reflector according to claim 1, that is a frequency selective reflector reflecting electromagnetic
waves in a particular frequency band in a direction different from a regular reflection direction, wherein

an entire surface of the frequency selective reflector is divided into a plurality of divided regions,
reflection direction vectors of the electromagnetic waves in the respective divided regions are different from
each other, and
the reflection direction vectors of the electromagnetic waves in the respective divided regions are set so as to
converge inwardly around a main reflection direction vector of electromagnetic waves derived from a sum of
the reflection direction vectors of the electromagnetic waves in the respective divided regions.

6. The frequency selective reflector according to any one of claims 1 to 5, wherein an angle formed by reflection
direction vectors of the electromagnetic waves in divided regions adjacent to each other is within 15°.

7. The frequency selective reflector according to claim 2 or 4, wherein a full width at half maximum of the reflected
beam profile is within 40° in a graph in which a horizontal axis represents deviation angle from the reflection direction
vector of the electromagnetic waves in the main region and a vertical axis represents reflection intensity of the
electromagnetic waves of the frequency selective reflector.

8. The frequency selective reflector according to claim 3 or 5, wherein a full width at half maximum of the reflected
beam profile is within 40° in a graph in which a horizontal axis represents deviation angle from a main reflection
direction vector of the electromagnetic waves and a vertical axis represents reflection intensity of the electromagnetic
waves of the frequency selective reflector.

9. The frequency selective reflector according to claim 2 or 3, wherein an area $S_1$ of the frequency selective reflector
satisfies formula (1) below:

$$S_1 \geq S_0 * Sr_1/Sr_0 \qquad (1)$$

(in the formula (1), $S_1$ is an area ($m^2$) of the frequency selective reflector, $Sr_1$ is a solid angle of a reflected beam
meeting a desired receive area of the electromagnetic waves, $S_0$ is an area ($m^2$) of the frequency selective reflector
capable of reflecting the electromagnetic waves of power required for the receive area when the frequency selective
reflector does not include the divided regions, and $Sr_0$ is a solid angle of the reflected beam by the frequency selective
reflector whose area is $S_0$ when the frequency selective reflector does not include the divided regions.)

10. The frequency selective reflector according to any one of claims 2 to 5, wherein
a plurality of unit structures each including a plurality of cell regions is disposed, the plurality of cell regions has
reflection phases of the electromagnetic waves that differ from one another, and each of the divided regions includes
at least one of the cell regions.

11. The frequency selective reflector according to any one of claims 2 to 5, wherein
the frequency selective reflector includes:

a reflecting member reflecting the electromagnetic waves, and
a dielectric layer that is disposed at an incident side of the electromagnetic waves with respect to the reflecting
member, that includes a concave and convex structure in which a plurality of unit structures including a thickness
distribution of increasing a thickness in a predetermined direction is arranged, and that transmits the electromagnetic waves,

each of the unit structures of the dielectric layer includes a plurality of cell regions having thickness different from one another,

in each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic waves by being transmitted through the dielectric layer again, in the graph, a value of the relative reflection phase of the electromagnetic waves is over -360° and 0° or less, when a point corresponding to a central position in the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line,

the dielectric layer includes, as the unit structure, at least a first unit structure including three or more of the cell regions having thicknesses different from one another, and

a reflection direction of the electromagnetic waves is controlled by controlling a relative reflection phase distribution of the electromagnetic waves based on the thickness distribution of the dielectric layer.

12. The frequency selective reflector according to claim 11, wherein the reflecting member is a frequency selective reflector reflecting only the electromagnetic waves.

13. The frequency selective reflector according to claim 12, wherein the reflecting member includes a reflection phase control function controlling a reflection phase of the electromagnetic waves.

14. The frequency selective reflector according to any one of claims 2 to 5, wherein

the frequency selective reflector includes a reflecting member reflecting the electromagnetic waves, and the reflecting member includes a reflection phase control function controlling a reflection phase of the electromagnetic waves.

15. The frequency selective reflector according claim 1, wherein

a plurality of cell regions having reflection phases of the electromagnetic waves different from one another is repeatedly arranged, and

when a relative reflection phase of the electromagnetic waves in each cell region is set to be over -360° and 0° or less with reference to a reflection phase of the electromagnetic waves in the cell region with the largest delay in the reflection phases of the electromagnetic waves, a boundary part, in which a gradually decreasing relative reflection phase of the electromagnetic waves abruptly increases, has a non-branching and continuously curved shape.

16. The frequency selective reflector according to claim 15, wherein

the frequency selective reflector includes a reflecting member reflecting the electromagnetic waves, and a dielectric layer that is disposed at an incident side of the electromagnetic waves with respect to the reflecting member, and that transmits the electromagnetic waves,

in the dielectric layer, a plurality of dielectric cell regions having thicknesses different from one another is repeatedly arranged, and

the boundary part is a ridgeline part of the dielectric layer.

17. The frequency selective reflector according to claim 15, wherein

the frequency selective reflector includes a reflecting member reflecting the electromagnetic waves,

in the reflecting member, a plurality of reflection elements having size different from one another is repeatedly arranged, and

the boundary part is a part where a size of the reflection element gradually increasing is abruptly reduced.

18. A communication relay system relaying communication between a base station and a user terminal, the communication relay system comprising:

a plurality of direction controlling devices changing a traveling direction of electromagnetic waves in a particular frequency band, wherein

the plurality of direction controlling devices is disposed on a propagation path of the electromagnetic waves from the base station, and

one or more frequency selective reflectors each of which is frequency selective reflector according to any one of claims 1 to 5 or according to claim 15 is included as the direction controlling device.

19. The communication relay system according to claim 18, wherein the plurality of direction controlling devices is disposed such that the propagation path of the electromagnetic waves is one path starting from the base station.

20. The communication relay system according to claim 18, wherein the plurality of direction controlling devices is disposed such that the communication relay system has the propagation path of the electromagnetic waves, the propagation path starting at the base station and branching.

21. The communication relay system according to claim 18, wherein the direction controlling device positioned most downstream is the frequency selective reflector.

22. The communication relay system according to claim 18, wherein a transmission direction controlling device transmitting the electromagnetic waves is included as the direction controlling device.

**Amended claims under Art. 19.1 PCT**

1. A frequency selective reflector reflecting electromagnetic waves in a particular frequency band in a direction different from a regular reflection direction, the frequency selective reflector comprising:

a plurality of regions; and
a function of adjusting a reflected beam profile.

2. The frequency selective reflector according to claim 1, wherein

an entire surface of the frequency selective reflector is divided into a plurality of divided regions,
the plurality of divided regions includes a main region that is a divided region positioned in a center of the frequency selective reflector, and a plurality of sub regions being divided regions other than the main region,
the plurality of sub regions is disposed around the main region,
reflection direction vectors of the electromagnetic waves in the respective divided regions are different from each other, and
the reflection direction vectors of the electromagnetic waves in the respective sub regions are set so as to spread outward around the reflection direction vector of the electromagnetic waves in the main region.

3. The frequency selective reflector according to claim 1, wherein

an entire surface of the frequency selective reflector is divided into a plurality of divided regions,
reflection direction vectors of the electromagnetic waves in the respective divided regions are different from each other, and
the reflection direction vectors of the electromagnetic waves in the respective divided regions are set so as to spread outward around a main reflection direction vector of electromagnetic waves derived from a sum of the reflection direction vectors of the electromagnetic waves in the respective divided regions.

4. The frequency selective reflector according to claim 1, that is a frequency selective reflector reflecting electromagnetic waves in a particular frequency band in a direction different from a regular reflection direction, wherein

an entire surface of the frequency selective reflector is divided into a plurality of divided regions,
the plurality of divided regions includes a main region that is a divided region positioned in a center of the frequency selective reflector, and a plurality of sub regions being divided regions other than the main region,
the plurality of sub regions is disposed around the main region,
reflection direction vectors of the electromagnetic waves in the respective divided regions are different from each other, and

the reflection direction vectors of the electromagnetic waves in the respective sub regions are set so as to converge inwardly around the reflection direction vector of the electromagnetic waves in the main region.

5. The frequency selective reflector according to claim 1, that is a frequency selective reflector reflecting electromagnetic waves in a particular frequency band in a direction different from a regular reflection direction, wherein

an entire surface of the frequency selective reflector is divided into a plurality of divided regions, reflection direction vectors of the electromagnetic waves in the respective divided regions are different from each other, and the reflection direction vectors of the electromagnetic waves in the respective divided regions are set so as to converge inwardly around a main reflection direction vector of electromagnetic waves derived from a sum of the reflection direction vectors of the electromagnetic waves in the respective divided regions.

6. The frequency selective reflector according to any one of claims 1 to 5, wherein an angle formed by reflection direction vectors of the electromagnetic waves in divided regions adjacent to each other is within 15°.

7. The frequency selective reflector according to claim 2 or 4, wherein a full width at half maximum of the reflected beam profile is within 40° in a graph in which a horizontal axis represents deviation angle from the reflection direction vector of the electromagnetic waves in the main region and a vertical axis represents reflection intensity of the electromagnetic waves of the frequency selective reflector.

8. The frequency selective reflector according to claim 3 or 5, wherein a full width at half maximum of the reflected beam profile is within 40° in a graph in which a horizontal axis represents deviation angle from a main reflection direction vector of the electromagnetic waves and a vertical axis represents reflection intensity of the electromagnetic waves of the frequency selective reflector.

9. The frequency selective reflector according to claim 2 or 3, wherein an area $S_1$ of the frequency selective reflector satisfies formula (1) below:

$$S_1 \geq S_0 * Sr_1/Sr_0 \qquad (1)$$

(in the formula (1), $S_1$ is an area (m$^2$) of the frequency selective reflector, $Sr_1$ is a solid angle of a reflected beam meeting a desired receive area of the electromagnetic waves, $S_0$ is an area (m$^2$) of the frequency selective reflector capable of reflecting the electromagnetic waves of power required for the receive area when the frequency selective reflector does not include the divided regions, and $Sr_0$ is a solid angle of the reflected beam by the frequency selective reflector whose area is $S_0$ when the frequency selective reflector does not include the divided regions.)

10. The frequency selective reflector according to any one of claims 2 to 5, wherein a plurality of unit structures each including a plurality of cell regions is disposed, the plurality of cell regions has reflection phases of the electromagnetic waves that differ from one another, and each of the divided regions includes at least one of the cell regions.

11. The frequency selective reflector according to any one of claims 2 to 5, wherein the frequency selective reflector includes:

a reflecting member reflecting the electromagnetic waves, and a dielectric layer that is disposed at an incident side of the electromagnetic waves with respect to the reflecting member, that includes a concave and convex structure in which a plurality of unit structures including a thickness distribution of increasing a thickness in a predetermined direction is arranged, and that transmits the electromagnetic waves, each of the unit structures of the dielectric layer includes a plurality of cell regions having thickness different from one another, in each of the unit structures of the dielectric layer, in a graph setting a horizontal axis as a length of the predetermined direction of the unit structure, and setting a vertical axis as a relative reflection phase when the electromagnetic waves are transmitted through the dielectric layer, reflected by the reflecting member and emitted to the incident side of the electromagnetic waves by being transmitted through the dielectric layer again, in the graph, a value of the relative reflection phase of the electromagnetic waves is over -360° and 0° or less, when a point corresponding to a central position in the predetermined direction in each cell region and corresponding to the relative reflection phase of the electromagnetic waves in each cell region is plotted, and a straight line passing through a point corresponding to a minimum thickness cell region having a minimum thickness is drawn, each point is on a same straight line,
the dielectric layer includes, as the unit structure, at least a first unit structure including three or more of the cell regions having thicknesses different from one another, and
a reflection direction of the electromagnetic waves is controlled by controlling a relative reflection phase distribution of the electromagnetic waves based on the thickness distribution of the dielectric layer.

**12.** The frequency selective reflector according to claim 11, wherein the reflecting member is a frequency selective reflector reflecting only the electromagnetic waves.

**13.** The frequency selective reflector according to claim 12, wherein the reflecting member includes a reflection phase control function controlling a reflection phase of the electromagnetic waves.

**14.** The frequency selective reflector according to any one of claims 2 to 5, wherein

the frequency selective reflector includes a reflecting member reflecting the electromagnetic waves, and
the reflecting member includes a reflection phase control function controlling a reflection phase of the electromagnetic waves.

**15.** The frequency selective reflector according to claim 1, wherein

a plurality of cell regions having reflection phases of the electromagnetic waves different from one another is repeatedly arranged, and
when a relative reflection phase of the electromagnetic waves in each cell region is set to be over -360° and 0° or less with reference to a reflection phase of the electromagnetic waves in the cell region with the largest delay in the reflection phases of the electromagnetic waves, a boundary part, in which a gradually decreasing relative reflection phase of the electromagnetic waves abruptly increases, has a non-branching and continuously curved shape.

**16.** The frequency selective reflector according to claim 15, wherein

the frequency selective reflector includes a reflecting member reflecting the electromagnetic waves, and a dielectric layer that is disposed at an incident side of the electromagnetic waves with respect to the reflecting member, and that transmits the electromagnetic waves,
in the dielectric layer, a plurality of dielectric cell regions having thicknesses different from one another is repeatedly arranged, and
the boundary part is a ridgeline part of the dielectric layer.

**17.** The frequency selective reflector according to claim 15, wherein

the frequency selective reflector includes a reflecting member reflecting the electromagnetic waves,
in the reflecting member, a plurality of reflection elements having size different from one another is repeatedly arranged, and
the boundary part is a part where a size of the reflection element gradually increasing is abruptly reduced.

**18.** A communication relay system relaying communication between a base station and a user terminal, the communication relay system comprising:

a plurality of direction controlling devices changing a traveling direction of electromagnetic waves in a particular frequency band, wherein
the plurality of direction controlling devices is disposed on a propagation path of the electromagnetic waves from the base station, and
one or more frequency selective reflectors each of which is frequency selective reflector according to any one of claims 1 to 5 or according to claim 15 is included as the direction controlling device.

**19.** The communication relay system according to claim 18, wherein the plurality of direction controlling devices is disposed such that the propagation path of the electromagnetic waves is one path starting from the base station.

20. The communication relay system according to claim 18, wherein the plurality of direction controlling devices is disposed such that the communication relay system has the propagation path of the electromagnetic waves, the propagation path starting at the base station and branching.

21. The communication relay system according to claim 18, wherein the direction controlling device positioned most downstream is the frequency selective reflector.

22. The communication relay system according to claim 18, wherein a transmission direction controlling device transmitting the electromagnetic waves is included as the direction controlling device.

23. (New) The communication relay system according to claim 18, wherein at least one reflective direction controlling device reflecting the electromagnetic waves is included as the direction controlling device.

24. (New) The communication relay system according to claim 23, wherein the reflective direction controlling device is a metal plate or a sheet including a conductive layer.

FIG. 1

$A_{12}$

$\underline{1}$

$A_{11}$

$A_{13}$

$A_{21}$

$A_{23}$

$A_{31}$

$A_{33}$

$A_{32}$

$A_0$

FIG. 2

$(\theta, \phi)$

$A_{12}$

$\underline{1}$

$A_{11}$

$A_{13}$

| $(\theta r - \alpha, \phi r + \beta)$ | $(\theta r, \phi r + \beta)$ | $(\theta r + \alpha, \phi r + \beta)$ |

$A_{21}$

$A_{23}$

| $(\theta r - \alpha, \phi r)$ | $(\theta r, \phi r)$ | $(\theta r + \alpha, \phi r)$ |

$A_{31}$

$A_{33}$

| $(\theta r - \alpha, \phi r - \beta)$ | $(\theta r, \phi r - \beta)$ | $(\theta r + \alpha, \phi r - \beta)$ |

y

x

$A_{32}$

$A_0$

**FIG. 3**

$(\theta, \phi)$

$A_{12}$

$\underline{1}$

| $A_{11}$ | | $A_{13}$ |
|---|---|---|
| $(\theta r+\alpha, \phi r-\beta)$ | $(\theta r, \phi r-\beta)$ | $(\theta r-\alpha, \phi r-\beta)$ |
| $A_{21}$ | | $A_{23}$ |
| $(\theta r+\alpha, \phi r)$ | $(\theta r, \phi r)$ | $(\theta r-\alpha, \phi r)$ |
| $A_{31}$ | | $A_{33}$ |
| $(\theta r+\alpha, \phi r+\beta)$ | $(\theta r, \phi r+\beta)$ | $(\theta r-\alpha, \phi r+\beta)$ |

y

x

$A_{32}$

$A_0$

**FIG. 4**

$(\theta, \phi)$

$A_{12}$

$\underline{1}$

| $A_{11}$ | | $A_{13}$ |
|---|---|---|
| $(\theta r+\alpha, \phi r+\beta)$ | $(\theta r+\alpha, \phi r)$ | $(\theta r+\alpha, \phi r-\beta)$ |
| $A_{21}$ | | $A_{23}$ |
| $(\theta r, \phi r+\beta)$ | $(\theta r, \phi r)$ | $(\theta r, \phi r-\beta)$ |
| $A_{31}$ | | $A_{33}$ |
| $(\theta r-\alpha, \phi r+\beta)$ | $(\theta r-\alpha, \phi r)$ | $(\theta r-\alpha, \phi r-\beta)$ |

y

x

$A_{32}$

$A_0$

FIG. 5

$(\theta, \phi)$      $A_{12}$      1

$A_{11}$        $A_{13}$

| $(\theta r-\alpha, \phi r-\beta)$ | $(\theta r-\alpha, \phi r)$ | $(\theta r-\alpha, \phi r+\beta)$ |
|---|---|---|
| $(\theta r, \phi r-\beta)$ | $(\theta r, \phi r)$ | $(\theta r, \phi r+\beta)$ |
| $(\theta r+\alpha, \phi r-\beta)$ | $(\theta r+\alpha, \phi r)$ | $(\theta r+\alpha, \phi r+\beta)$ |

$A_{21}$        $A_{23}$

$A_{31}$        $A_{33}$

$A_{32}$      $A_0$

y

x

FIG. 6

y

dr

$\phi$

$\theta$

1

x

z

FIG. 7

FIG. 8A

FIG. 8B

FIG. 8C

FIG. 9A

FIG. 9B

FIG. 9C

FIG. 9D

FIG. 9E

FIG.9F

FIG. 10

1

| $A_{11}$ | | | |
|---|---|---|---|
| $(\theta r-\alpha, \phi r+\beta)$ | $\cdots$ | $(\theta r, \phi r+\beta)$ | $\cdots$ | $(\theta r+\alpha, \phi r+\beta)$ $A_{1n}$ |

$(\theta r-\alpha, \phi r)$ $\cdots$ $(\theta r, \phi r)$ $\cdots$ $(\theta r+\alpha, \phi r)$

$A_0$

$A_{m1}$ $(\theta r-\alpha, \phi r-\beta)$ $\cdots$ $(\theta r, \phi r-\beta)$ $\cdots$ $(\theta r+\alpha, \phi r-\beta)$ $A_{mn}$

y

x

1

FIG. 11

| $(\theta, \phi)$ | $A_{12}$ | $A_{13}$ | $A_{14}$ | $A_{15}$ $A_0$ | $A_{16}$ | $A_{18}$ | $A_{19}$ | |
|---|---|---|---|---|---|---|---|---|
| $A_{11}$ (21,24) | (22,24) | (23,24) | (24,24) | (25,24) | (26,24) | (27,24) | (28,24) | (29,24) $A_{19}$ |
| $A_{21}$ (21,23) | (22,23) | (23,23) | (24,23) | (25,23) | (26,23) | (27,23) | (28,23) | (29,23) $A_{29}$ |
| $A_{31}$ (21,22) | (22,22) | (23,22) | (24,22) | (25,22) | (26,22) | (27,22) | (28,22) | (29,22) $A_{39}$ |
| $A_{41}$ (21,21) | (22,21) | (23,21) | (24,13) | (25,21) | (26,21) | (27,21) | (28,21) | (29,21) $A_{49}$ |
| $A_{51}$ (21,20) | (22,20) | (23,20) | (24,20) | (25,20) | (26,20) | (27,20) | (28,20) | (29,20) $A_{59}$ |
| $A_{61}$ (21,19) | (22,19) | (23,19) | (24,19) | (25,19) | (26,19) | (27,19) | (28,19) | (29,19) $A_{69}$ |
| $A_{71}$ (21,18) | (22,18) | (23,18) | (24,18) | (25,18) | (26,18) | (27,18) | (28,18) | (29,18) $A_{79}$ |
| $A_{81}$ (21,17) | (22,17) | (23,17) | (24,17) | (25,17) | (26,17) | (27,17) | (28,17) | (29,17) $A_{89}$ |
| $A_{91}$ (21,16) | (22,16) | (23,16) | (24,16) | (25,16) | (26,16) | (27,16) | (28,16) | (29,16) $A_{99}$ |
| y | $A_{92}$ | $A_{93}$ | $A_{94}$ | $A_{95}$ | $A_{96}$ | $A_{97}$ | $A_{98}$ | |

x

FIG. 12A

FIG. 12B

FIG. 13A

Polar angle $\theta$ of reflection direction of electromagnetic waves[° ]

FIG. 13B

Deviation angle from reflection direction vector of electromagnetic waves in main region [° ]

FIG. 14A

FIG. 14B

FIG. 15A

FIG. 15B

FIG. 16A

FIG. 16B

FIG. 16C

Length of unit structure in predetermined direction D3

FIG. 17A

FIG. 17B

FIG. 18A

FIG. 18B

FIG. 18C

FIG. 18D

FIG. 18E

FIG. 18F

FIG. 19A

| 11a | 11b | 11c | 11d | 11a | 11b | 11c | 11d |
|-----|-----|-----|-----|-----|-----|-----|-----|
| 11d | 11a | 11b | 11c | 11d | 11a | 11b | 11c |
| 11c | 11d | 11a | 11b | 11c | 11d | 11a | 11b |
| 11b | 11c | 11d | 11a | 11b | 11c | 11d | 11a |
| 11a | 11b | 11c | 11d | 11a | 11b | 11c | 11d |

D4

D3

FIG. 19B

10

11f
11e
11d
11c

11b
11a

FIG. 19C

11e 11d 11c 11b 11a

10

FIG. 20

FIG. 21A

FIG. 21B

Length of unit structure in
predetermined direction

FIG. 22A

FIG. 22B

Relative reflection
phase (degree)

Length of unit structure in predetermined direction D3

FIG. 22C

Relative reflection phase (degree)

Length of unit structure in
predetermined direction D3

FIG. 23

FIG. 24

FIG. 25A

FIG. 25B

FIG. 26A

FIG. 26B

FIG. 27

FIG. 28A

FIG. 28B

FIG. 29A

$(\theta, \phi)$

$\underline{1}$

$A_1$

y

x

$(\theta r - \alpha, \phi r)$    $(\theta r + \alpha, \phi r)$

$A_2$

100

FIG. 29B

$(\theta, \phi)$

$\underline{1}$

$A_1$

y

x

$(\theta r + \alpha, \phi r)$    $(\theta r - \alpha, \phi r)$

$A_2$

100

FIG. 29C

$(\theta, \phi)$

$\underline{1}$

$A_1$

y

x

$(\theta r, \phi r + \beta)$    $(\theta r, \phi r - \beta)$

$A_2$

100

FIG. 29D

$(\theta, \phi)$

$\underline{1}$

$A_1$

y

x

$(\theta r, \phi r - \beta)$    $(\theta r, \phi r + \beta)$

$A_2$

100

EP 4 395 075 A1

FIG. 30A

FIG. 30B

FIG. 30C

FIG. 31

D3

EP 4 395 075 A1

FIG. 32A

FIG. 32B

FIG. 32C

FIG. 33A

41

43

43

43

42

RA1

P1

FIG. 33B

41

43

43

43

44

RA1

P1

RA2

FIG. 33C

41

43

43

43

RA1

P1

RA2

**FIG. 34A**

**FIG. 34B**

FIG. 35A

FIG. 35B

**FIG. 36A**

**FIG. 36B**

FIG. 37

Example 1
θ 25°
θ 27° Center of reflection direction
θ 30°

FIG. 38

Example 2
θ 25°
θ 27° Center of reflection direction
θ 30°

FIG. 39

Comp. Ex. 1
θ 25°
θ 27° Center of reflection direction
θ 30°

FIG. 40

Example 3

θ 23°

θ 27° Center of reflection direction

θ 32°

FIG. 41

Ref. Ex. 1

θ 25°

θ 27° Center of reflection direction

θ 30°

FIG. 42A    FIG. 42B

RCS_ARM2_Ring_27 Right6_TM

FIG. 43A

FIG. 43B

FIG. 44

FIG. 45

FIG. 46

FIG. 47

FIG. 48

FIG. 49

FIG. 50A

FIG. 50B

FIG. 50C

FIG. 51A

FIG. 51B

FIG. 51C

FIG. 52

☐ Reference Example 6
■ Example 10

Download speed ratio
(Measurement position/at base station)

Reflected beam width designed value

Measurement position

## INTERNATIONAL SEARCH REPORT

| | International application No. |
|---|---|
| | **PCT/JP2022/032456** |

### A. CLASSIFICATION OF SUBJECT MATTER

**H01Q 15/14**(2006.01)i
FI: H01Q15/14 B; H01Q15/14 Z

According to International Patent Classification (IPC) or to both national classification and IPC

### B. FIELDS SEARCHED

Minimum documentation searched (classification system followed by classification symbols)

H01Q15/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 6861907 B1 (MITSUBISHI ELECTRIC CORP) 21 April 2021 (2021-04-21) entire text, all drawings | 1-22 |
| A | EP 3570375 A1 (PARIS SCIENCES ET LETTRES - QUARTIER LATIN) 20 November 2019 (2019-11-20) entire text, all drawings | 1-22 |
| A | WO 2019/039517 A1 (DENSO CORP) 28 February 2019 (2019-02-28) entire text, all drawings | 1-22 |
| A | JP 2017-152850 A (SOKEN INC, DENSO CORP) 31 August 2017 (2017-08-31) entire text, all drawings | 1-22 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/032456**

| Patent document cited in search report | | | Publication date (day/month/year) | Patent family member(s) | | | Publication date (day/month/year) |
|---|---|---|---|---|---|---|---|
| JP | 6861907 | B1 | 21 April 2021 | WO | 2021/171499 | A1 | |
| EP | 3570375 | A1 | 20 November 2019 | US | 2021/0203077 | A1 | |
| | | | | WO | 2019/219708 | A1 | |
| WO | 2019/039517 | A1 | 28 February 2019 | JP | 2019-039766 | A | |
| | | | | US | 2020/0191904 | A1 | |
| JP | 2017-152850 | A | 31 August 2017 | CN | 108886198 | A | |
| | | | | US | 2019/0051977 | A1 | |
| | | | | WO | 2017/146164 | A1 | |

Form PCT/ISA/210 (patent family annex) (January 2015)

**EP 4 395 075 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5371633 B

- JP 5162677 B

### Non-patent literature cited in the description

- Received Power Improvement in NLoS Region of L-Shaped Corridor by Utilizing Meta-Surface Reflector. **MAYUMI YOSHINO.** IEICE Technical Report, AP2020-5. THE INSTITUTE OF ELECTRONICS, INFORMATION AND COMMUNICATION ENGINEERS, April 2020